# EUROPEAN PATENT SPECIFICATION

(11) **EP 3 622 347 B1**
(45) Date of publication and mention of the grant of the patent: **25.11.2026**
(21) Application number: 18798637.7
(22) Date of filing: 04.05.2018
(51) Int. Cl.: G02F 1/1335, G02B 6/00, F21V 8/00, G02B 30/25, G02F 1/13363

(54) **OPTICAL STACK FOR IMAGING DIRECTIONAL BACKLIGHTS**
OPTISCHER STAPEL ZUR BILDGEBUNG GERICHTETER HINTERGRUNDBELEUCHTUNGEN
EMPILEMENT OPTIQUE POUR IMAGERIE DE RÉTROÉCLAIRAGES DIRECTIONNELS

(30) Priority: 08.05.2017 US 201762502939 P; 15.09.2017 US 201762559187 P; 29.09.2017 US 201762565836 P; 06.11.2017 US 201762582052 P; 29.11.2017 US 201762592085 P
(43) Date of publication of application: 18.03.2020
(73) Proprietor: RealD Spark, LLC, Boulder, Colorado 80301 (US)
(72) Inventor: ROBINSON, Michael, G., Beverly Hills, CA 90210 (US); WOODGATE, Graham, J., Beverly Hills, CA 90210 (US); HARROLD, Jonathan, Beverly Hills, CA 90210 (US); RAMSEY, Robert, A., Beverly Hills, CA 90210 (US)
(74) Representative: J A Kemp LLP
(86) International application number: PCT/US2018/031206
(87) International publication number: WO 2018/208618

(56) References cited:
- CN-A- 117 055 151
- CN-A- 117 059 631
- US-A1- 2002 171 793
- US-A1- 2002 171 793
- US-A1- 2007 285 775
- US-A1- 2008 129 899
- US-A1- 2013 308 339
- US-A1- 2014 240 828
- US-A1- 2014 240 828
- US-A1- 2015 268 479
- US-A1- 2015 378 085
- US-B2- 8 154 686

## Description

This invention relates to display devices.

Spatially multiplexed autostereoscopic displays typically align a parallax component such as a lenticular screen or parallax barrier with an array of images arranged as at least first and second sets of pixels on a spatial light modulator, for example an LCD. The parallax component directs light from each of the sets of pixels into different respective directions to provide first and second viewing windows in front of the display. An observer with an eye placed in the first viewing window can see a first image with light from the first set of pixels; and with an eye placed in the second viewing window can see a second image, with light from the second set of pixels.

Such displays have reduced spatial resolution compared to the native resolution of the spatial light modulator and further, the structure of the viewing windows is determined by the pixel aperture shape and parallax component imaging function. Gaps between the pixels, for example for electrodes, typically produce non-uniform viewing windows. Undesirably such displays exhibit image flicker as an observer moves laterally with respect to the display and so limit the viewing freedom of the display. Such flicker can be reduced by defocusing the optical elements; however such defocusing results in increased levels of image cross talk and increases visual strain for an observer. Such flicker can be reduced by adjusting the shape of the pixel aperture, however such changes can reduce display brightness and can compromise addressing electronics in the spatial light modulator.

A directional illumination apparatus may include an imaging directional backlight for directing light, an illuminator array for providing light to the imaging directional backlight. The imaging directional backlight may include a waveguide for guiding light. The waveguide may include a first light guiding surface and a second light guiding surface, opposite the first light guiding surface.

Display backlights in general employ waveguides and edge emitting sources. Certain imaging directional backlights have the additional capability of directing the illumination through a display panel into viewing windows. An imaging system may be formed between multiple sources and the respective window images. One example of an imaging directional backlight is an optical valve that may employ a folded optical system and hence may also be an example of a folded imaging directional backlight. Light may propagate substantially without loss in one direction through the optical valve while counterpropagating light may be extracted by reflection off tilted facets as described in US-9519153B2.

A display to provide a weak privacy effect using a switchable ECB liquid crystal cell is described in Gass et al., "Privacy LCD Technology for Cellular Phones", Sharp Technical Journal, No. 27, 2007.

US-2014/0240828A1 discloses a display device comprising: a transmissive spatial light modulator; a backlight arranged to output light comprising a plurality of light sources and a waveguide disposed behind the transmissive spatial light modulator, the waveguide comprising an input end extending in a lateral direction along a side of the waveguide, wherein the light sources are disposed along the input end of the waveguide and arranged to input input light into the waveguide, and the waveguide further comprising opposed first and second guide surfaces extending across the waveguide from the input end for guiding light input at the input end along the waveguide, the waveguide being arranged to extract input light guided through the waveguide to exit through the first guide surface to provide a viewing window. The display device also includes an arrangement providing polarisation recovering including a prismatic reflective film arranged behind an input polariser arranged on the input side of the spatial light modulator between the backlight and the spatial light modulator; an output polariser arranged on the output side of the spatial light modulator; a reflective polariser arranged on the input side of the input polariser between the input polariser and the backlight or on the output side of the output polariser; and a half wave retarder arranged between the reflective polariser and the input polariser.

US2013/308339A1 discloses a display device comprising two waveguides and producing two viewing windows.

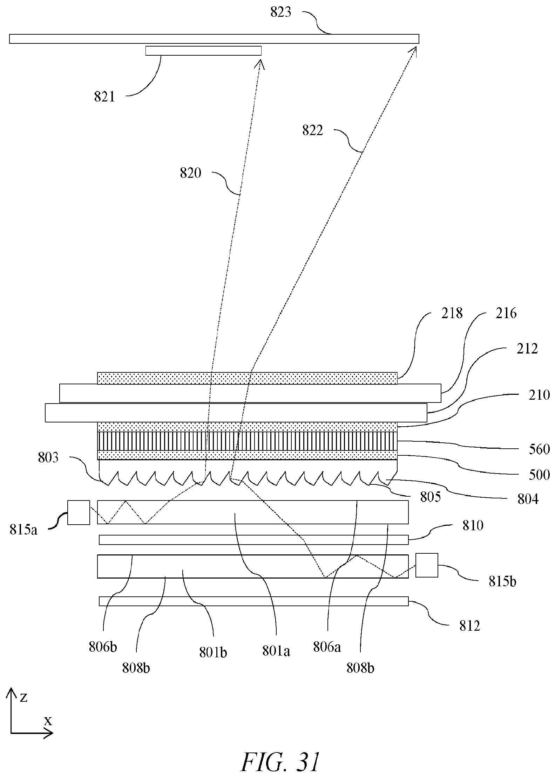

According to the present invention, there is provided a display device as set out in claim 1. Only the embodiment relating to figure 31 is according to the claims. The other examples/aspects/embodiments are not according to the claims and are present for illustration purposes only.

Embodiments herein may provide an autostereoscopic display that provides wide angle viewing which may allow for directional viewing and conventional 2D compatibility. The wide angle viewing mode may be for observer tracked autostereoscopic 3D display, observer tracked 2D display (for example for privacy or power saving applications), for wide viewing angle 2D display or for wide viewing angle stereoscopic 3D display. Further, embodiments may provide a controlled illuminator for the purposes of an efficient autostereoscopic display. Such components can be used in directional backlights, to provide directional displays including autostereoscopic displays. Additionally, embodiments may relate to a directional backlight apparatus and a directional display which may incorporate the directional backlight apparatus. Such an apparatus may be used for autostereoscopic displays, privacy displays, multi-user displays and other directional display applications that may achieve for example power savings operation and/or high luminance operation.

Embodiments herein may provide an autostereoscopic display with large area and thin structure. Further, as will be described, the optical valves of the present disclosure may achieve thin optical components with large back working distances. Such components can be used in directional backlights, to provide directional displays including autostereoscopic displays. Further, embodiments may provide a controlled illuminator for the purposes of an efficient autostereoscopic display.

Embodiments of the present disclosure may be used in a variety of optical systems. The embodiment may include or work with a variety of projectors, projection systems, optical components, displays, microdisplays, computer systems, processors, self-contained projector systems, visual and/or audiovisual systems and electrical and/or optical devices. Aspects of the present disclosure may be used with practically any apparatus related to optical and electrical devices, optical systems, presentation systems or any apparatus that may contain any type of optical system. Accordingly, embodiments of the present disclosure may be employed in optical systems, devices used in visual and/or optical presentations, visual peripherals and so on and in a number of computing environments.

Directional backlights offer control over the illumination emanating from substantially the entire output surface controlled typically through modulation of independent LED light sources arranged at the input aperture side of an optical waveguide. Controlling the emitted light directional distribution can achieve single person viewing for a security function, where the display can only be seen by a single viewer from a limited range of angles; high electrical efficiency, where illumination is primarily provided over a small angular directional distribution; alternating left and right eye viewing for time sequential stereoscopic and autostereoscopic display; and low cost.

These and other advantages and features of the present disclosure will become apparent to those of ordinary skill in the art upon reading this disclosure in its entirety.

Examples are illustrated by way of example in the accompanying drawings, wherein FIGURE 31 illustrates an embodiment of the present invention and the other drawings illustrate examples that do not include all the features of the claims but are useful for understanding. In the drawings, like reference numbers indicate similar parts. In the drawings:
**FIGURE 1A** is a schematic diagram illustrating a front view of light propagation in one example of a directional display device;
**FIGURE 1B** is a schematic diagram illustrating a side view of light propagation in one example of the directional display device of FIGURE 1A;
**FIGURE 2A** is a schematic diagram illustrating in a top view of light propagation in another example of a directional display device;
**FIGURE 2B** is a schematic diagram illustrating light propagation in a front view of the directional display device of FIGURE 2A;
**FIGURE 2C** is a schematic diagram illustrating light propagation in a side view of the directional display device of FIGURE 2A;
**FIGURE 3** **is** a schematic diagram illustrating in a side view of a directional display device;
**FIGURE 4A** is schematic diagram illustrating in a front view, generation of a viewing window in a directional display device including curved light extraction features;
**FIGURE 4B** is a schematic diagram illustrating in a front view, generation of a first and a second viewing window in a directional display device including curved light extraction features;
**FIGURE 5** is a schematic diagram illustrating generation of a first viewing window in a directional display device including linear light extraction features;
**FIGURE 6A** is a schematic diagram illustrating one example of the generation of a first viewing window in a time multiplexed directional display device in a first time slot;
**FIGURE 6B** is a schematic diagram illustrating another example of the generation of a second viewing window in a time multiplexed directional display device in a second time slot;
**FIGURE 6C** is a schematic diagram illustrating another example of the generation of a first and a second viewing window in a time multiplexed directional display device;
**FIGURE 7** is a schematic diagram illustrating an observer tracking autostereoscopic directional display device;
**FIGURE 8** is a schematic diagram illustrating a multi-viewer directional display device;
**FIGURE 9** is a schematic diagram illustrating a privacy directional display device;
**FIGURE 10** is a schematic diagram illustrating in side view, the structure of a time multiplexed directional display device;
**FIGURE 11** is a schematic diagram illustrating a directional display apparatus comprising a directional display device and a control system;
**FIGURE 12A** is a schematic diagram illustrating a perspective view of a directional display apparatus optical stack comprising a directional waveguide with light input at a side that is opposite a reflective side;
**FIGURE 12B** is a schematic diagram illustrating a perspective view of the formation of optical windows by a directional display apparatus comprising a directional waveguide with light input at a side that is opposite a reflective side;
**FIGURE 12C** is a schematic diagram illustrating a perspective view of a directional display apparatus optical stack comprising a directional waveguide with light input at a side that is adjacent a reflective side;
**FIGURE 12D** is a schematic diagram illustrating a perspective view of the formation of optical windows by a directional display apparatus comprising a directional waveguide with light input at a side that is adjacent a reflective side;
**FIGURE 13** is a key illustrating orientation of polarizer electric vectors, retarder slow axes, and polarization states for other figures in the present disclosure;
**FIGURE 14A** is a schematic luminance field-of-view graph illustrating variation in luminance of a wide angle mode of operation of a directional display;
**FIGURE 14B** is a schematic graph illustrating variation of luminance with viewing angle of a wide angle mode of operation of a directional display;
**FIGURE 14C** is a schematic diagram illustrating variation of display luminance with viewing angle of a wide angle mode of operation of a directional display;
**FIGURE 15A** is a schematic luminance field-of-view graph illustrating variation in luminance of a privacy mode of operation of a directional display;
**FIGURE 15B** is a schematic graph illustrating variation of luminance with viewing angle of a privacy mode of operation of a directional display;
**FIGURE 15C** is a schematic diagram illustrating variation of display luminance with viewing angle of a privacy mode of operation of a directional display;
**FIGURE 16A** is a schematic diagram illustrating in side view a directional display comprising a directional waveguide and crossed A-plates arranged between a spatial light modulator and a directional backlight;
**FIGURE 16B** is a schematic diagram illustrating in perspective front view orientation of retarder and polariser axes for the optical stack of a directional display comprising a directional waveguide and crossed A-plates;
**FIGURE 17A** is a schematic luminance field-of-view graph illustrating variation in luminance of the optical stack of FIGURE 16B in a privacy mode of operation;
**FIGURE 17B** is a schematic graph illustrating variation of luminance with viewing angle of a privacy mode of operation of a directional display;
**FIGURE 17C** is a schematic diagram illustrating the variation of display luminance with viewing angle of a privacy mode of operation of a directional display comprising the optical stack of FIGURE 16B;
**FIGURE 18A** is a schematic luminance field-of-view graph illustrating variation in luminance of the optical stack of FIGURE 16B in a wide angle mode of operation;
**FIGURE 18B** is a schematic graph illustrating variation of luminance with viewing angle of a wide angle mode of operation of a directional display;
**FIGURE 18C** is a schematic diagram illustrating the variation of display luminance with viewing angle of a wide angle mode of operation of a directional display comprising the optical stack of FIGURE 16B;
**FIGURE 19A** is a schematic diagram illustrating in perspective view illumination of a retarder layer by off-axis light;
**FIGURE 19B** is a schematic diagram illustrating in perspective view illumination of a retarder layer by off-axis light of a first linear polarization state at 0 degrees;
**FIGURE 19C** is a schematic diagram illustrating in perspective view illumination of a retarder layer by off-axis light of a first linear polarization state at 90 degrees;
**FIGURE 19D** is a schematic diagram illustrating in perspective view illumination of a retarder layer by off-axis light of a first linear polarization state at 45 degrees;
**FIGURE 19E** is a schematic diagram illustrating in perspective front view a Poincare sphere representation of on-axis polarisation control for crossed A-plate retarders;
**FIGURE 19F** is a schematic diagram illustrating in perspective front view orientation of retarder axes for achromatic A-plate retarders comprising composite retarders for use in the optical stack of FIGURE 16B;
**FIGURE 19G** is a schematic diagram illustrating in perspective front view a Poincare sphere representation of on-axis polarisation control for the first composite A-plate retarder pair of FIGURE 19E;
**FIGURE 19H** is a schematic diagram illustrating in perspective front view a Poincare sphere representation of on-axis polarisation control for the second composite A-plate retarder pair of FIGURE 19E;
**FIGURE 20A** is a schematic diagram illustrating in perspective view illumination of crossed A-plate retarder layers by off-axis polarised light with a positive elevation;
**FIGURE 20B** is a schematic diagram illustrating in perspective view illumination of crossed A-plate retarder layers by off-axis polarised light with a negative lateral angle;
**FIGURE 20C** is a schematic diagram illustrating in perspective view illumination of crossed A-plate retarder layers by off-axis polarised light with a positive elevation and negative lateral angle;
**FIGURE 20D** is a schematic diagram illustrating in perspective view illumination of crossed A-plate retarder layers by off-axis polarised light with a positive elevation and positive lateral angle;
**FIGURE 21A** is a schematic luminance field-of-view graph illustrating variation in transmitted luminance of the optical stack of FIGURE 16B wherein the retarder layers are quarter waveplates;
**FIGURE 21B** is a schematic luminance field-of-view graph illustrating variation in transmitted luminance of the optical stack of FIGURE 16B wherein the retarder layers are half waveplates;
**FIGURE 21C** is a schematic diagram illustrating in perspective front view orientation of retarder and polariser axes for an optical stack of a directional display comprising additional and input polarisers arranged at +/- 45 degrees and crossed A-plates;
**FIGURE 21D** is a schematic luminance field-of-view graph illustrating variation in transmitted luminance of the optical stack of FIGURE 21C wherein the retarder layers are quarter waveplates;
**FIGURE 22A, FIGURE 22B****,** **FIGURE 22C,** and **FIGURE 22D** are schematic diagrams illustrating in side views optical stacks comprising crossed A-plates;
**FIGURE 23A** is a schematic diagram illustrating in side view a directional display comprising a directional waveguide and crossed A-plates arranged on the front of a spatial light modulator;
**FIGURE 23B** is a schematic diagram illustrating in perspective front view orientation of retarder and polariser axes for the optical stack of FIGURE 23A;
**FIGURE 24A** is a schematic diagram illustrating in side view a directional display comprising a directional waveguide and C-plate arranged between a spatial light modulator and a directional backlight;
**FIGURE 24B** is a schematic diagram illustrating in perspective front view orientation of retarder and polariser axes for the optical stack of FIGURE 24A;
**FIGURE 25A** is a schematic diagram illustrating in side view a directional display comprising a directional waveguide and a C-plate arranged on the front of a spatial light modulator;
**FIGURE 25B** is a schematic diagram illustrating in perspective front view orientation of retarder and polariser axes for the optical stack of FIGURE 25A;
**FIGURE 26A** is a schematic diagram illustrating in perspective view illumination of a C-plate layer by off-axis polarised light with a positive elevation;
**FIGURE 26B** is a schematic diagram illustrating in perspective view illumination of a C-plate layer by off-axis polarised light with a negative lateral angle;
**FIGURE 26C** is a schematic diagram illustrating in perspective view illumination of a C-plate layer by off-axis polarised light with a positive elevation and negative lateral angle;
**FIGURE 26D** is a schematic diagram illustrating in perspective view illumination of a C-plate layer by off-axis polarised light with a positive elevation and positive lateral angle;
**FIGURE 27A** is a schematic luminance field-of-view graph illustrating variation in transmitted luminance of the optical stack of FIGURE 24B wherein the retarder layers are half waveplates;
**FIGURE 27B** is a schematic luminance field-of-view graph illustrating variation in transmitted luminance of the optical stack of FIGURE 24B wherein the retarder layers are full waveplates;
**FIGURE 28A** is a schematic luminance field-of-view graph illustrating variation in transmitted luminance of the optical stack of FIGURE 24B comprising high retardance layers;
**FIGURE 28B** and **FIGURE 28C** are schematic luminance field-of-view graphs illustrating variation in chromatic coordinates of the optical stack of FIGURE 24B comprising high retardance layers;
**FIGURE 29A** is a schematic diagram illustrating in perspective view illumination of a C-plate layer and crossed A-plate layers by off-axis polarised light with a positive elevation;
**FIGURE 29B** is a schematic diagram illustrating in perspective front view orientation of retarder and polariser axes for the optical stack of FIGURE 29A;
**FIGURE 30A** is a schematic luminance field-of-view graph illustrating variation in transmitted luminance of the optical stack of FIGURE 29B comprising high retardance layers;
**FIGURE 30B** and **FIGURE 30C** are schematic luminance field-of-view graphs illustrating variation in chromatic coordinates of the optical stack of FIGURE 29B comprising high retardance layers;
**FIGURE 31** is a schematic diagram illustrating in side view a directional display comprising a first directional waveguide, a second wide angle waveguide and a C-plate arranged on the rear of a spatial light modulator;
**FIGURE 32A** is a schematic diagram illustrating in top view an automotive cabin and illumination of a driver from a centrally mounted display;
**FIGURE 32B** is a schematic diagram illustrating in side view an automotive cabin and illumination of a driver from a centrally mounted display;
**FIGURE 32C** is a schematic luminance field-of-view graph illustrating luminance of display and windscreen reflection in an automotive;
**FIGURE 33A** is a schematic diagram illustrating in perspective view illumination of an O-plate layer by off-axis polarised light with a positive elevation;
**FIGURE 33B** is a schematic luminance field-of-view graph illustrating variation in transmitted luminance of the O-plate arranged between parallel polarisers of FIGURE 33A;
**FIGURE 33C** is a schematic luminance field-of-view graph illustrating variation in transmitted luminance of a wide angle display further comprising the O-plate arranged between parallel polarisers of FIGURE 33A;
**FIGURE 33D** is a schematic graph illustrating variation of luminance with viewing angle of a wide angle display further comprising the O-plate arranged between parallel polarisers of FIGURE 33A;
**FIGURE 34** is a schematic diagram illustrating in side view a directional display comprising a directional waveguide and an O-plate arranged between a spatial light modulator and a directional backlight;
**FIGURE 35** is a schematic diagram illustrating in perspective front view orientation of some of the retarder and polariser axes for the optical stack of FIGURE 34;
**FIGURE 36A** is a schematic diagram illustrating in perspective side view orientation of some of the retarder and polariser axes for the optical stack of FIGURE 34;
**FIGURE 36B** is a schematic diagram illustrating in perspective side view orientation of birefringent molecules in the arrangement of FIGURE 36A;
**FIGURE 36C** is a schematic luminance field-of-view graph illustrating variation in transmitted luminance of the optical stack of FIGURE 34;
**FIGURE 36D** is a schematic graph illustrating variation of luminance with viewing angle of a privacy mode of operation of a directional display comprising an O-plate;
**FIGURE 36E** is a schematic luminance field-of-view graph illustrating variation in transmitted luminance of an O-plate;
**FIGURE 36F** is a schematic luminance field-of-view graph illustrating variation in transmitted luminance of a directional backlight;
**FIGURE 36G** is a schematic luminance field-of-view graph illustrating variation in transmitted luminance of a directional backlight of FIGURE 34 in angular regions of privacy viewing;
**FIGURE 36H** is a schematic luminance field-of-view graph illustrating variation in transmitted luminance of the optical stack of FIGURE 34 in angular regions of privacy viewing;
**FIGURE 37A** is a schematic diagram illustrating in perspective side view orientation of some of the retarder and polariser axes for the optical stack of FIGURE 34 wherein the birefringent molecules are arranged to provide control of luminance in a single viewing quadrant;
**FIGURE 37B** is a schematic diagram illustrating in perspective side view orientation of birefringent molecules in the arrangement of FIGURE 37A;
**FIGURE 37C** is a schematic luminance field-of-view graph illustrating variation in transmitted luminance of the optical stack of FIGURE 37A;
**FIGURE 37D** is a schematic luminance field-of-view graph illustrating variation in transmitted luminance of the optical stack of FIGURE 37A;
**FIGURE 38A** is a schematic diagram illustrating in perspective side view orientation of some of the retarder and polariser axes for an optical stack wherein the O-plate orientation is aligned parallel to the lateral direction;
**FIGURE 38B** is a schematic diagram illustrating in perspective side view orientation of birefringent molecules in the arrangement of FIGURE 38A;
**FIGURE 38C** is a schematic luminance field-of-view graph illustrating variation in transmitted luminance of the O-plate arranged between parallel polarisers of FIGURE 38A;
**FIGURE 38D** is a schematic luminance field-of-view graph illustrating variation in transmitted luminance of the optical stack of FIGURE 38A;
**FIGURE 39A** is a schematic diagram illustrating in side view a directional display comprising a directional waveguide and a homogeneously aligned switchable liquid crystal O-plate arranged between a spatial light modulator and a directional backlight;
**FIGURE 39B** is a schematic diagram illustrating in side view switching of the homogeneously aligned switchable liquid crystal O-plate in the directional display of FIGURE 39A;
**FIGURE 39C** is a schematic diagram illustrating a graph of liquid crystal director tilt against liquid crystal cell thickness for a cell with an applied voltage;
**FIGURE 39D** is a schematic diagram illustrating in perspective front view orientation of some of the retarder, alignment layers and polariser axes for the optical stack of FIGURE 39A;
**FIGURE 39E** is a schematic diagram illustrating a flowchart for control of a directional display apparatus comprising a switchable directional backlight, a switchable retarder and a privacy display control system;
**FIGURE 39F** is a schematic graph illustrating variation of luminance of a directional display apparatus comprising a switchable directional backlight, a switchable retarder and a privacy display control system;
**FIGURE 39G** is a schematic diagram illustrating in side view a directional display comprising a directional waveguide and a homogeneously aligned switchable liquid crystal O-plate arranged between a spatial light modulator and an output polariser;
**FIGURE 40A** is a schematic diagram illustrating in perspective side view orientation of some of the retarder, alignment layers and polariser axes for the optical stack of FIGURE 39A for a first applied voltage;
**FIGURE 40B** is a schematic luminance field-of-view graph illustrating variation in transmitted luminance of the O-plate arranged between parallel polarisers of FIGURE 40A;
**FIGURE 40C** is a schematic luminance field-of-view graph illustrating variation in transmitted luminance of the optical stack of FIGURE 40A in a privacy mode of operation;
**FIGURE 41A** is a schematic diagram illustrating in perspective side view orientation of some of the retarder, alignment layers and polariser axes for the optical stack of FIGURE 39A for no applied voltage in a wide angle mode of operation;
**FIGURE 41B** is a schematic luminance field-of-view graph illustrating variation in transmitted luminance of the A-plate arranged between parallel polarisers of FIGURE 41A for no applied voltage;
**FIGURE 41C** is a schematic luminance field-of-view graph illustrating variation in transmitted luminance of the optical stack of FIGURE 41A in a wide angle mode of operation;
**FIGURE 42A** is a flowchart describing adjustment of homogeneously aligned switchable liquid crystal O-plate voltage in correspondence with the display viewing conditions;
**FIGURE 42B** are schematic luminance field-of-view graphs illustrating variation in transmitted luminance of the O-plate arranged between parallel polarisers of FIGURE 41A for different voltages;
**FIGURE 43** is a schematic diagram illustrating in perspective side view orientation of multiple parallel homogeneously aligned switchable liquid crystal O-plates arranged between a directional backlight and a spatial light modulator;
**FIGURE 44A** is a schematic diagram illustrating in perspective side view orientation of multiple orthogonally oriented homogeneously aligned switchable liquid crystal O-plates arranged between a directional backlight and a spatial light modulator;
**FIGURE 44B** is a schematic luminance field-of-view graph illustrating variation in transmitted luminance of the multiple homogeneously aligned switchable liquid crystal O-plates of FIGURE 44A for an applied voltage;
**FIGURE 44C** is a schematic luminance field-of-view graph illustrating variation in transmitted luminance of the optical stack of FIGURE 44A in a wide angle mode of operation;
**FIGURE 45** is a schematic diagram illustrating in perspective side view orientation of a homogeneously aligned switchable liquid crystal O-plate and a C-plate arranged between a directional backlight and a spatial light modulator;
**FIGURE 46A** is a schematic diagram illustrating in perspective side view orientation of a homogeneously aligned switchable liquid crystal O-plate arranged between a directional backlight and a spatial light modulator and a C-plate arranged between the spatial light modulator and an additional polariser;
**FIGURE 46B** is a schematic diagram illustrating in side view a directional display comprising a directional waveguide and a homogeneously aligned switchable liquid crystal O-plate arranged between a spatial light modulator and an output polariser and a C-plate arranged between the spatial light modulator and an additional polariser;
**FIGURE 47A** is a schematic luminance field-of-view graph illustrating variation in transmitted luminance of the multiple homogeneously aligned switchable liquid crystal O-plates of FIGURES 45A-B for an applied voltage;
**FIGURE 47B** is a schematic luminance field-of-view graph illustrating variation in transmitted luminance of the optical stack of FIGURES 45A-B in a privacy mode of operation;
**FIGURE 47C** is a schematic luminance field-of-view graph illustrating variation in transmitted luminance of the optical stack of FIGURES 45A-B in a wide angle mode of operation;
**FIGURE 48A** is a schematic diagram illustrating in perspective side view orientation of a homeotropically aligned switchable liquid crystal O-plate arranged between a directional backlight and a spatial light modulator and a negative C-plate arranged between the spatial light modulator and an additional polariser in a wide angle mode of operation;
**FIGURE 48B** is a schematic luminance field-of-view graph illustrating variation in transmitted luminance of the optical stack of FIGURE 48A in a wide angle mode of operation;
**FIGURE 48C** is a schematic diagram illustrating in perspective side view orientation of a homeotropically aligned switchable liquid crystal O-plate arranged between a directional backlight and a spatial light modulator and a negative C-plate arranged between the spatial light modulator and an additional polariser in a privacy mode of operation;
**FIGURE 48D** is a schematic luminance field-of-view graph illustrating variation in transmitted luminance of the optical stack of FIGURE 48C in a privacy mode of operation;
**FIGURE 48E** is a schematic luminance field-of-view graph illustrating variation in transmitted luminance of a directional backlight in a polar region;
**FIGURE 48F** is a schematic luminance field-of-view graph illustrating variation in transmitted luminance of a directional backlight in a polar region of FIGURE 48F further modulated by the optical stack of FIGURE 40A;
**FIGURE 48G** is a schematic luminance field-of-view graph illustrating variation in transmitted luminance of a directional backlight in a polar region of FIGURE 48F further modulated by the optical stack of FIGURE 48C;
**FIGURE 48H** is a schematic diagram illustrating in perspective side view orientation of multiple parallel homeotropically aligned switchable liquid crystal O-plates and correcting passive retarders arranged between a backlight and a spatial light modulator;
**FIGURE 48I** is a schematic diagram illustrating in perspective side view orientation of multiple orthogonal homeotropically aligned switchable liquid crystal O-plates and correcting passive retarders arranged between a backlight and a spatial light modulator;
**FIGURE 48J** is a schematic luminance field-of-view graph illustrating variation in transmitted luminance of the optical stack of FIGURE 48I in a privacy mode of operation;
**FIGURE 49A** is a schematic diagram illustrating in perspective side view orientation of a homeotropically aligned patterned switchable liquid crystal O-plate arranged between a directional backlight and a spatial light modulator in a privacy mode of operation arranged to comprise switchable camouflage regions;
**FIGURE 49B** is a schematic diagram illustrating in perspective front view illumination of a primary viewer and a snooper by a camouflaged luminance controlled privacy display;
**FIGURE 49C** is a schematic diagram illustrating in perspective side view illumination of a snooper by a camouflaged luminance controlled privacy display;
**FIGURE 50A** is a schematic diagram illustrating in perspective side view orientation of a homeotropically aligned switchable liquid crystal O-plate arranged between a directional backlight and a spatial light modulator and crossed A-plates arranged between the spatial light modulator and an additional polariser in a wide angle mode of operation;
**FIGURE 50B** is a schematic luminance field-of-view graph illustrating variation in transmitted luminance of the optical stack of FIGURE 50A in a wide angle mode of operation;
**FIGURE 50C** is a schematic diagram illustrating in perspective side view orientation of a homeotropically aligned switchable liquid crystal O-plate arranged between a directional backlight and a spatial light modulator and crossed A-plates arranged between the spatial light modulator and an additional polariser in a privacy mode of operation;
**FIGURE 50D** is a schematic luminance field-of-view graph illustrating variation in transmitted luminance of the optical stack of FIGURE 50C in a privacy mode of operation;
**FIGURE 51A** is a schematic diagram illustrating in perspective side view orientation of a hybrid aligned switchable liquid crystal O-plate arranged between a directional backlight and a spatial light modulator and a negative C-plate arranged between the spatial light modulator and an additional polariser in a wide angle mode of operation;
**FIGURE 51B** is a schematic luminance field-of-view graph illustrating variation in transmitted luminance of the optical stack of FIGURE 51A in a wide angle mode of operation;
**FIGURE 51C** is a schematic diagram illustrating in perspective side view orientation of a hybrid aligned switchable liquid crystal O-plate arranged between a directional backlight and a spatial light modulator and a negative C-plate arranged between the spatial light modulator and an additional polariser in a privacy mode of operation;
**FIGURE 51D** is a schematic luminance field-of-view graph illustrating variation in transmitted luminance of the optical stack of FIGURE 51C in a privacy mode of operation;
**FIGURE 52A** is a schematic diagram illustrating in perspective side view orientation of a homogeneously aligned switchable liquid crystal O-plate arranged between a directional backlight and a spatial light modulator and a negative C-plate arranged between the spatial light modulator and an additional polariser in a wide angle mode of operation;
**FIGURE 52B** is a schematic luminance field-of-view graph illustrating variation in transmitted luminance of the optical stack of FIGURE 52A in a wide angle mode of operation;
**FIGURE 52C** is a schematic diagram illustrating in perspective side view orientation of a homogeneously aligned switchable liquid crystal O-plate arranged between a directional backlight and a spatial light modulator and a negative C-plate arranged between the spatial light modulator and an additional polariser in a privacy mode of operation;
**FIGURE 52D** is a schematic luminance field-of-view graph illustrating variation in transmitted luminance of the optical stack of FIGURE 52C in a privacy mode of operation;
**FIGURE 53A** is a schematic diagram illustrating in perspective side view orientation of a homogeneously aligned switchable liquid crystal O-plate arranged between a directional backlight and a spatial light modulator and crossed A-plates arranged between the spatial light modulator and an additional polariser in a wide angle mode of operation;
**FIGURE 53B** is a schematic luminance field-of-view graph illustrating variation in transmitted luminance of the optical stack of FIGURE 51A in a wide angle mode of operation;
**FIGURE 53C** is a schematic diagram illustrating in perspective side view orientation of a homogeneously aligned switchable liquid crystal O-plate arranged between a directional backlight and a spatial light modulator and a negative C-plate arranged between the spatial light modulator and an additional polariser in a privacy mode of operation;
**FIGURE 53D** is a schematic luminance field-of-view graph illustrating variation in transmitted luminance of the optical stack of FIGURE 51C in a privacy mode of operation;
**FIGURE 54** is a schematic diagram illustrating in side view orientation of a switchable liquid crystal O-plate and a fixed O-plate that may be arranged with a directional backlight and a spatial light modulator wherein the interface between the O-plates is substantially planar;
**FIGURE 55** is a schematic diagram illustrating in side view orientation of a switchable liquid crystal O-plate and a fixed O-plate that may be arranged with a directional backlight and a spatial light modulator wherein the interface between the O-plates is roughened;
**FIGURE 56** is a schematic diagram illustrating a side view of a directional display apparatus optical stack comprising a directional waveguide, wherein a switchable retarder is arranged between the waveguide and the spatial light modulator and surfaces are arranged to provide reduced damage by an external compressive force;
**FIGURE 57** is a schematic diagram illustrating a side view of a directional display control system comprising control of spatial light modulator, retarder layer and light source array;
**FIGURE 58A, FIGURE 58B, FIGURE 58C, FIGURE 58D,** and **FIGURE 58E** are schematic diagrams illustrating the operation of a directional display in privacy mode wherein a primary image is provided on the spatial light modulator in at least one phase of operation;
**FIGURE 59A, FIGURE 59B, FIGURE 59C, FIGURE 59D,** and **FIGURE 59E** are schematic diagrams illustrating the operation in a second phase of a directional display in privacy mode wherein a primary image is provided on the spatial light modulator in a first phase and a secondary image is provided on the spatial light modulator in a second phase;
**FIGURE 60** is a schematic diagram illustrating a side view of a directional display apparatus optical stack comprising a collimating waveguide, a wide angle waveguide, a switchable liquid crystal O-plate and a correcting passive retarder; and
**FIGURE 61** is a schematic diagram illustrating a side view of a directional display apparatus optical stack comprising a collimating waveguide and switchable diffuser, a switchable liquid crystal O-plate and a correcting passive retarder.

Time multiplexed autostereoscopic displays can advantageously improve the spatial resolution of autostereoscopic display by directing light from all of the pixels of a spatial light modulator to a first viewing window in a first time slot, and all of the pixels to a second viewing window in a second time slot. Thus an observer with eyes arranged to receive light in first and second viewing windows will see a full resolution image across the whole of the display over multiple time slots. Time multiplexed displays can advantageously achieve directional illumination by directing an illuminator array through a substantially transparent time multiplexed spatial light modulator using directional optical elements, wherein the directional optical elements substantially form an image of the illuminator array in the window plane.

The uniformity of the viewing windows may be advantageously independent of the arrangement of pixels in the spatial light modulator. Advantageously, such displays can provide observer tracking displays which have low flicker, with low levels of cross talk for a moving observer.

To achieve high uniformity in the window plane, it is desirable to provide an array of illumination elements that have a high spatial uniformity. The illuminator elements of the time sequential illumination system may be provided, for example, by pixels of a spatial light modulator with size approximately 100 micrometers in combination with a lens array. However, such pixels suffer from similar difficulties as for spatially multiplexed displays. Further, such devices may have low efficiency and higher cost, requiring additional display components.
High window plane uniformity can be conveniently achieved with macroscopic illuminators, for example, an array of LEDs in combination with homogenizing and diffusing optical elements that are typically of size 1 mm or greater. However, the increased size of the illuminator elements means that the size of the directional optical elements increases proportionately. For example, a 16 mm wide illuminator imaged to a 65 mm wide viewing window may require a 200 mm back working distance. Thus, the increased thickness of the optical elements can prevent useful application, for example, to mobile displays, or large area displays.

Addressing the aforementioned shortcomings, optical valves as described in commonly-owned U.S. Patent No. 9,519,153 advantageously can be arranged in combination with fast switching transmissive spatial light modulators to achieve time multiplexed autostereoscopic illumination in a thin package while providing high resolution images with flicker free observer tracking and low levels of cross talk. Described is a one dimensional array of viewing positions, or windows, that can display different images in a first, typically horizontal, direction, but contain the same images when moving in a second, typically vertical, direction.

Conventional non-imaging display backlights commonly employ optical waveguides and have edge illumination from light sources such as LEDs. However, it should be appreciated that there are many fundamental differences in the function, design, structure, and operation between such conventional non-imaging display backlights and the imaging directional backlights discussed in the present disclosure.

Generally, for example, in accordance with the present disclosure, imaging directional backlights are arranged to direct the illumination from multiple light sources through a display panel to respective multiple viewing windows in at least one axis. Each viewing window is substantially formed as an image in at least one axis of a light source by the imaging system of the imaging directional backlight. An imaging system may be formed between multiple light sources and the respective window images. In this manner, the light from each of the multiple light sources is substantially not visible for an observer's eye outside of the respective viewing window.

In contradistinction, conventional non-imaging backlights or light guiding plates (LGPs) are used for illumination of 2D displays. *See, e.g.,* Kälil Käläntär et al., Backlight Unit With Double Surface Light Emission, J. Soc. Inf. Display, Vol. 12, Issue 4, pp. 379-387 (Dec. 2004). Non-imaging backlights are typically arranged to direct the illumination from multiple light sources through a display panel into a substantially common viewing zone for each of the multiple light sources to achieve wide viewing angle and high display uniformity. Thus non-imaging backlights do not form viewing windows. In this manner, the light from each of the multiple light sources may be visible for an observer's eye at substantially all positions across the viewing zone. Such conventional non-imaging backlights may have some directionality, for example, to increase screen gain compared to Lambertian illumination, which may be provided by brightness enhancement films such as BEF^{™} from 3M. However, such directionality may be substantially the same for each of the respective light sources. Thus, for these reasons and others that should be apparent to persons of ordinary skill, conventional non-imaging backlights are different to imaging directional backlights. Edge lit non-imaging backlight illumination structures may be used in liquid crystal display systems such as those seen in 2D Laptops, Monitors and TVs. Light propagates from the edge of a lossy waveguide which may include sparse features; typically local indentations in the surface of the guide which cause light to be lost regardless of the propagation direction of the light.

As used herein, an optical valve is an optical structure that may be a type of light guiding structure or device referred to as, for example, a light valve, an optical valve directional backlight, and a valve directional backlight ("v-DBL"). In the present disclosure, optical valve is different to a spatial light modulator (even though spatial light modulators may be sometimes generally referred to as a "light valve" in the art). One example of an imaging directional backlight is an optical valve that may employ a folded optical system. Light may propagate substantially without loss in one direction through the optical valve, may be incident on an imaging reflector, and may counter-propagate such that the light may be extracted by reflection off tilted light extraction features, and directed to viewing windows as described in US-9519153B2.

Additionally, as used herein, a stepped waveguide imaging directional backlight may be at least one of an optical valve. A stepped waveguide is a waveguide for an imaging directional backlight comprising a waveguide for guiding light, further comprising: a first light guiding surface; and a second light guiding surface, opposite the first light guiding surface, further comprising a plurality of light guiding features interspersed with a plurality of extraction features arranged as steps.

In operation, light may propagate within an exemplary optical valve in a first direction from an input surface to a reflective side and may be transmitted substantially without loss. Light may be reflected at the reflective side and propagates in a second direction substantially opposite the first direction. As the light propagates in the second direction, the light may be incident on light extraction features, which are operable to redirect the light outside the optical valve. Stated differently, the optical valve generally allows light to propagate in the first direction and may allow light to be extracted while propagating in the second direction.

The optical valve may achieve time sequential directional illumination of large display areas. Additionally, optical elements may be employed that are thinner than the back working distance of the optical elements to direct light from macroscopic illuminators to a window plane. Such displays may use an array of light extraction features arranged to extract light counter propagating in a substantially parallel waveguide.

Thin imaging directional backlight implementations for use with LCDs have been proposed and demonstrated by 3M, for example US-7528893B2; by Microsoft, for example US-7970246B2 which may be referred to herein as a "wedge type directional backlight;" by RealD, for example US-9519153B2 which may be referred to herein as an "optical valve" or "optical valve directional backlight".

The present disclosure provides stepped waveguide imaging directional backlights in which light may reflect back and forth between the internal faces of, for example, a stepped waveguide which may include a first side and a first set of features. As the light travels along the length of the stepped waveguide, the light may not substantially change angle of incidence with respect to the first side and first set of surfaces and so may not reach the critical angle of the medium at these internal faces. Light extraction may be advantageously achieved by a second set of surfaces (the step "risers") that are inclined to the first set of surfaces (the step "treads"). Note that the second set of surfaces may not be part of the light guiding operation of the stepped waveguide, but may be arranged to provide light extraction from the structure. By contrast, a wedge type imaging directional backlight may allow light to guide within a wedge profiled waveguide having continuous internal surfaces. The optical valve is thus not a wedge type imaging directional backlight.

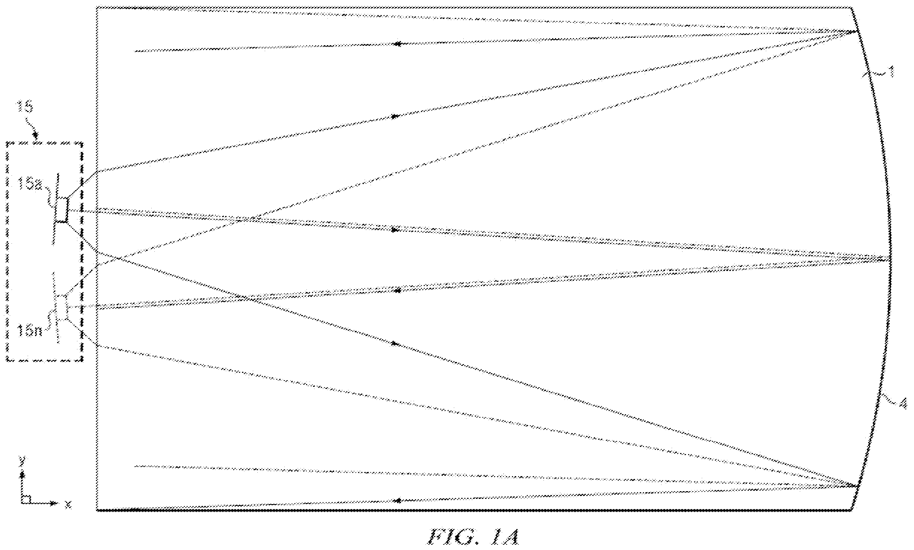

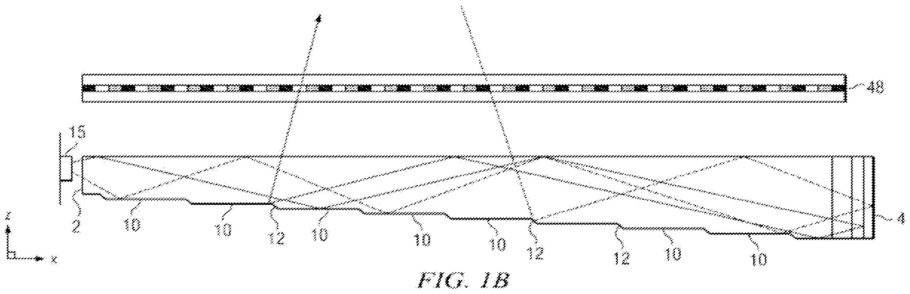

**FIGURE 1A** is a schematic diagram illustrating a front view of light propagation in one example of a directional display device, and **FIGURE 1B** is a schematic diagram illustrating a side view of light propagation in the directional display device of FIGURE 1A.

FIGURE 1A illustrates a front view in the *xy* plane of a directional backlight of a directional display device, and includes an illuminator array 15 which may be used to illuminate a stepped waveguide 1. Illuminator array 15 includes illuminator elements 15a through illuminator element 15n (where n is an integer greater than one). In one example, the stepped waveguide 1 of FIGURE 1A may be a stepped, display sized waveguide 1. Illumination elements 15a through 15n are light sources that may be light emitting diodes (LEDs). Although LEDs are discussed herein as illuminator elements 15a - 15n, other light sources may be used such as, but not limited to, diode sources, semiconductor sources, laser sources, local field emission sources, organic emitter arrays, and so forth. Additionally, FIGURE 1B illustrates a side view in the *xz* plane, and includes illuminator array 15, SLM 48, extraction features 12, guiding features 10, and stepped waveguide 1, arranged as shown. The side view provided in FIGURE 1B is an alternative view of the front view shown in FIGURE 1A. Accordingly, the illuminator array 15 of FIGURES 1A and 1B corresponds to one another and the stepped waveguide 1 of FIGURES 1A and 1B may correspond to one another.

Further, in FIGURE 1B, the stepped waveguide 1 may have an input end 2 that is thin and a reflective end 4 that is thick. Thus the waveguide 1 extends between the input end 2 that receives input light and the reflective end 4 that reflects the input light back through the waveguide 1. The length of the input end 2 in a lateral direction across the waveguide is greater than the height of the input end 2. The illuminator elements 15a - 15n are disposed at different input positions in a lateral direction across the input end 2.

The waveguide 1 has first and second, opposed guide surfaces extending between the input end 2 and the reflective end 4 for guiding light forwards and back along the waveguide 1. The second guide surface has a plurality of light extraction features 12 facing the reflective end 4 and arranged to reflect at least some of the light guided back through the waveguide 1 from the reflective end from different input positions across the input end in different directions through the first guide surface that are dependent on the input position.

In this example, the light extraction features 12 are reflective facets, although other reflective features could be used. The light extraction features 12 do not guide light through the waveguide, whereas the intermediate regions of the second guide surface intermediate the light extraction features 12 guide light without extracting it. Those regions of the second guide surface are planar and may extend parallel to the first guide surface, or at a relatively low inclination. The light extraction features 12 extend laterally to those regions so that the second guide surface has a stepped shape which may include the light extraction features 12 and intermediate regions. The light extraction features 12 are oriented to reflect light from the light sources, after reflection from the reflective end 4, through the first guide surface.

The light extraction features 12 are arranged to direct input light from different input positions in the lateral direction across the input end in different directions relative to the first guide surface that are dependent on the input position. As the illumination elements 15a-15n are arranged at different input positions, the light from respective illumination elements 15a-15n is reflected in those different directions. In this manner, each of the illumination elements 15a-15n directs light into a respective optical window in output directions distributed in the lateral direction in dependence on the input positions. The lateral direction across the input end 2 in which the input positions are distributed corresponds with regard to the output light to a lateral direction to the normal to the first guide surface. The lateral directions as defined at the input end 2 and with regard to the output light remain parallel in this example where the deflections at the reflective end 4 and the first guide surface are generally orthogonal to the lateral direction. Under the control of a control system, the illuminator elements 15a - 15n may be selectively operated to direct light into a selectable optical window. The optical windows may be used individually or in groups as viewing windows.

The SLM 48 extends across the waveguide and modulates the light output therefrom. Although the SLM 48 may a liquid crystal display (LCD), this is merely by way of example and other spatial light modulators or displays may be used including LCOS, DLP devices, and so forth, as this illuminator may work in reflection. In this example, the SLM 48 is disposed across the first guide surface of the waveguide and modulates the light output through the first guide surface after reflection from the light extraction features 12.

The operation of a directional display device that may provide a one dimensional array of viewing windows is illustrated in front view in FIGURE 1A, with its side profile shown in FIGURE 1B. In operation, in FIGURES 1A and 1B, light may be emitted from an illuminator array 15, such as an array of illuminator elements 15a through 15n, located at different positions, y, along the surface of thin end side 2, x=0, of the stepped waveguide 1. The light may propagate along +x in a first direction, within the stepped waveguide 1, while at the same time, the light may fan out in the *xy* plane and upon reaching the far curved end side 4, may substantially or entirely fill the curved end side 4. While propagating, the light may spread out to a set of angles in the *xz* plane up to, but not exceeding the critical angle of the guide material. The extraction features 12 that link the guiding features 10 of the bottom side of the stepped waveguide 1 may have a tilt angle greater than the critical angle and hence may be missed by substantially all light propagating along +x in the first direction, ensuring the substantially lossless forward propagation.

Continuing the discussion of FIGURES 1A and 1B, the curved end side 4 of the stepped waveguide 1 may be made reflective, typically by being coated with a reflective material such as, for example, silver, although other reflective techniques may be employed. Light may therefore be redirected in a second direction, back down the guide in the direction of -*x* and may be substantially collimated in the *xy* or display plane. The angular spread may be substantially preserved in the *xz* plane about the principal propagation direction, which may allow light to hit the riser edges and reflect out of the guide. In an example with approximately 45 degree tilted extraction features 12, light may be effectively directed approximately normal to the *xy* display plane with the *xz* angular spread substantially maintained relative to the propagation direction. This angular spread may be increased when light exits the stepped waveguide 1 through refraction, but may be decreased somewhat dependent on the reflective properties of the extraction features 12.

In some examples with uncoated extraction features 12, reflection may be reduced when total internal reflection (TIR) fails, squeezing the *xz* angular profile and shifting off normal. However, in other examples having silver coated or metallized extraction features, the increased angular spread and central normal direction may be preserved. Continuing the description of the example with silver coated extraction features, in the *xz* plane, light may exit the stepped waveguide 1 approximately collimated and may be directed off normal in proportion to the y-position of the respective illuminator element 15a - 15n in illuminator array 15 from the input edge center. Having independent illuminator elements 15a - 15n along the input edge 2 then enables light to exit from the entire first light directing side 6 and propagate at different external angles, as illustrated in FIGURE 1A.

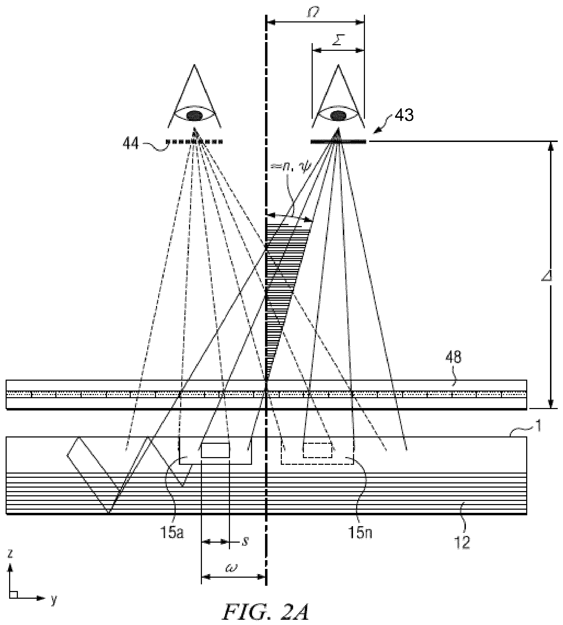

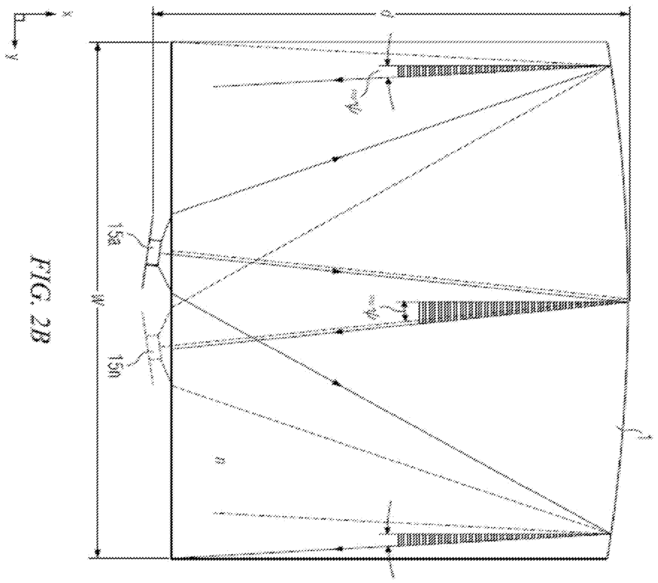

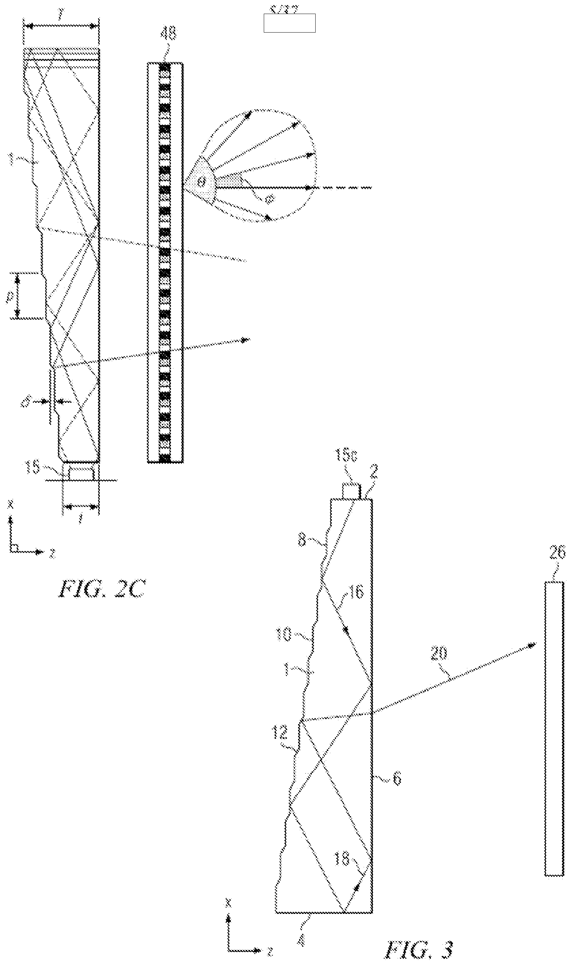

Illuminating a spatial light modulator (SLM) 48 such as a fast liquid crystal display (LCD) panel with such a device may achieve autostereoscopic 3D as shown in top view or yz-plane viewed from the illuminator array 15 end in FIGURE 2A, front view in FIGURE 2B and side view in FIGURE 2C. **FIGURE 2A** is a schematic diagram illustrating in a top view, propagation of light in a directional display device, **FIGURE 2B** is a schematic diagram illustrating in a front view, propagation of light in a directional display device, and **FIGURE 2C** is a schematic diagram illustrating in side view propagation of light in a directional display device. As illustrated in FIGURES 2A, 2B, and 2C, a stepped waveguide 1 may be located behind a fast (e.g., greater than 100Hz) LCD panel SLM 48 that displays sequential right and left eye images. In synchronization, specific illuminator elements 15a through 15n of illuminator array 15 (where n is an integer greater than one) may be selectively turned on and off, providing illuminating light that enters right and left eyes substantially independently by virtue of the system's directionality. In the simplest case, sets of illuminator elements of illuminator array 15 are turned on together, providing a one dimensional viewing window 43 or an optical pupil with limited width in the horizontal direction, but extended in the vertical direction, in which both eyes horizontally separated may view a left eye image, and another viewing window 44 in which a right eye image may primarily be viewed by both eyes, and a central position in which both the eyes may view different images. In this way, 3D may be viewed when the head of a viewer is approximately centrally aligned. Movement to the side away from the central position may result in the scene collapsing onto a 2D image.

The reflective end 4 may have positive optical power in the lateral direction across the waveguide 1. In other words, the reflective end may have positive optical power in a direction extending between sides of the waveguide that extend between the first and second guide surfaces and between the input end and the reflective end. The light extraction features 12 may have positive optical power in a direction between sides of the waveguide that extend between the first and second guide surfaces 6, 8 and between the input end 2 and the reflective end.

The waveguide 1 may further comprising a reflective end 4 for reflecting input light from the light sources back along the waveguide 1, the second guide surface 8 being arranged to deflect the reflected input light through the first guide surface 6 as output light, and the waveguide 1 being arranged to image the light sources 15a-n so that the output light from the light sources is directed into respective optical windows 26a-n in output directions that are distributed laterally in dependence on the input positions of the light sources.

In examples in which typically the reflective end 4 has positive optical power, the optical axis may be defined with reference to the shape of the reflective end 4, for example being a line that passes through the center of curvature of the reflective end 4 and coincides with the axis of reflective symmetry of the end 4 about the x-axis. In the case that the reflecting surface 4 is flat, the optical axis may be similarly defined with respect to other components having optical power, for example the light extraction features 12 if they are curved, or the Fresnel lens 62 described below. The optical axis 238 is typically coincident with the mechanical axis of the waveguide 1. In the present examples that typically comprise a substantially cylindrical reflecting surface at end 4, the optical axis 238 is a line that passes through the center of curvature of the surface at end 4 and coincides with the axis of reflective symmetry of the side 4 about the x-axis. The optical axis 238 is typically coincident with the mechanical axis of the waveguide 1. The cylindrical reflecting surface at end 4 may typically comprise a spherical profile to optimize performance for on-axis and off-axis viewing positions. Other profiles may be used.

**FIGURE 3** is a schematic diagram illustrating in side view a directional display device. Further, FIGURE 3 illustrates additional detail of a side view of the operation of a stepped waveguide 1, which may be a transparent material. The stepped waveguide 1 may include an illuminator input side 2, a reflective side 4, a first light directing side 6 which may be substantially planar, and a second light directing side 8 which includes guiding features 10 and light extraction features 12. In operation, light rays 16 from an illuminator element 15c of an illuminator array 15 (not shown in FIGURE 3), that may be an addressable array of LEDs for example, may be guided in the stepped waveguide 1 by means of total internal reflection by the first light directing side 6 and total internal reflection by the guiding feature 10, to the reflective side 4, which may be a mirrored surface. Although reflective side 4 may be a mirrored surface and may reflect light, it may in some examples also be possible for light to pass through reflective side 4.

Continuing the discussion of FIGURE 3, light ray 18 reflected by the reflective side 4 may be further guided in the stepped waveguide 1 by total internal reflection at the reflective side 4 and may be reflected by extraction features 12. Light rays 18 that are incident on extraction features 12 may be substantially deflected away from guiding modes of the stepped waveguide 1 and may be directed, as shown by ray 20, through the side 6 to an optical pupil that may form an optical window 26 of an autostereoscopic display. The width of the optical window 26 may be determined by at least the size of the illuminator, output design distance and optical power in the side 4 and extraction features 12. The height of the viewing window may be primarily determined by the reflection cone angle of the extraction features 12 and the illumination cone angle input at the input side 2. Thus each optical window 26 represents a range of separate output directions with respect to the surface normal direction of the spatial light modulator 48 that intersect with a plane at the nominal viewing distance.

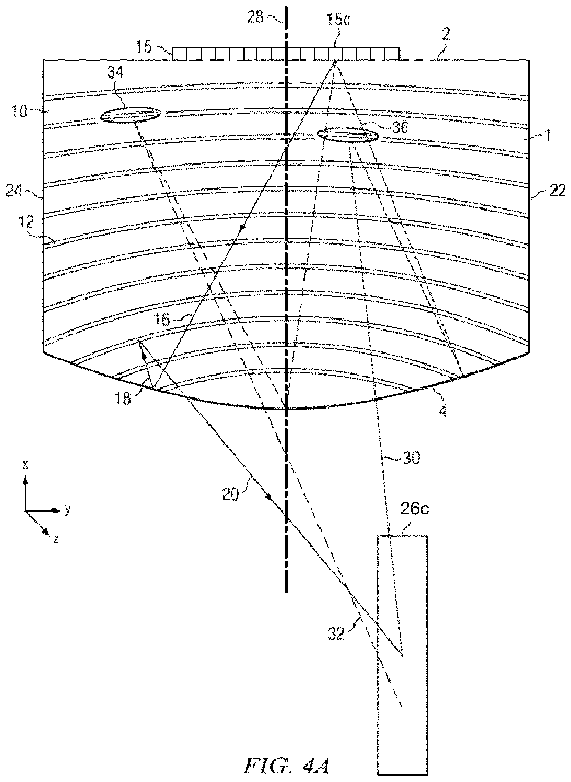

**FIGURE 4A** is a schematic diagram illustrating in front view a directional display device which may be illuminated by a first illuminator element and including curved light extraction features. Further, FIGURE 4A shows in front view further guiding of light rays from illuminator element 15c of illuminator array 15, in the stepped waveguide 1. Each of the output rays are directed towards the same optical window 26 from the respective illuminator element 15c. Thus light ray 30 may intersect the ray 20 in the optical window 26c, or may have a different height in the window as shown by ray 32. Additionally, in various examples, sides 22, 24 of the waveguide 1 may be transparent, mirrored, or blackened surfaces. Continuing the discussion of FIGURE 4A, light extraction features 12 may be elongate, and the orientation of light extraction features 12 in a first region 34 of the light directing side 8 (light directing side 8 shown in FIGURE 3, but not shown in FIGURE 4A) may be different to the orientation of light extraction features 12 in a second region 36 of the light directing side 8.

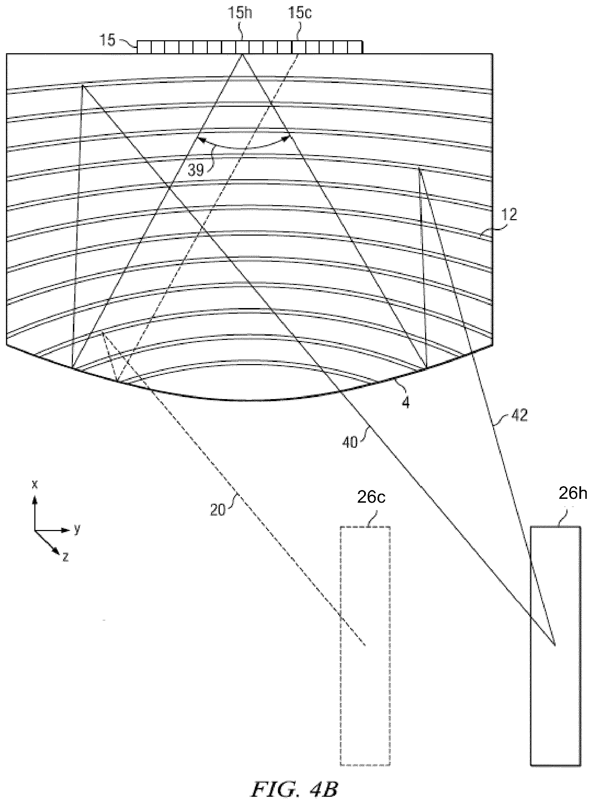

**FIGURE 4B** is a schematic diagram illustrating in front view an optical valve which may illuminated by a second illuminator element 15h. Further, FIGURE 4B shows the light rays 40, 42 from the second illuminator element 15h of the illuminator array 15. The curvature of the reflective end on the side 4 and the light extraction features 12 cooperatively produce a second viewing window 26h laterally separated from the optical window 26c with light rays from the illuminator element 15h.

Advantageously, the arrangement illustrated in FIGURE 4B may provide a real image of the illuminator element 15c at an optical window 26 in which the real image may be formed by cooperation of optical power in reflective side 4 and optical power which may arise from different orientations of elongate light extraction features 12 between regions 34 and 36, as shown in FIGURE 4A. The arrangement of FIGURE 4B may achieve improved aberrations of the imaging of illuminator element 15c to lateral positions in optical window 26c. Improved aberrations may achieve an extended viewing freedom for an autostereoscopic display while achieving low cross talk levels.

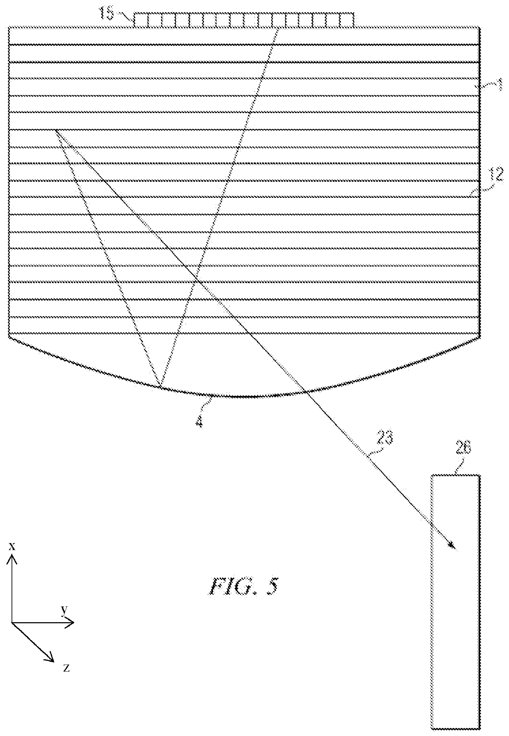

**FIGURE 5** is a schematic diagram illustrating in front view an example of a directional display device having substantially linear light extraction features. Further, FIGURE 5 shows a similar arrangement of components to FIGURE 1 (with corresponding elements being similar), with one of the differences being that the light extraction features 12 are substantially linear and parallel to each other. Advantageously, such an arrangement may provide substantially uniform illumination across a display surface and may be more convenient to manufacture than the curved extraction features of FIGURE 4A and FIGURE 4B.

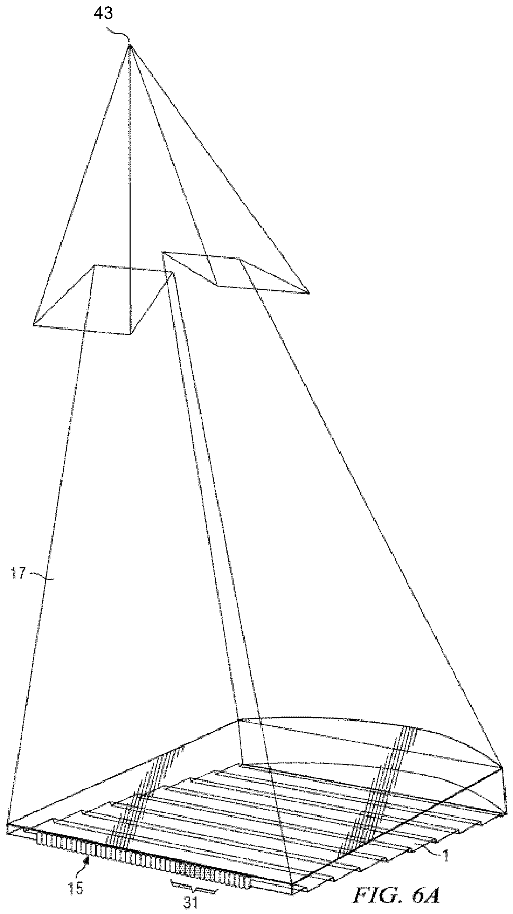

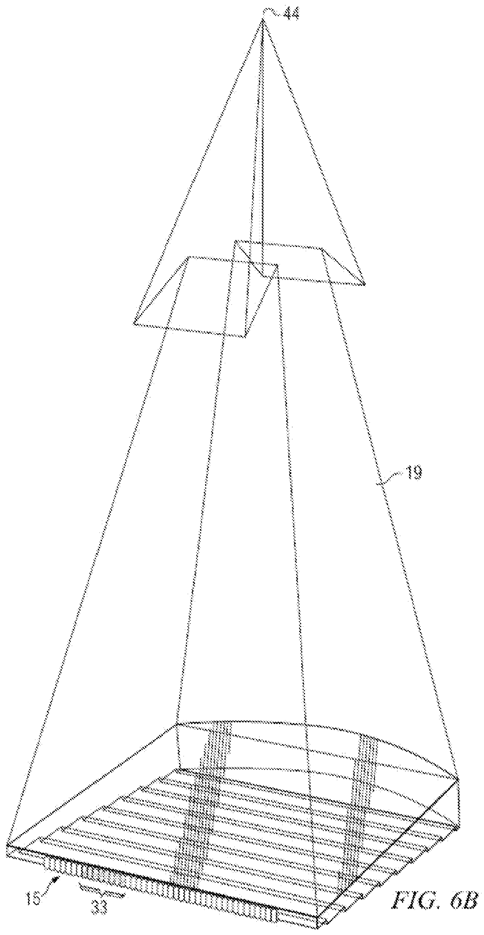

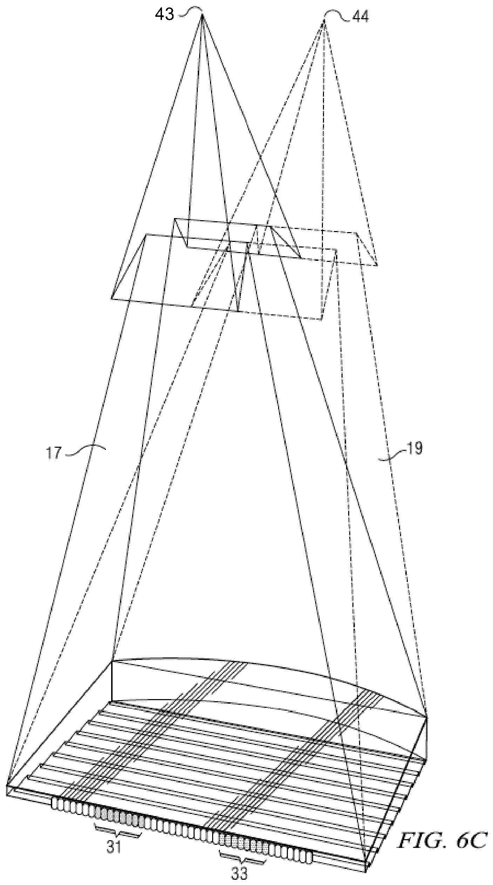

**FIGURE 6A** is a schematic diagram illustrating one example of the generation of a first viewing window in a time multiplexed imaging directional display device in a first time slot, **FIGURE 6B** is a schematic diagram illustrating another example of the generation of a second viewing window in a time multiplexed imaging directional backlight apparatus in a second time slot, and **FIGURE 6C** is a schematic diagram illustrating another example of the generation of a first and a second viewing window in a time multiplexed imaging directional display device. Further, FIGURE 6A shows schematically the generation of a viewing window 43 from stepped waveguide 1. Illuminator element group 31 in illuminator array 15 may provide a light cone 17 directed towards the viewing window 43. FIGURE 6B shows schematically the generation of viewing window 44. Illuminator element group 33 in illuminator array 15 may provide a light cone 19 directed towards viewing window 44. In cooperation with a time multiplexed display, viewing windows 43 and 44 may be provided in sequence as shown in FIGURE 6C. If the image on a spatial light modulator 48 (not shown in FIGURES 6A, 6B, 6C) is adjusted in correspondence with the light direction output, then an autostereoscopic image may be achieved for a suitably placed viewer. Similar operation can be achieved with all the directional backlights described herein. Note that illuminator element groups 31, 33 each include one or more illumination elements from illumination elements 15a to 15n, where n is an integer greater than one.

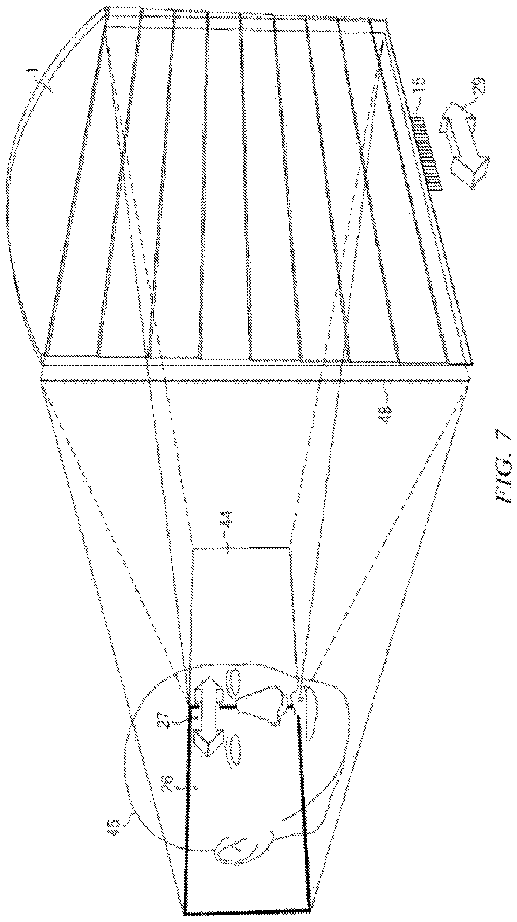

**FIGURE 7** is a schematic diagram illustrating one example of an observer tracking autostereoscopic directional display device. As shown in FIGURE 7, selectively turning on and off illuminator elements 15a to 15n along axis 29 provides for directional control of viewing windows. The head 45 position may be monitored with a camera, motion sensor, motion detector, or any other appropriate optical, mechanical or electrical means, and the appropriate illuminator elements of illuminator array 15 may be turned on and off to provide substantially independent images to each eye irrespective of the head 45 position. The head tracking system (or a second head tracking system) may provide monitoring of more than one head 45, 47 (head 47 not shown in FIGURE 7) and may supply the same left and right eye images to each viewers' left and right eyes providing 3D to all viewers. Again similar operation can be achieved with all the directional backlights described herein.

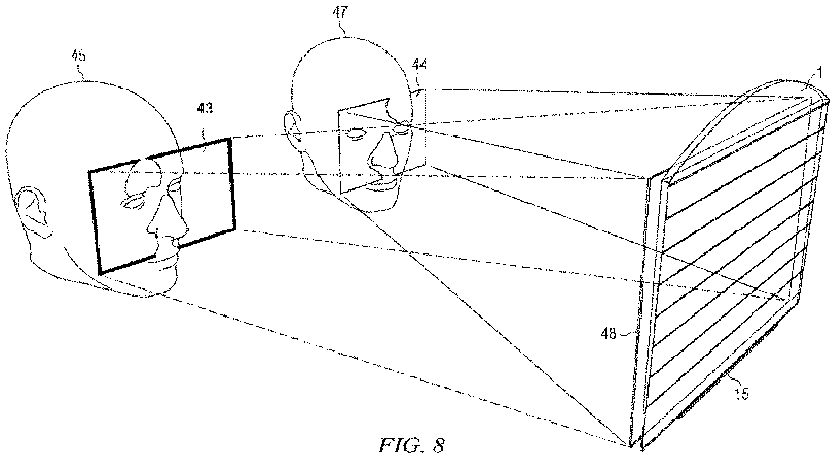

**FIGURE 8** is a schematic diagram illustrating one example of a multi-viewer directional display device as an example including an imaging directional backlight. As shown in FIGURE 8, at least two 2D images may be directed towards a pair of viewers 45, 47 so that each viewer may watch a different image on the spatial light modulator 48. The two 2D images of FIGURE 8 may be generated in a similar manner as described with respect to FIGURE 7 in that the two images would be displayed in sequence and in synchronization with sources whose light is directed toward the two viewers. One image is presented on the spatial light modulator 48 in a first phase, and a second image is presented on the spatial light modulator 48 in a second phase different from the first phase. In correspondence with the first and second phases, the output illumination is adjusted to provide first and second viewing windows 43, 44 respectively. An observer with both eyes in viewing window 43 will perceive a first image while an observer with both eyes in viewing window 44 will perceive a second image.

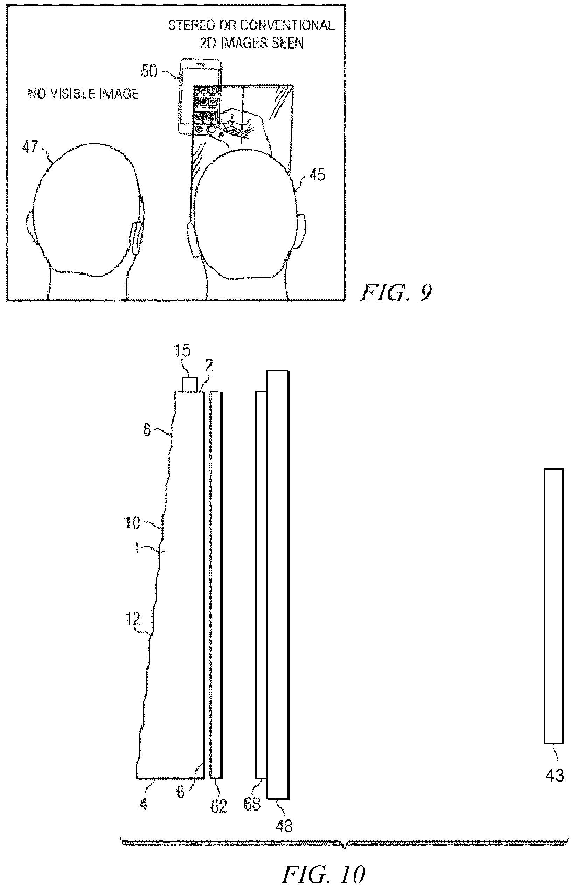

**FIGURE 9** is a schematic diagram illustrating a privacy directional display device which includes an imaging directional backlight. 2D display systems may also utilize directional backlighting for security and efficiency purposes in which light may be primarily directed at the eyes of a first viewer 45 as shown in FIGURE 9. Further, as illustrated in FIGURE 9, although first viewer 45 may be able to view an image on device 50, light is not directed towards second viewer 47. Thus second viewer 47 is prevented from viewing an image on device 50. Each of the examples of the present disclosure may advantageously provide autostereoscopic, dual image or privacy display functions.

**FIGURE 10** is a schematic diagram illustrating in side view the structure of a time multiplexed directional display device as an example including an imaging directional backlight. Further, FIGURE 10 shows in side view an autostereoscopic directional display device, which may include the stepped waveguide 1 and a Fresnel lens 62 arranged to provide the viewing window 43 in a window plane 106 at a nominal viewing distance from the spatial light modulator for a substantially collimated output across the stepped waveguide 1 output surface. A vertical diffuser 68 may be arranged to extend the height of the viewing window 43 further. The light may then be imaged through the spatial light modulator 48. The illuminator array 15 may include light emitting diodes (LEDs) that may, for example, be phosphor converted blue LEDs, or may be separate RGB LEDs. Alternatively, the illuminator elements in illuminator array 15 may include a uniform light source and spatial light modulator arranged to provide separate illumination regions. Alternatively the illuminator elements may include laser light source(s). The laser output may be directed onto a diffuser by means of scanning, for example, using a galvo or MEMS scanner. In one example, laser light may thus be used to provide the appropriate illuminator elements in illuminator array 15 to provide a substantially uniform light source with the appropriate output angle, and further to provide reduction in speckle. Alternatively, the illuminator array 15 may be an array of laser light emitting elements. Additionally in one example, the diffuser may be a wavelength converting phosphor, so that illumination may be at a different wavelength to the visible output light.

A further wedge type directional backlight is generally discussed by US-7660047B2. The wedge type directional backlight and optical valve further process light beams in different ways. In the wedge type waveguide, light input at an appropriate angle will output at a defined position on a major surface, but light rays will exit at substantially the same angle and substantially parallel to the major surface. By comparison, light input to a stepped waveguide of an optical valve at a certain angle may output from points across the first side, with output angle determined by input angle. Advantageously, the stepped waveguide of the optical valve may not require further light re-direction films to extract light towards an observer and angular non-uniformities of input may not provide non-uniformities across the display surface.

There will now be described some waveguides, directional backlights and directional display devices that are based on and incorporate the structures of FIGURES 1 to 10 above. Except for the modifications and/or additional features which will now be described, the above description applies equally to the following waveguides, directional backlights and display devices, but for brevity will not be repeated. The waveguides described below may be incorporated into a directional backlight or a directional display device as described above. Similarly, the directional backlights described below may be incorporated into a directional display device as described above.

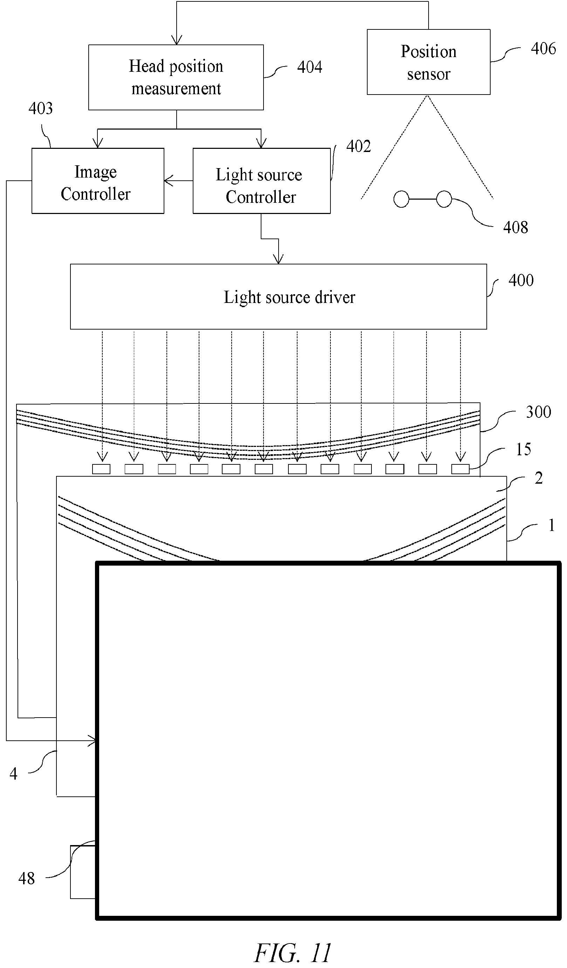

**FIGURE 11** is a schematic diagram illustrating a directional display apparatus comprising a directional display device and a control system. The arrangement and operation of the control system will now be described and may be applied, with changes as necessary, to each of the display devices disclosed herein. The directional backlight comprises a waveguide 1 and an array 15 of illumination elements 15a-15n arranged as described above. The control system is arranged to selectively operate the illumination elements 15a-15n to direct light into selectable viewing windows.

The reflective end 4 converges the reflected light. Fresnel lens 62 may be arranged to cooperate with reflective end 4 to achieve viewing windows at a viewing plane. Transmissive spatial light modulator 48 may be arranged to receive the light from the directional backlight. The image displayed on the SLM 48 may be presented in synchronization with the illumination of the light sources of the array 15.

The control system may comprise a sensor system arranged to detect the position of the observer 99 relative to the display device 100. The sensor system comprises a position sensor 406, such as a camera arranged to determine the position of an observer 408; and a head position measurement system 404 that may for example comprise a computer vision image processing system. The position sensor 406 may comprise known sensors including those comprising cameras and image processing units arranged to detect the position of observer faces. Position sensor 406 may further comprise a stereo sensor arranged to improve the measure of longitudinal position compared to a monoscopic camera. Alternatively position sensor 406 may comprise measurement of eye spacing to give a measure of required placement of respective arrays of viewing windows from tiles of the directional display.

The control system may further comprise an illumination controller and an image controller 403 that are both supplied with the detected position of the observer supplied from the head position measurement system 404.

The illumination controller comprises an LED controller 402 arranged to determine which light sources of array 15 should be switched to direct light to respective eyes of observer 408 in cooperation with waveguide 1; and an LED driver 400 arranged to control the operation of light sources of light source array 15 by means of drive lines 407. The illumination controller 74 selects the illuminator elements 15 to be operated in dependence on the position of the observer detected by the head position measurement system 72, so that the viewing windows 43 into which light is directed are in positions corresponding to the left and right eyes of the observer 99. In this manner, the lateral output directionality of the waveguide 1 corresponds with the observer position.

The image controller 403 is arranged to control the SLM 48 to display images. To provide an autostereoscopic display, the image controller 403 and the illumination controller may operate as follows. The image controller 403 controls the SLM 48 to display temporally multiplexed left and right eye images and the LED controller 402 operates the light sources 15 to direct light into viewing windows in positions corresponding to the left and right eyes of an observer synchronously with the display of left and right eye images. In this manner, an autostereoscopic effect is achieved using a time division multiplexing technique. In one example, a single viewing window may be illuminated by operation of light source 409 (which may comprise one or more LEDs) by means of drive line 410 wherein other drive lines are not driven as described elsewhere.

The head position measurement system 404 detects the position of an observer relative to the display device 100. The LED controller 402 selects the light sources 15 to be operated in dependence on the position of the observer detected by the head position measurement system 404, so that the viewing windows into which light is directed are in positions corresponding to the left and right eyes of the observer. In this manner, the output directionality of the waveguide 1 may be achieved to correspond with the viewer position so that a first image may be directed to the observer's right eye in a first phase and directed to the observer's left eye in a second phase.

Thus a directional display apparatus may comprise a directional display device and a control system arranged to control the light sources 15a-n.

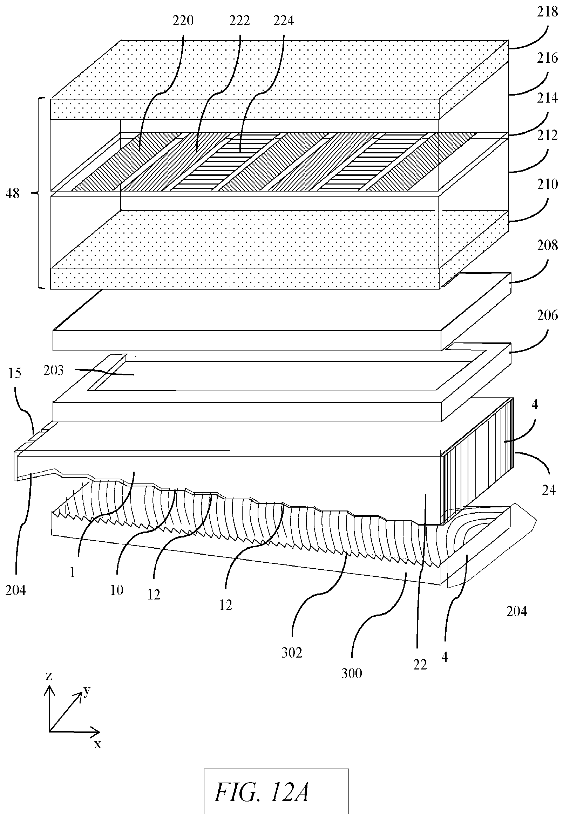

**FIGURE 12A** is a schematic diagram illustrating a perspective view of a directional display apparatus optical stack comprising a directional waveguide with light input at a side that is opposite a reflective side.

Reflective end 4 may be provided by a Fresnel mirror. Further taper region 204 may be arranged at the input to the waveguide 1 to increase input coupling efficiency from the light sources 15a-15n of the array of illuminator elements 15 and to increase illumination uniformity. Shading layer 206 with aperture 203 may be arranged to hide light scattering regions at the edge of the waveguide 1. Rear reflector 300 may comprise facets 302 that are curved and arranged to provide viewing windows from groups of optical windows provided by imaging light sources of the array 15 to the window plane. An optical stack 208 may comprise reflective polarizers, retarder layers and diffusers. Rear reflectors 300 and optical stack 208 are described further in US-2014/0240828A1.

Spatial light modulator 48 may comprise a liquid crystal display that may comprise an input polarizer 210, TFT glass substrate 212, liquid crystal layer 214, color filter glass substrate 216 and output polarizer 218. Red pixels 220, green pixels 222 and blue pixels 224 may be arranged in an array at the liquid crystal layer 214. White, yellow, additional green or other color pixels (not shown) may be further arranged in the liquid crystal layer to increase transmission efficiency, color gamut or perceived image resolution.

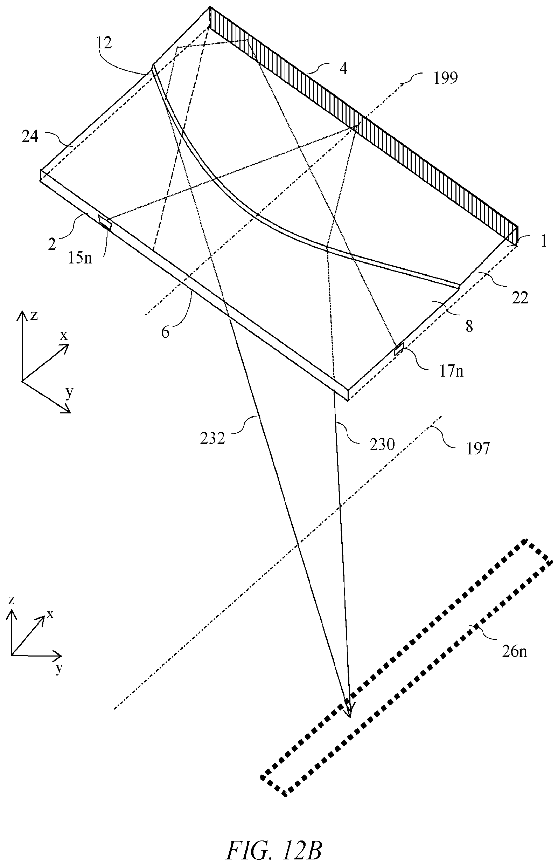

**FIGURE 12B** is a schematic diagram illustrating a perspective view of the formation of optical windows by a directional display apparatus comprising a directional waveguide with light input at a side that is opposite a reflective side. The input surface 2 may thus be an end of the waveguide 1 may be opposite to the reflective end.

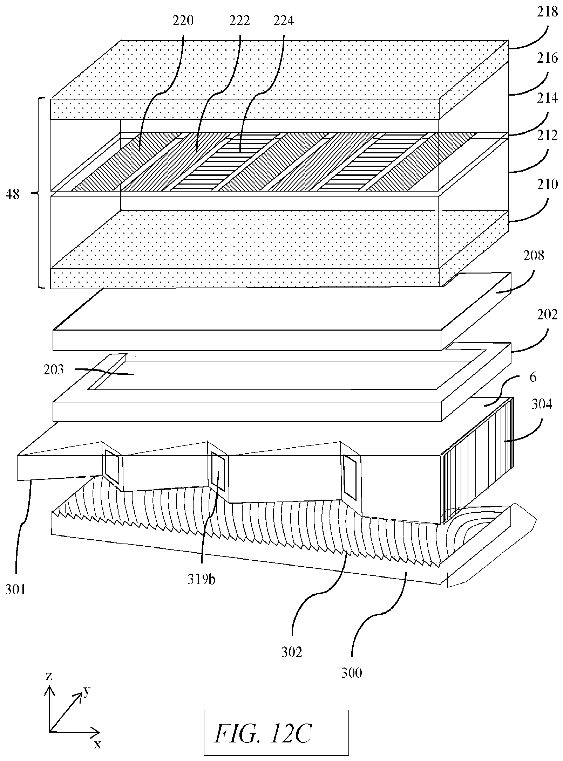

**FIGURE 12C** is a schematic diagram illustrating a perspective view of a directional display apparatus optical stack comprising a directional waveguide with light input at a side that is adjacent a reflective side as described elsewhere in US-2016/0349444A1. Waveguide 301 comprises input sides 322, 324 with aligned light sources 317a-n and 319a-n on respective sides. End 302 opposite reflective end 304 may be arranged to be absorbing or reflective to provide low levels of cross talk or increased efficiency respectively.

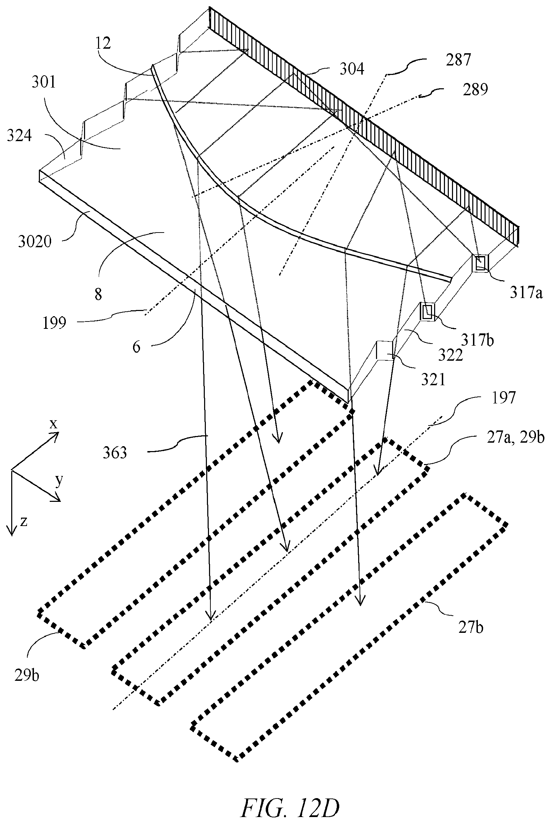

**FIGURE 12D** is a schematic diagram illustrating a perspective view of the formation of optical windows by a directional display apparatus comprising a directional waveguide with light input at a side that is adjacent a reflective side. Light sources 317a-n and 319a-n at input facets 321 are arranged to provide optical windows 27a-n and 29a-n respectively about an axis 197. Fresnel mirror 304 is arranged with first and second optical axes 287, 289. The input surface may thus be a side surface 322 of the waveguide 301 extending away from the reflective end 304 towards a thinner end 3020.

A directional backlight thus comprises a first guide surface 6 arranged to guide light by total internal reflection and the second guide surface 8 comprising a plurality of light extraction features 12 oriented to direct light guided along the waveguide 1, 301 in directions allowing exit through the first guide surface 6 as the output light and intermediate regions 10 between the light extraction features 12 that are arranged to guide light along the waveguide 1, 301.

Considering the arrangements of FIGURES 12A-D, the second guide surface 6 may have a stepped shape in which said light extraction features 12 are facets between the intermediate regions 10. The light extraction features 12 may have positive optical power in a direction between the side surfaces 22, 24 or 322, 324 of the waveguide 1, 301 that extend between the first and second guide surfaces 6,8. The reflective end 4, 304 may have positive optical power in a direction extending between the sides 22, 24 or 322, 324 of the reflective end 4, 304 that extend between the first and second guide surfaces 6, 8.

Thus all sides 2, 4, 6, 8, 22, 24 provide reflections to achieve uniform illumination and low cross talk in privacy mode of operation. If features are applied to many areas of the surface then non-uniformities may be provided due to the spatial location of the waveguide extraction loss at the features.

Thus a directional display device may comprise a waveguide wherein the input surface 322 is a surface of a side of the waveguide 1 extending away from the reflective end 304.

It would be desirable to optimize the efficiency of polarization recirculation in a directional display apparatus. The present disclosure relates to the propagation of polarized light in a directional backlight.

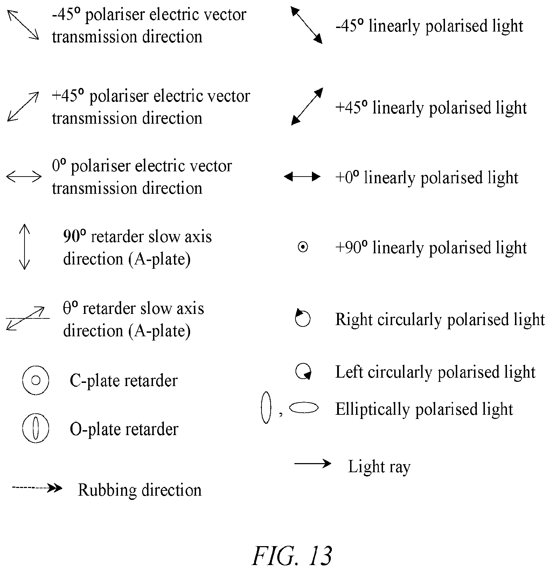

**FIGURE 13** is a key illustrating symbols that illustrate orientation of polarizer electric vectors, retarder slow axes, and polarization states, and direction of light ray propagation for other figures in the present disclosure unless otherwise stated. Said symbols are located on or adjacent to respective rays in the figures herein.

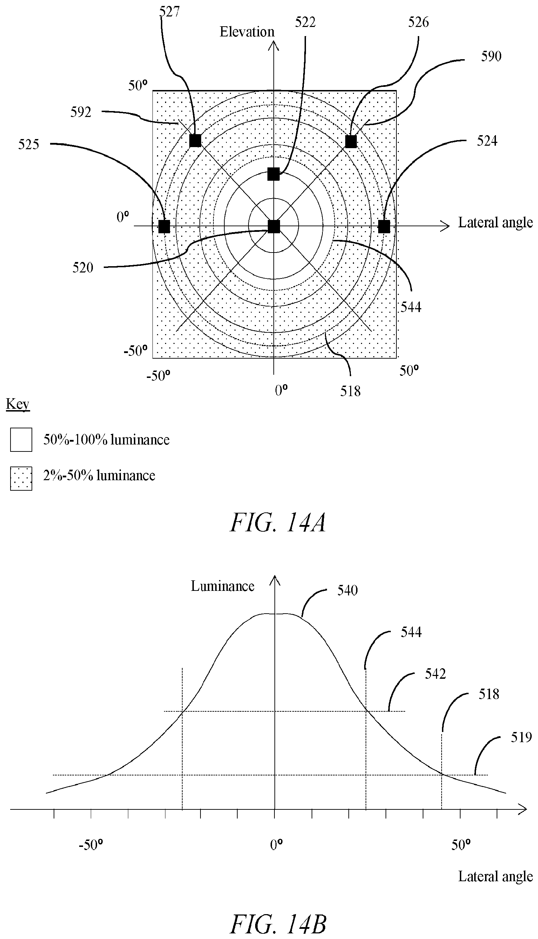

**FIGURE 14A** is a schematic luminance field-of-view graph illustrating variation in luminance of a wide angle mode of operation of a directional display. Isoluminance contours 518, 544 may be substantially rotationally symmetric in polar coordinates.

Angular viewing location 520 represents a desirable on-axis viewing direction with zero degrees elevation and zero degrees lateral angle.

Angular viewing location 522 represents a desirable off-axis viewing direction with 20 degrees elevation and zero degrees lateral angle. Such a viewing location may be provided for rotation of the display about a horizontal axis for a centrally located user.

Angular viewing locations 524, 525 represent occasionally desirable off-axis viewing direction with zero degrees elevation and +/-45 degrees lateral angle. In wide angle mode such viewing locations may be occupied by desired users so that relatively high luminance is desirable.

Angular viewing locations 526, 527 represent occasionally desirable off-axis viewing directions that have a 45 degrees off-axis location along respective axes 590, 592 at 45 degrees to the lateral angle and elevation directions.

**FIGURE 14B** is a schematic graph illustrating the lateral variation of luminance with viewing angle of a wide angle mode of operation of a directional display. Thus the luminance profile 540 at lateral angle location 544 may have half the peak luminance as illustrated by line 542. The full width half maximum of the lateral angle luminance profile 540 may thus in this illustrative example be 50 degrees. Further the luminance profile may have greater than 10% of peak luminance at lateral angle location 518 of 45 degrees as illustrated by the line 519.

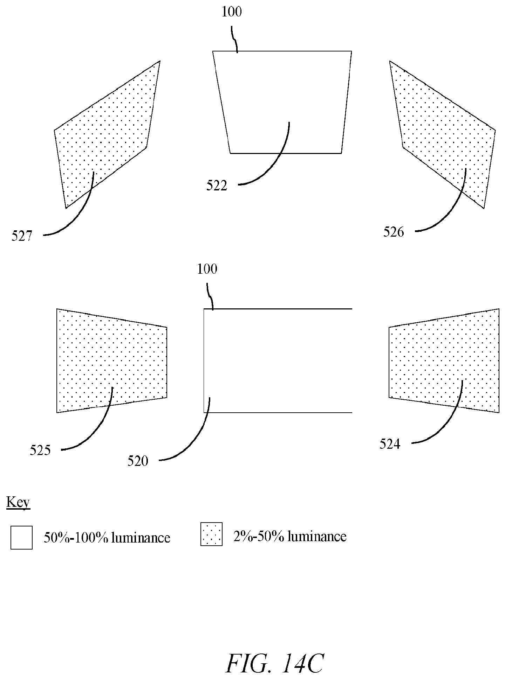

**FIGURE 14C** is a schematic diagram illustrating variation of display luminance with viewing angle of a wide angle mode of operation of a directional display. The appearance of the display 100 when a uniform white image is provided on the spatial light modulator in wide angle mode at viewing angular locations 520, 522 is thus provided so that from each respective viewing angular location, the display luminance is greater than 50% of the peak luminance. Said peak luminance may be provided at the center of the display when viewed from location 520.

Advantageously the display may be conveniently rotated about a horizontal axis while maintaining comfortable luminance for a viewer that is on-axis in the lateral direction (0 degrees lateral angle).

Further the angular viewing locations 524, 526, 525, 527 as illustrated in FIGURE 14A may have a luminance between 2% and 50%.

A display may thus be provided with a luminance field-of-view distribution such that the display can conveniently be seen from a wide range of viewing angles.

The angular luminance profile of a display operating in privacy mode of operation will now be described.

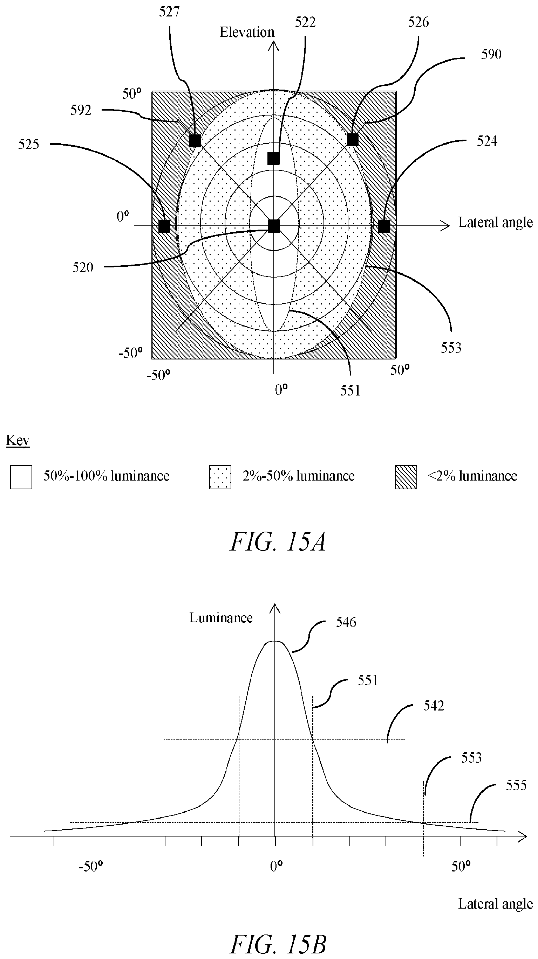

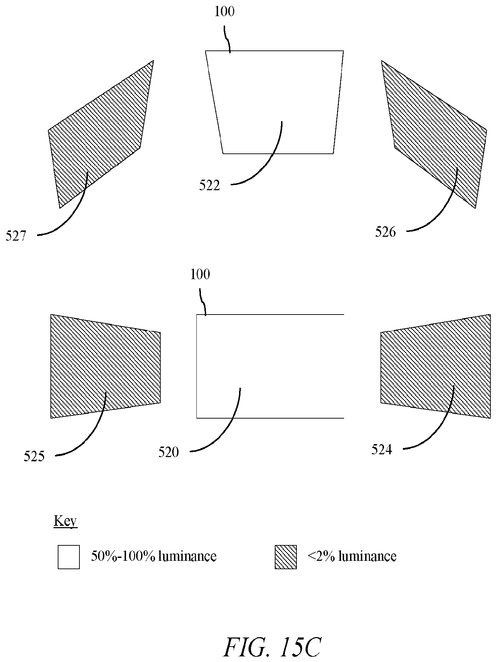

**FIGURE 15A** is a schematic luminance field-of-view graph illustrating variation in luminance of a privacy mode of operation of a directional display; **FIGURE 15B** is a schematic graph illustrating variation of luminance with viewing angle of a privacy mode of operation of a directional display; and **FIGURE 15C** is a schematic diagram illustrating variation of display luminance with viewing angle of a privacy mode of operation of a directional display.

Desirable and undesirable viewing locations in a privacy mode of operation will now be described with reference to snoopers - that is those observers undesirably attempting to view an image on the display while the display is operating in privacy mode.

Angular viewing location 520, 522 represent typically desirable viewing directions for a primary display user operating the display in privacy mode.

Angular viewing locations 524, 525 represent undesirable off-axis viewing directions for a snooper located laterally with respect to the display. It is desirable to reduce display luminance in privacy mode of operation to such snoopers.

Angular viewing locations 526, 527 represent further undesirable and common off-axis viewing directions for snoopers.

In privacy mode of operation, the lateral luminance profile may be adjusted by control of the directional backlight 101 so that rotationally asymmetric locus 551 for 50% luminance and rotationally asymmetric locus 553 for 2% luminance is provided.

At angular viewing location 524 of 45 degrees lateral angle and 0 degrees elevation the luminance may be less than for example 2%, preferably less than 1.5% and more preferably less than 1% of the peak luminance of the profile 546. In the present illustrative example, the relative luminance 555 at 40 degrees lateral angle and 0 degrees elevation may be 2%. A display may thus be provided with an angular luminance profile to achieve low luminance for laterally off-axis viewers, achieving privacy operation.

Thus angular viewing locations 520, 522 may see luminance greater than 50%. Advantageously a comfortable display appearance may be provided in privacy mode of operation for rotations of the display about a horizontal axis.

At angular viewing locations 524, 525 that have a zero degree elevation and angular viewing locations 526, 527 that have a 45 degrees off-axis location along respective axes 590, 592 at 45 degrees to the lateral angle and elevation directions, luminance of less than 2% may be provided. Advantageously the display may have limited visibility for such viewing locations.

Luminance levels of 2% may undesirably provide visibility of information on display content. It would be desirable to further reduce image visibility for snooper locations in upper quadrant locations 526, 527, for example to desirably reduce the privacy level to less than 1%.

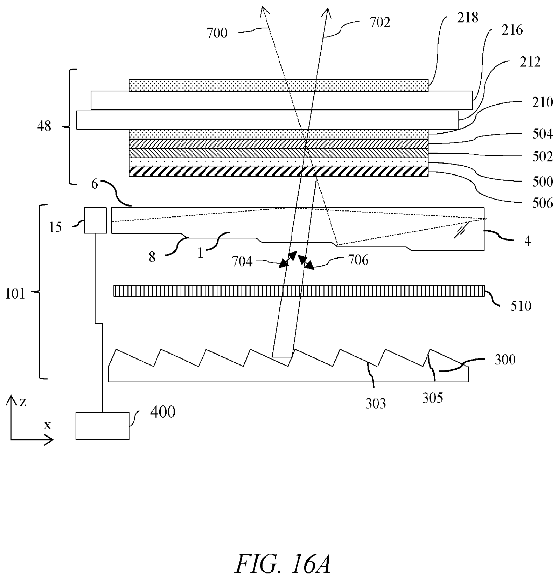

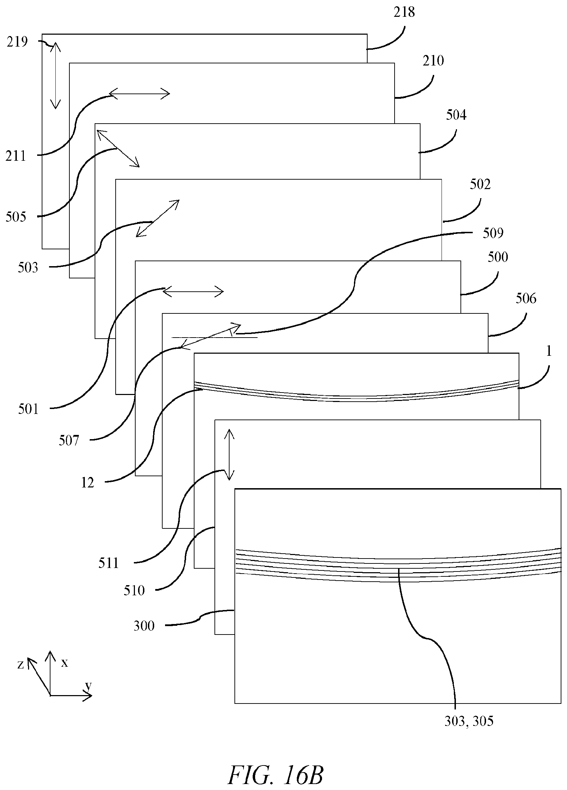

**FIGURE 16A** is a schematic diagram illustrating in side view a directional display comprising a directional waveguide and crossed A-plates 502, 504 arranged between a spatial light modulator 48 and a directional backlight 101 and **FIGURE 16B** is a schematic diagram illustrating in perspective front view orientation of retarder and polariser axes for the optical stack of a directional display comprising a directional waveguide and crossed A-plates 502, 504.

A directional display thus comprises a directional backlight 101 and a transmissive spatial light modulator 48 arranged to receive output light from the backlight 101. The directional backlight 101 may comprise a rear reflector 300 comprising reflective facets 303, 305 as described in US-2014/0240828A1 and in US-2017/0339398A1. A spacer layer 510 may comprise a retarder as described inUS-2018/196275A1.

Considering further FIGURES 12A, 12B and 16A, the backlight may further comprise an array of light sources 15; a waveguide 1 arranged to receive input light from the light sources 15 at different input positions and comprising first and second, opposed guide surfaces 6,8 for guiding the input light along the waveguide 1, sides 22, 24 that extend between the first and second guide surfaces 6,8 and a reflective end 4 for reflecting the input light back along the waveguide 1, wherein the second guide surface 8 is arranged to deflect the reflected input light through the first guide 6 surface as output light, and the waveguide 1 is arranged to image the light sources 15 in a lateral direction between the sides of the waveguide 1 so that the output light from the light sources is directed into respective optical windows 26 in output directions that are distributed in dependence on input positions of the light sources 15.

The first guide surface 6 may be arranged to guide light by total internal reflection, and the second guide surface 8 may comprise light extraction features 12 and intermediate regions 10 between the light extraction features 12, the light extraction features 12 being oriented to deflect the reflected input light through the first guide 6 surface as output light and the intermediate regions 10 being arranged to direct light through the waveguide 1 without extracting it.

The light extraction features may be curved and have positive optical power in the lateral direction between sides 22, 24 of the waveguide 1 that extend between the first and second guide surfaces 6, 8. The reflective end 4 may have positive optical power in the lateral direction extending between sides 22, 24 of the waveguide 1 that extend between the first and second guide surfaces 6, 8. The waveguide 1 may comprise an input end 2 opposite to the reflective end 4 and the light sources 15 may be arranged to input light into the waveguide 1 through the input end 2. As illustrated in FIGURE 12C the light sources 15 may be arranged to input light into the waveguide 1 through the sides 22, 24 of the waveguide.

An input polariser 210 is arranged on the input side of the spatial light modulator 48 between the backlight 101 and the spatial light modulator 48 and an output polariser 218 is arranged on the output side of the spatial light modulator 48.

An additional polariser 500 is arranged on the input side of the input polariser 210 between the input polariser 210 and the backlight 101. The additional polariser may be a reflective polariser such as DBEF^{™} from 3M Corporation.

Thus the display device may comprise an additional polariser 500 that is a reflective polariser arranged on the input side of the input polariser 210 and is arranged to transmit a first polarisation component 704 of the output light rays 700 from the waveguide 1 and to reflect a second polarisation component 706 of the output light as light rays 702 having a polarisation state orthogonal to the polarisation state of first polarisation component 704, as rejected light; and a rear reflector 300 disposed behind the second guide surface 8 of the waveguide 1 and arranged to reflect the rejected light for supply back to the spatial light modulator 48, the rear reflector 300 comprising a linear array of pairs of reflective corner facets 303, 305 extending in a predetermined direction perpendicular to the normal to spatial light modulator 48 so that the rear reflector 300 converts the polarisation of the rejected light as light rays 702 that has a double reflection from a pair of corner facets into the polarisation of the first polarisation component 704. As illustrated further in FIGURE 16B, the pairs of reflective corner facets 303, 305 may be curved and have optical power in the lateral direction.

A further correction retarder 506 may be arranged to rotate the polarisation component 706 that is reflected by the reflective polariser 500. In the illustrative example, the slow optical axis of the retarder 506 may be at an angle of 22.5 degrees to the electric vector transmission direction of the reflective additional polariser 500 that may be at 0 degree with respect to the lateral direction. Such an arrangement may for example comprise an in-plane switching LCD (IPS-LCD) wherein the output polariser 218 is provided at 90 degrees to the lateral direction. In examples comprising a twisted nematic LCD (TN-LCD), the correction retarder 506 may be omitted. Advantageously the polarisation component 706 that is reflected by the reflective polariser is incident at 45 degrees to the lateral direction onto the elongate facets 303, 305 of the rear reflector and is rotated to polarisation component 704 that is transmitted through the reflective additional polariser 500 and input polariser 210.

Thus the additional polariser 500 may be arranged to provide increased display luminance by means of recycling of light from the directional backlight 101 and the rear reflector 300. Advantageously display luminance may be increased in comparison to examples wherein the additional polariser 500 is an absorbing polariser.

As illustrated further in FIGURE 11, the display apparatus may further comprise a display device according to any one of the preceding claims; and a control system 400 arranged to control the light sources 15. Advantageously a display may be provided that may be arranged to switch between a wide angle mode and a privacy mode.

The modification of angular privacy performance of the display will now be described further.

At least one retarder that may be a pair of crossed A-plates 502, 504 is arranged between the additional polariser 500 and the input polariser 210. In the example of FIGURE 16A, the additional polariser 500 is arranged on the input side of the input polariser 210 and said pair of crossed A-plates 502, 504 is arranged between the additional polariser 500 and the input polariser 210. In the present examples the at least one retarder may be one of a pair of crossed A-plates 502, 504 or a C-plate 560 as will be described elsewhere herein.

The operation of the display of FIGURES 16A-B will now be described with respect to the angular luminance viewing characteristics of the display.

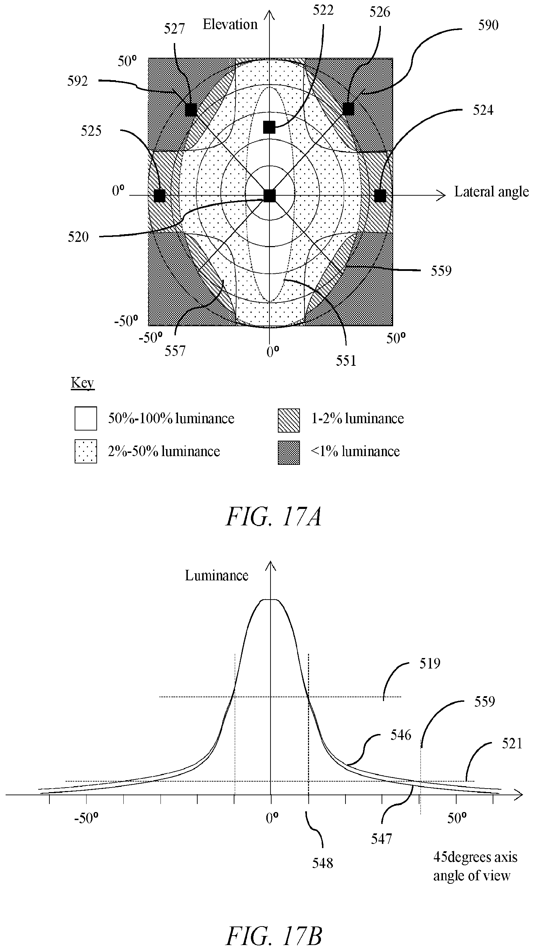

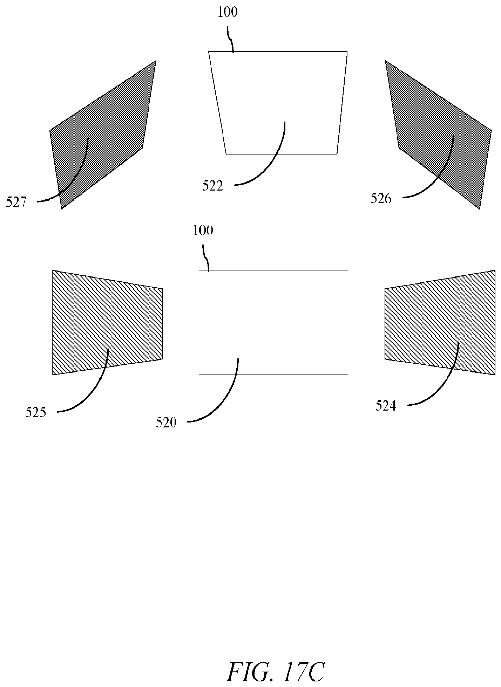

**FIGURE 17A** is a schematic luminance field-of-view graph illustrating variation in luminance of the optical stack of FIGURE 16B in a privacy mode of operation; **FIGURE 17B** is a schematic graph illustrating variation of luminance with viewing angle of a privacy mode of operation of a directional display; and **FIGURE 17C** is a schematic diagram illustrating the variation of display luminance with viewing angle of a privacy mode of operation of a directional display comprising the optical stack of FIGURE 16B.

In the present disclosure, the coordinate of a location in polar space is described as a polar coordinate with a lateral angle that refers to the angle in the lateral direction (y-axis), and elevation that refers to the angle in the vertical direction (x-axis). These terms provide a coordinate in a luminance field-of-view graph as shown in FIGURE 17A. Positive and negative lateral angles correspond to viewing of the display from the right and left hand side respectively; and positive and negative elevations correspond to viewing of the display from above or below respectively. The description of polar coordinates is not here in terms of polar angle (tilt from a normal direction) or azimuthal angle (rotational coordinate).

Crossed A-plates 502, 504 and additional polariser 500 may be arranged to provide reduced luminance regions 557 in viewing quadrants of the display. The luminance regions 557 are regions of reduced luminance in angular regions with non-zero lateral angle and elevation. The luminance quadrants may be arranged to be symmetric about the 45 degree axes 590, 592 of the luminance field-of-view profile, for example to advantageously reduce luminance to observer angular locations 526, 527.

As illustrated in FIGURE 17B, along the 45 degree axes of the luminance field-of-view graphs, profile 547 may be provided that may have reduced luminance at locus 559 in comparison to the profile 546 of FIGURE 15B with luminance 521.

Advantageously for snoopers 526, 527 in upper viewing quadrants luminance of undesirably outputted light is reduced. Further, as will be described herein the luminance of the head-on angular viewing locations 520 and off-axis viewing locations 522, 524, 525 may be minimally reduced. Thus as illustrated in FIGURE 17C the privacy performance of the display may be increased for snoopers at angular viewing locations 526, 527, while not reducing display efficiency for the desirable viewing locations.

In an illustrative example, the luminance of the display at viewing locations 526, 527 may be reduced by 50% so that the privacy level may be reduced from 2% to 1%. In operation, it is the experience of the inventors that such a difference in perceived luminance provides an effective increase in privacy performance of the display.

The performance of the display of FIGURE 16A in wide angle mode will now be described.

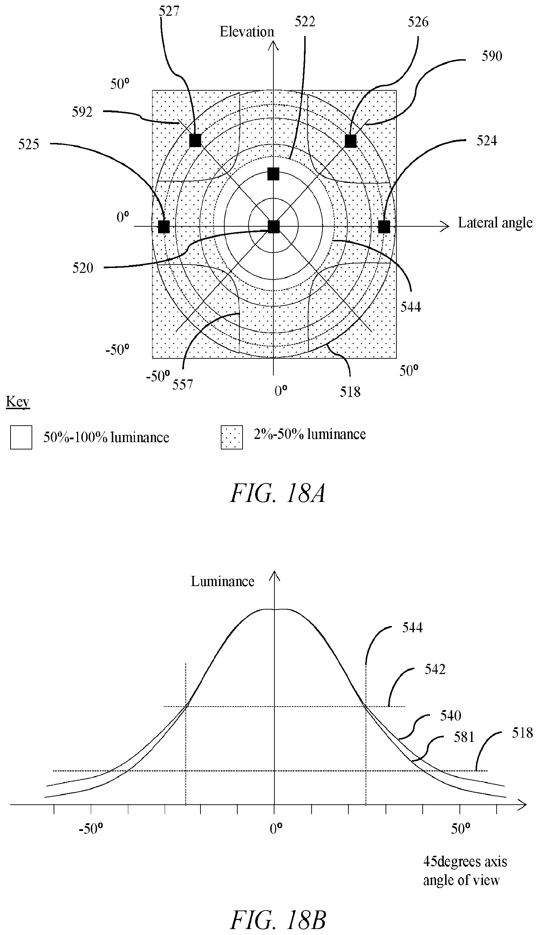

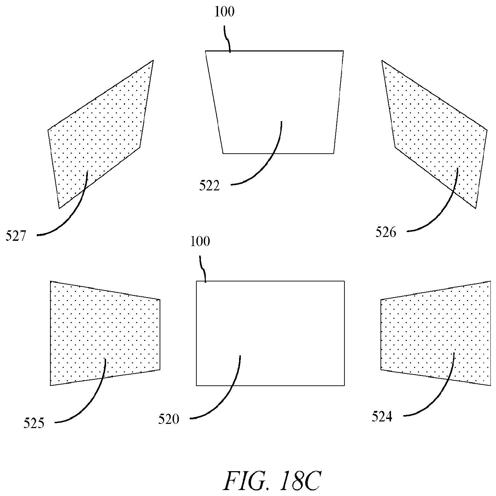

**FIGURE 18A** is a schematic luminance field-of-view graph illustrating variation in luminance of the optical stack of FIGURE 16B in a wide angle mode of operation; **FIGURE 18B** is a schematic graph illustrating variation of luminance with viewing angle of a wide angle mode of operation of a directional display; and **FIGURE 18C** is a schematic diagram illustrating the variation of display luminance with viewing angle of a wide angle mode of operation of a directional display comprising the optical stack of FIGURE 16B.

Thus the luminance in quadrants defined by locii 557 may be reduced by a similar proportion for a given polar angular location to that illustrated in FIGURE 17A. The profile 581 along the 45 degree polar directions 590, 592 may advantageously achieve a small reduction of full width half maximum width. As the luminance in the upper quadrants may be substantially higher than the privacy mode of operation, the display may still be clearly visible to users in angular viewing locations 526, 527. Further as will be described, the luminance may be substantially unaltered in lateral (zero elevation) and vertical (zero lateral angle) directions which are more common viewing locations for display users in wide angle mode.

Advantageously the wide angle mode performance may have a low impact for conventional display use.

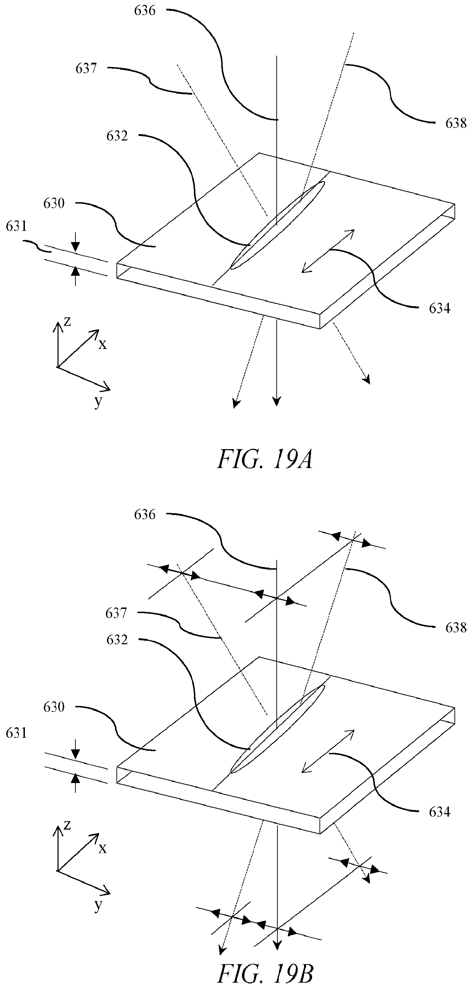

**FIGURE 19A** is a schematic diagram illustrating in perspective view illumination of a retarder layer by off-axis light. Correction retarder 630 may comprise birefringent material, represented by refractive index ellipsoid 632 with slow axis direction 634 at 0 degrees to the x-axis, and have a thickness 631. Normal light rays 636 propagate so that the path length in the material is the same as the thickness 631. Light rays 637 are in the y-z plane have an increased path length; however the birefringence of the material is substantially the same as the rays 636. By way of comparison light rays 638 that are in the x-z plane have an increased path length in the birefringent material and further the birefringence is different to the normal ray 636.

The retardance of the retarder 630 is thus dependent on the angle of incidence of the respective ray, and also the plane of incidence, that is rays 638 in the x-z will have a retardance different from the normal rays 636 and the rays 637 in the y-z plane.

The interaction of polarized light with the retarder 630 will now be described. To distinguish from the first and second polarization components during operation in a directional backlight 101, the following explanation will refer to third and fourth polarization components.

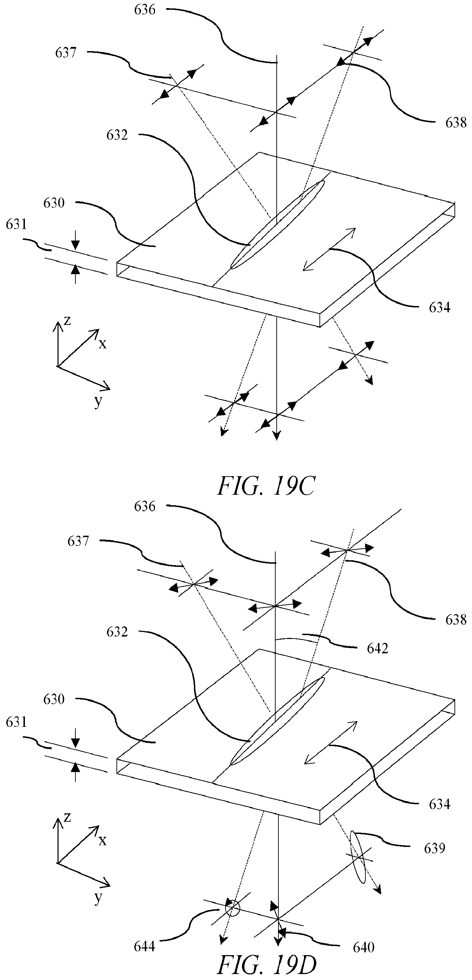

**FIGURE 19B** is a schematic diagram illustrating in perspective view illumination of a retarder layer by off-axis light of a third linear polarization state at 90 degrees to the x-axis and **FIGURE 19C** is a schematic diagram illustrating in perspective view illumination of a retarder layer by off-axis light of a fourth linear polarization state at 0 degrees to the x-axis. In such arrangements, the incident linear polarization states are aligned to the optical axes of the birefringent material, represented by ellipse 632. Consequently, no phase difference between the third and fourth orthogonal polarization components is provided, and there is no resultant change of the polarization state of the linearly polarized input for each ray 636, 637, 638.

**FIGURE 19D** is a schematic diagram illustrating in perspective view illumination of a retarder 630 layer by off-axis light of a linear polarization state at 45 degrees. The linear polarization state may be resolved into third and fourth polarization components that are respectively orthogonal and parallel to slow axis 634 direction. The retarder thickness 631 and material retardance represented by refractive index ellipsoid 632 may provide a net effect of relatively shifting the phase of the third and fourth polarization components incident thereon in a normal direction represented by ray 636 by half a wavelength, for a design wavelength. The design wavelength may for example be in the range of 500 to 550 nm.

At the design wavelength and for light propagating normally along ray 636 then the output polarization may be rotated by 90 degrees to a linear polarization state 640 at -45 degrees. Light propagating along ray 637 may see a phase difference that is similar but not identical to the phase difference along ray 637 due to the change in thickness, and thus an elliptical polarization state 639 may be output which may have a major axis similar to the linear polarization axis of the output light for ray 636.

By way of contrast, the phase difference for the incident linear polarization state along ray 638 may be significantly different, in particular a lower phase difference may be provided. Such phase difference may provide an output polarization state 644 that is substantially circular at a given inclination angle 642.

In the present examples, slow axis typically refers to the orientation orthogonal to the normal direction in which linearly polarized light has an electric vector direction parallel to the slow axis travels at the slowest speed. The slow axis direction is the direction of this light with the highest refractive index at the design wavelength.

For positive dielectric anisotropy uniaxial birefringent materials the slow axis direction is the extraordinary axis of the birefringent material. The ordinary axes in such materials are typically parallel to the normal direction, and orthogonal to the normal direction and the slow axis.

The terms half a wavelength and quarter a wavelength refer to the operation of a retarder for a design wavelength λ₀ that may typically be between 500nm and 570nm. The retarder provides a phase shift between two perpendicular polarization components of the light wave incident thereon and is characterized by the amount of relative phase, Γ, that it imparts on the two polarization components; which is related to the birefringence Δn and the thickness d of the retarder by $Γ = 2 . π . Δn . d / {λ}_{0}$ eqn. 1
where Δn is defined as the difference between the extraordinary and the ordinary index of refraction, i.e. $Δn = {n}_{e} - {n}_{o}$ eqn. 2

For a half wave retarder, the relationship between d, Δn, and λ₀ is chosen so that the phase shift between polarization components is Γ = π. For a quarter wave retarder, the relationship between d, Δn, and λ₀ is chosen so that the phase shift between polarization components is Γ = π/2.

The term half wave retarder herein typically refers to light propagating normal to the retarder and normal to the spatial light modulator.

In the present disclosure an 'A-plate' refers to an optical retarder utilizing a layer of birefringent material with its optical axis parallel to the plane of the layer. The plane of the retarders refers to the slow axis of the retarders extend in a plane, that is the x-y plane.

A 'positive A-plate' refers to positively birefringent A-plates, i.e. A-plates with a positive Δn.

In the present disclosure a 'C-plate' refers to an optical retarder utilizing a layer of birefringent material with its optical axis perpendicular to the plane of the layer. A 'positive C-plate' refers to positively birefringent C-plates, i.e. C-plates with a positive Δn.

In the present disclosure an 'O-plate' refers to an optical retarder utilizing a layer of birefringent material with its optical axis having a component parallel to the plane of the layer and a component perpendicular to the plane of the layer. A 'positive O-plate' refers to positively birefringent O-plates, i.e. O-plates with a positive Δn.

Achromatic retarders may be provided wherein the material of the retarder is provided with an optical thickness Δn . *d* that varies with wavelength λ as $Δn . d / λ = κ$ eqn. 3
where κ is substantially a constant. Examples of suitable materials include modified polycarbonates from Teijin Films. Achromatic retarders may be provided in the present examples to advantageously minimise color changes between polar angular viewing directions which have low luminance reduction and polar angular viewing directions which have increased luminance reductions as will be described below.

Various other terms used in the present disclosure related to retarders and to liquid crystals will now be described.

Homogeneous alignment refers to the alignment of liquid crystals in a switchable liquid crystal displays where molecules align substantially parallel to a substrate. Homogeneous alignment is sometimes referred to as planar alignment. Homogeneous alignment may typically be provided with a small pre-tilt such as 2 degrees, so that the molecules at the surfaces of the alignment layers of the liquid crystal cell are slightly inclined as will be described below. Pretilt is arranged to minimise degeneracies in switching of cells.

In the present disclosure, homeotropic alignment is the state in which a rod-like liquid crystalline molecules aligns substantially perpendicularly to the substrate. In discotic liquid crystals homeotropic alignment is defined as the state in which an axis of the column structure, which is formed by disc-like liquid crystalline molecules, aligns perpendicularly to a surface. In homeotropic alignment, pretilt is the tilt angle of the molecules that are close to the alignment layer and is typically close to 90 degrees and for example may be 88 degrees.

Liquid crystal molecules with positive dielectric anisotropy are switched from a homogeneous alignment (such as an A-plate retarder orientation) to a homeotropic alignment (such as a C-plate or O-plate retarder orientation) by means of an applied electric field.

Liquid crystal molecules with negative dielectric anisotropy are switched from a homeotropic alignment (such as a C-plate or O-plate retarder orientation) to a homogeneous alignment (such as an A-plate retarder orientation) by means of an applied electric field.

Rod like molecules have a positive birefringence so that nₑ > nₒ as described in equation 2. Discotic molecules have negative birefringence so that nₑ < nₒ.

Positive retarders such as A-plates, positive O-plates and positive C-plates may typically be provided by stretched films or rod like liquid crystal molecules. Negative retarders such as negative C-plates may be provided by stretched films or discotic like liquid crystal molecules.

Parallel liquid crystal cell alignment refers to the alignment direction of homogeneous alignment layers being parallel or more typically antiparallel. In the case of pretilted homeotropic alignment, the alignment layers may have components that are substantially parallel or antiparallel. Hybrid aligned liquid crystal cells may have one homogeneous alignment layer and one homeotropic alignment layer. Twisted liquid crystal cells may be provided by alignment layers that do not have parallel alignment, for example oriented at 90 degrees to each other.

Crossed A-plates, C-plates and O-plates are known retarder elements for use in LCD to compensate for contrast degradations for off-axis viewing locations, for example in EP-1726987B2.

Thus in prior art arrangements crossed A-plates, C-plates and O-plates may be provided between an input polariser and an output polariser to operate in cooperation with a liquid crystal layer that is also arranged between the input and output polarisers. In such prior art arrangements, said retarders are arranged to provide compensation for the variation in birefringence of liquid crystal molecules with viewing angles. Such compensation is arranged to provide increased display contrast for off-axis viewing locations. The contrast viewing angle properties of the display may thus be increased.

In the present examples crossed A-plates, C-plates or O-plates are provide between an additional polariser 500 and an input polariser 210. Such polariser and retarder arrangements do not change the contrast of the display apparatus for off-axis viewing locations and further reduce off-axis luminance that in prior art arrangements would be undesirable. Further such retarder layers do not operate in cooperation with liquid crystal material in the transmissive spatial light modulator 48.

The operation of FIGURE 16B will now be described for on-axis light with reference to Poincare sphere illustrations.

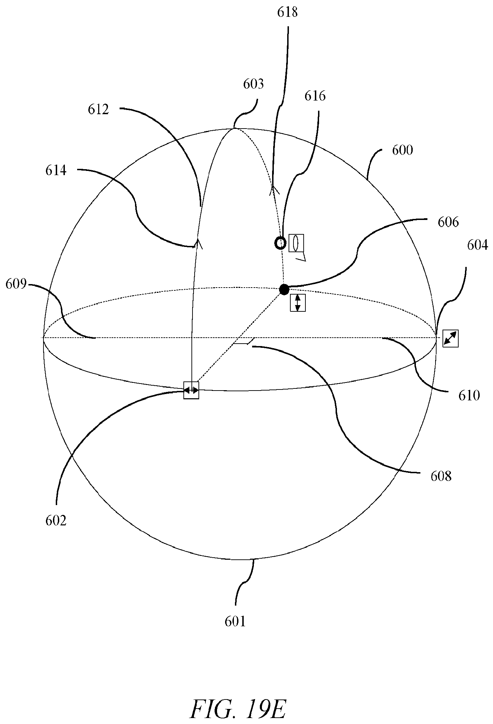

**FIGURE 19E** is a schematic diagram illustrating in perspective front view a Poincare sphere 600 representation of on-axis polarisation control for crossed A-plate retarders for example as illustrated in FIGURE 16B in the example of a half waveplate for the A-plates. The Poincare sphere may represent general elliptical polarisation states, with horizontal polarisation state location 602, +45 degrees linear polarisation state location 604, vertical polarisation state location 606 and circular polarisation state locations 601, 603. In operation, the input horizontal polarisation state 602 is rotated in direction of arrow 614 by the first A-plate 502 about an axis 610 at 90 degrees in the Poincare sphere, representing a 45 degrees orientation in real space to a polarisation state 606 for a first wavelength. If the retarder is dispersive, then the polarisation state 616 is provided for a second wavelength. Such polarisation state is elliptical, and thus provides reduced luminance if it were to be analysed, creating a chromatic output for the light from the first A-plate 502. The second A-plate with axis 609 rotates the polarisation states 606, 616 in the opposite direction as illustrated by arrow 618 so that the chromaticity of the A-plate 504 compensates for the chromaticity of the A-plate 502 and an achromatic polarisation state 602 is provided at the input polariser 210. Advantageously the chromaticity of the light for the viewing location 520 is the substantially same as for the input light.

The pair of retarders 502, 504 of FIGURE 16B each comprise a single A-plate. It may be desirable to provide further control of chromaticity in reduced luminance angular viewing locations. Composite retarders will now be described.

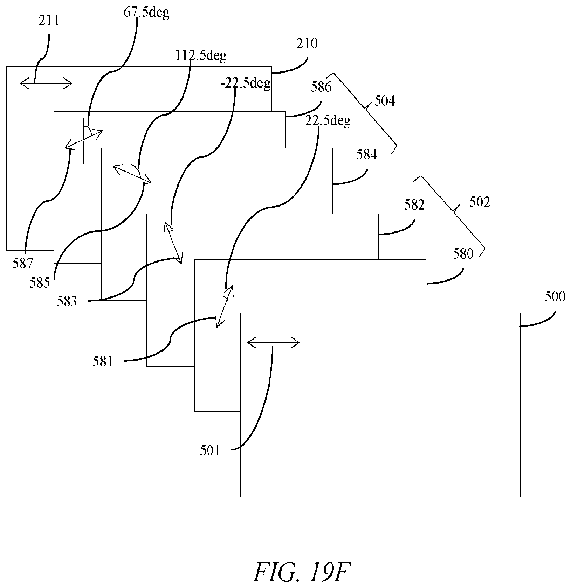

**FIGURE 19F** is a schematic diagram illustrating in perspective front view orientation of retarder axes for A-plate retarders comprising composite retarders for use in the optical stack of FIGURE 16B. The functions of A-plates 502, 504 may each be provided by two A-plates that are arranged at respective orientations as will be described. In an illustrative example, A-plate 502 may alternatively be provided by A-plates 580, 582 with retarder orientations 581, 583 of -22.5 degrees and +22.5 degrees. Further A-plate 504 may alternatively be provided by A-plates 584, 586 with retarder orientations 585, 587 of 67.5 degrees and +112.5 degrees. Thus A-plate 580 is crossed with A-plate 584 and A-plate 582 is crossed with A-plate 586.

Thus the pair of retarders 502, 504 each comprise plural A-plates 580, 582 and 584, 586 having respective slow axes 581, 583 and 585, 587 aligned at different angles from each other.

In the present examples "crossed", means that the slow axes are at an angle of 90°, or sufficiently close to 90° to function as crossed A-plates. Therefore, the slow axes of the pair of A-plates in FIGURE 19F that together function as a single A-plate are not "crossed" in this sense, although they do literally cross each other at angles of less than 90°.

The operation of FIGURE 19F will now be described for on-axis light with reference to Poincare sphere illustrations.

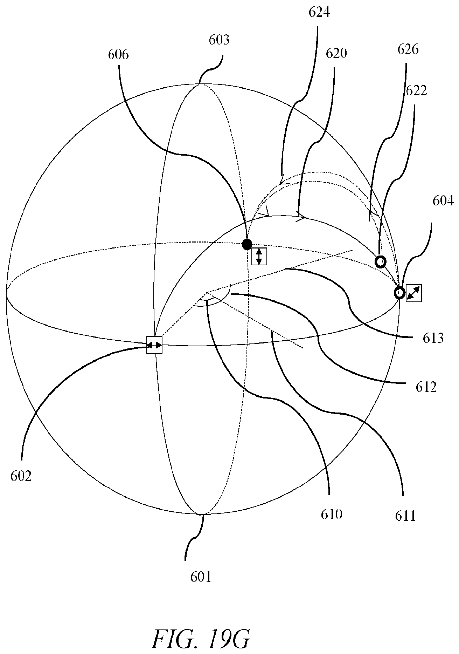

**FIGURE 19G** is a schematic diagram illustrating in perspective front view a Poincare sphere 600 representation of on-axis polarisation control for the first composite A-plate retarder pair 580, 582 of FIGURE 19F. In operation the first retarder 580 provides a polarisation state rotation in direction 620 about axis 611 at angle 610 to polarisation states 604, 622 for respective first and second wavelengths.

The second retarder 582 provides a further polarisation state rotation about axis 613 at angle 612 to state 606 in directions 624, 626 that is substantially achromatic because of the compensation in retardation for the two respective wavelengths corresponding to states 604, 622. Thus the composite retarder 580, 582 achieves a substantially achromatic linear polarisation state 606 for incidence onto the second composite retarder 584, 586.

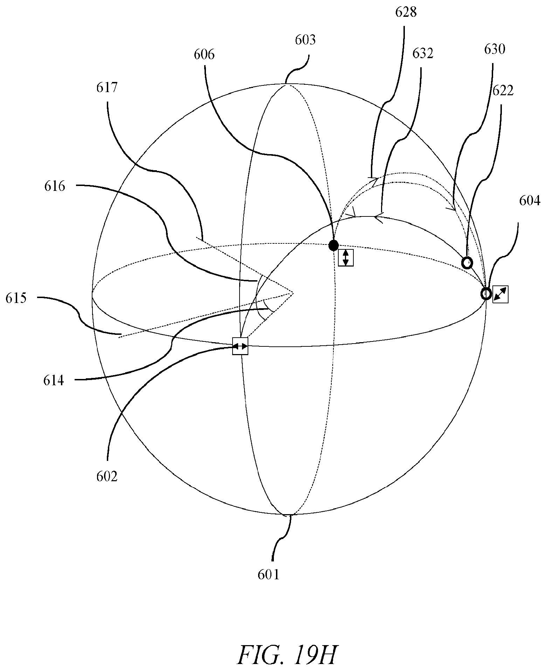

**FIGURE 19H** is a schematic diagram illustrating in perspective front view a Poincare sphere 600 representation of on-axis polarisation control for the second composite A-plate retarder pair 584, 586 of FIGURE 19F. Thus the linear polarisation state 606 from the first pair 580, 582 is rotated in directions 628, 630 about axis 615 at angle 614 and further rotated in direction 632 about the axis 617 at angle 616 to the horizontal linear polarisation state 602. Thus the composite retarders 580, 582, 584, 586 operate in a similar manner to the single A-plates of FIGURE 19E.

Thus advantageously composite retarders may be provided in place of the single retarders of the arrangement of FIGURE 16B. Advantageously further degrees of freedom for design of retarder stacks may be provided to achieve improved off-axis chromaticity compensation.

In the present examples, in cooperation with a privacy directional backlight 101 apparatus, desirably off-axis luminance is reduced to achieve improved privacy characteristics in certain viewing directions.

The angular luminance control of crossed A-plates 502, 504 between an additional polariser 500 and input polariser 210 will now be described for various off-axis illumination arrangements.

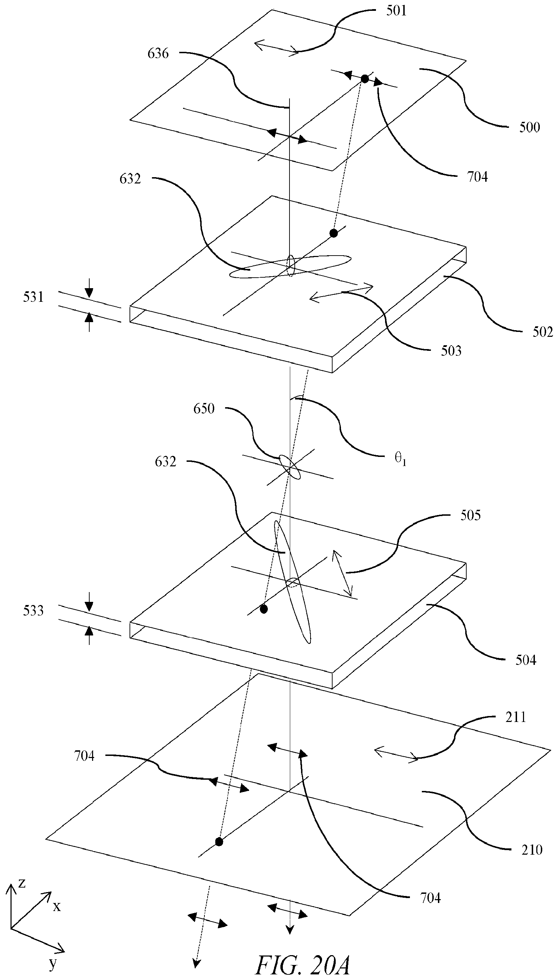

**FIGURE 20A** is a schematic diagram illustrating in perspective view illumination of crossed A-plate retarder layers by off-axis polarised light with a positive elevation. Linear polariser 500 with electric vector transmission direction 501 is used to provide a linear polarisation state 704 that is parallel to the lateral direction onto first A-plate 502 of the crossed A-plates 502, 504. The slow axis direction 503 is inclined at +45 degrees to the lateral direction. The retardance of the retarder 502 for the off-axis angle θ₁ in the positive elevation direction provides a resultant polarisation component 650 that is generally elliptical on output. Polarisation component 650 is incident onto the second A-plate 504 of the crossed A-plates 502, 504 that has a slow axis direction 505 that is orthogonal to the slow axis direction 503 of the first A-plate 502. In the plane of incidence of FIGURE 20A, the retardance of the second A-plate 504 for the off-axis angle θ₁ is equal and opposite to the retardance of the first A-plate 502. Thus a net zero retardation is provided for the incident polarisation component 704 and the output polarisation component is the same as the input polarisation component 704.

The output polarisation component is aligned to the electric vector transmission direction of the LCD input polariser 210, and thus is transmitted efficiently. Advantageously substantially no losses are provided for light rays that have zero lateral angle angular component so that full transmission efficiency is achieved.

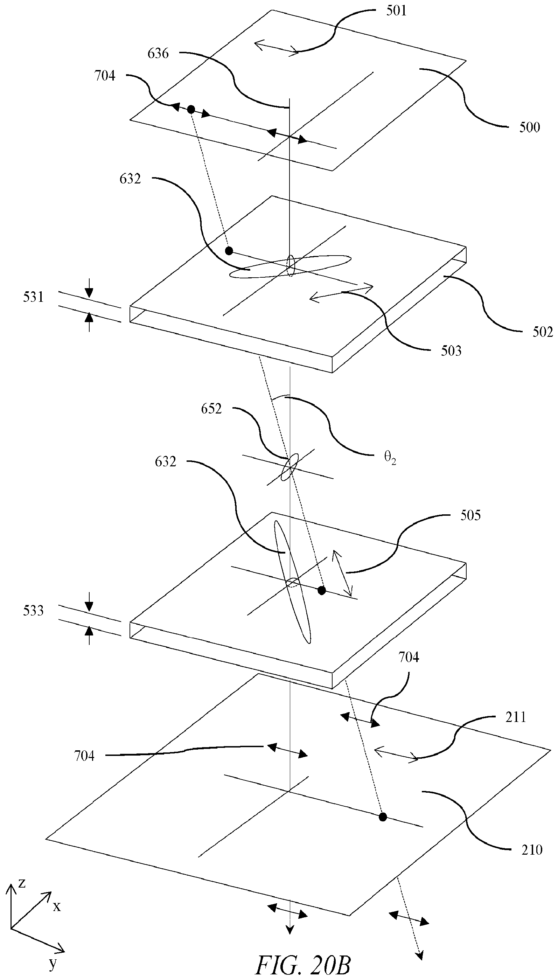

**FIGURE 20B** is a schematic diagram illustrating in perspective view illumination of crossed A-plate retarder layers by off-axis polarised light with a negative lateral angle. Thus input polarisation component is converted by the first A-plate 502 to an intermediate polarisation component 652 that is generally an elliptical polarisation state. The second A-plate 504 again provides an equal and opposite retardation to the first A-plate so that the output polarisation component is the same as the input polarisation component 704 and light is efficiently transmitted through the input polariser 210.

Thus the at least one retarder comprises a pair of retarders 502, 504 which have slow axes in the plane of the retarders 502, 504 that are crossed, that is the x-y plane in the present examples. The pair of retarders 502, 504 have slow axes 503, 505 that each extend at 45° with respect to an electric vector transmission direction that is parallel to the electric vector transmission of the input polariser 210 in the case that the additional polariser 500 is arranged on the input side of the input polariser 210 or is parallel to the electric vector transmission of the output polariser 218 in the case that the additional polariser 500 is arranged on the output side of the input polariser 210.

Advantageously substantially no losses are provided for light rays that have zero elevation angular component so that full transmission efficiency is achieved.

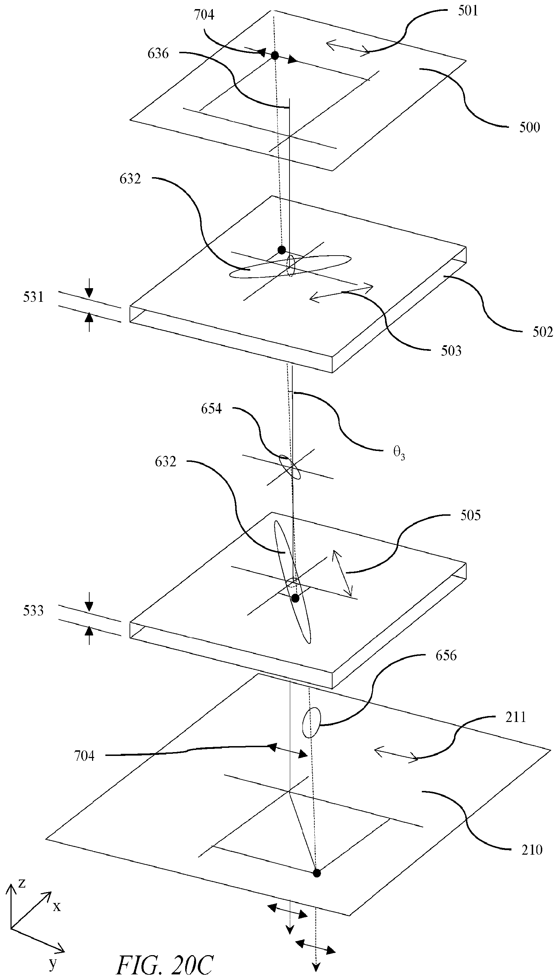

**FIGURE 20C** is a schematic diagram illustrating in perspective view illumination of crossed A-plate retarder layers by off-axis polarised light with a positive elevation and negative lateral angle. Polarisation component 704 is converted to an elliptical polarisation component 654 by first A-plate 502. In comparison to the arrangements of FIGURES 20A-B, the birefringent material of the second A-plate 504 is not aligned at a compensatory angle to the birefringent material of the first A-plate 502, and so a resultant elliptical component 656 is output from the second A-plate 504. Elliptical component 656 is analysed by input polariser 210 with reduced luminance in comparison to the input luminance of the first polarisation component 704.

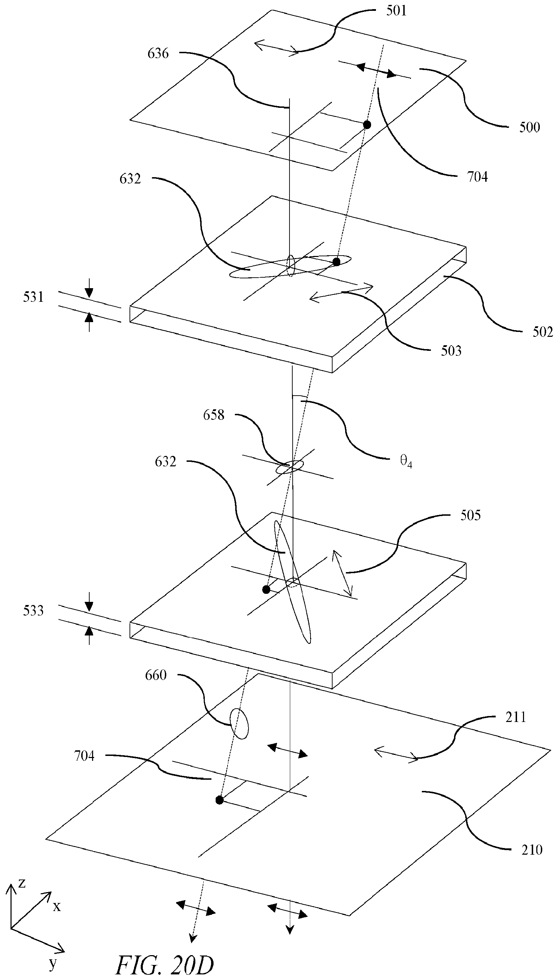

**FIGURE 20D** is a schematic diagram illustrating in perspective view illumination of crossed A-plate retarder layers by off-axis polarised light with a positive elevation and positive lateral angle. In a similar manner to that illustrated for FIGURE 20C, polarisation components 658 and 660 are provided by first and second A-plates 502, 504 as net retardance of first and second retarders does not provide compensation.

Thus luminance is reduced for light rays that have non-zero lateral angle and non-zero elevation components. Advantageously display privacy can be increased for snoopers that are arranged in viewing quadrants while luminous efficiency for primary display users is not substantially reduced.

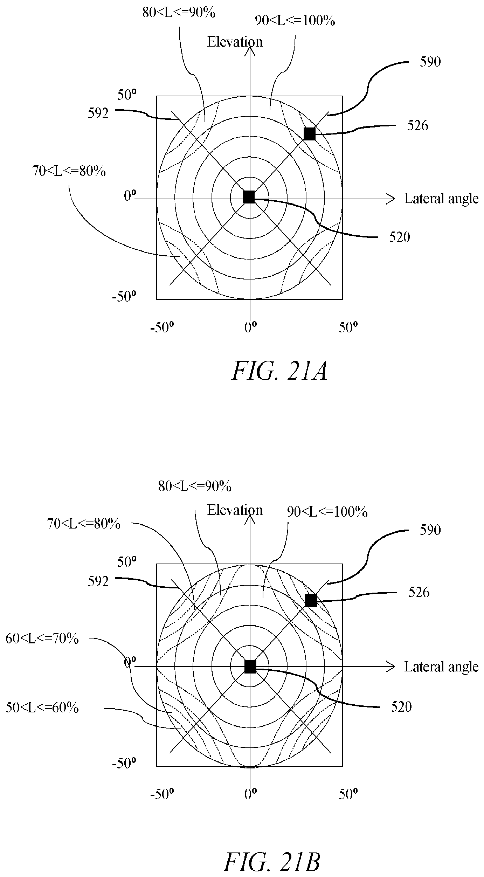

The simulated variation of transmitted luminance field of view will now be described with reference to **FIGURE 21A** which is a schematic luminance field-of-view graph illustrating variation in transmitted luminance of the optical stack of FIGURE 16B wherein the A-plates 502, 504 are quarter waveplates at a design wavelength λₒ for on-axis light rays; and **FIGURE 21B** is a schematic luminance field-of-view graph illustrating variation in transmitted luminance of the optical stack of FIGURE 16B wherein the retarder layers are half waveplates at a design wavelength λₒ for on-axis light rays.

FIGURE 21A illustrates iso-luminance contours in 10% steps such that the luminance for angular viewing location 526 is 80% of the peak luminance. By way of comparison, for the arrangement of FIGURE 21B, the luminance at angular viewing location 526 is approximately 65% of peak luminance. In both arrangements, head-on luminance for angular viewing location 520 is unchanged.

Advantageously, selection of retardance of the A-plates may be used to provide desirable reduction of luminance in viewing quadrants. Further, achromatic retarders may be used to minimise color changes with viewing angle.

It may be desirable to provide further reduction of luminance of a privacy display for off-axis angles that are vertically and horizontally oriented with respect to the display orientation.

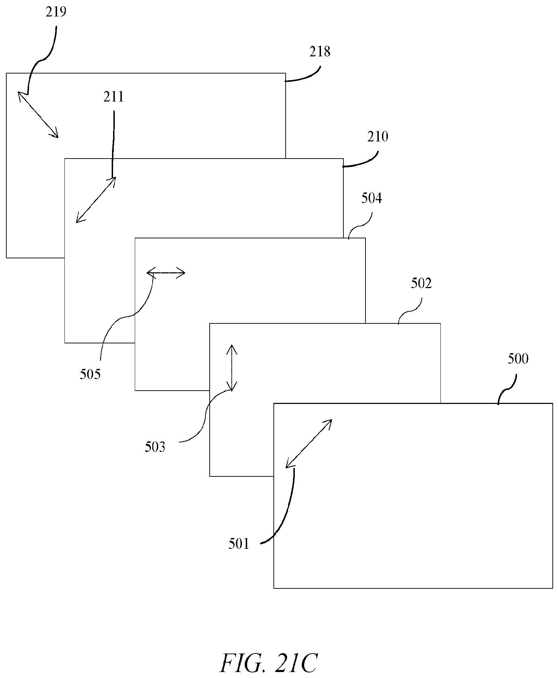

**FIGURE 21C** is a schematic diagram illustrating in perspective front view orientation of retarder and polariser axes for an optical stack of a directional display comprising additional and input polarisers arranged at +/- 45 degrees and crossed A-plates. Such an arrangement may be provided for a twisted nematic (TN) LCD. Alternatively an In-Plane Switching (IPS) LCD may further comprise retarders (not shown) arranged to rotate the polarisation state with respect to the additional polariser 500 and the input polariser 210. Thus additional polariser 500 and input polariser 210 may have polariser transmission directions 501, 211 orientations at +45 degrees and retarders 502, 504 may have retarder orientations 503, 505 at 90 degrees and 0 degrees respectively.

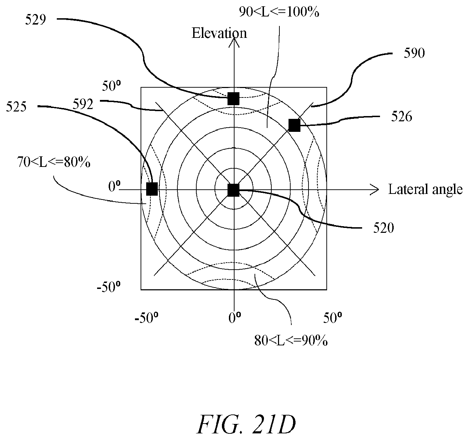

**FIGURE 21D** is a schematic luminance field-of-view graph illustrating variation in transmitted luminance of the optical stack of FIGURE 21C wherein the retarder layers are quarter waveplates. Thus reduced luminance transmission may be provided for viewing locations 525, 529 whereas locations 520, 526 may be provided with substantially no reduction of luminance.

Advantageously vertical and lateral viewing locations may have reduced luminance, improving privacy levels in vertical and horizontal viewing directions.

The construction of optical stacks comprising crossed A-plates will now be described.

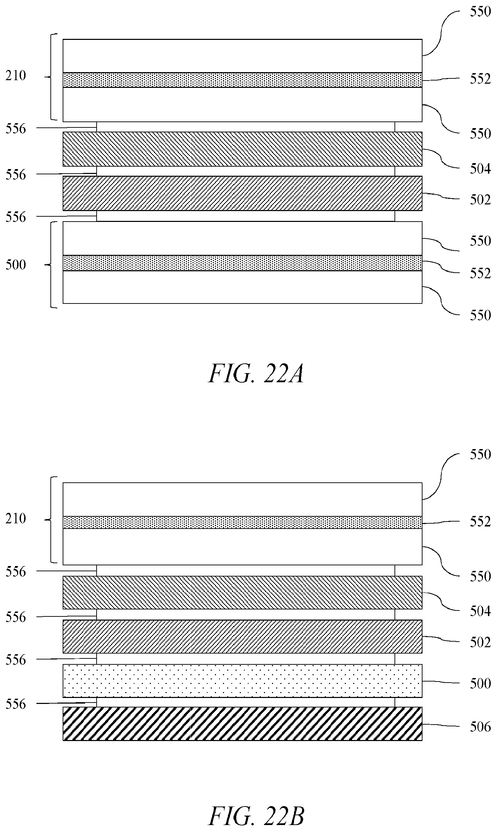

**FIGURES 22A-D** are schematic diagrams illustrating in side views optical stacks comprising crossed A-plates. FIGURE 22A illustrates that input polariser 210 and additional polariser 500 may comprise protective layers 550 that may be TAC (cellulose triacetate) for example surrounding an absorbing polariser layer 552 such as an iodine doped PVA layer. Adhesive layers 556 that may be optically clear adhesive layers and/or pressure sensitive adhesive layers may be arranged to attach the crossed A-plates 502, 504.

FIGURE 22B illustrates that absorbing polariser 500 may be provided by a reflective polariser and that further retarder layer 506 may be provided as illustrated in FIGURES 16A-B previously.

It would be desirable to reduce the thickness of the input polariser stack.

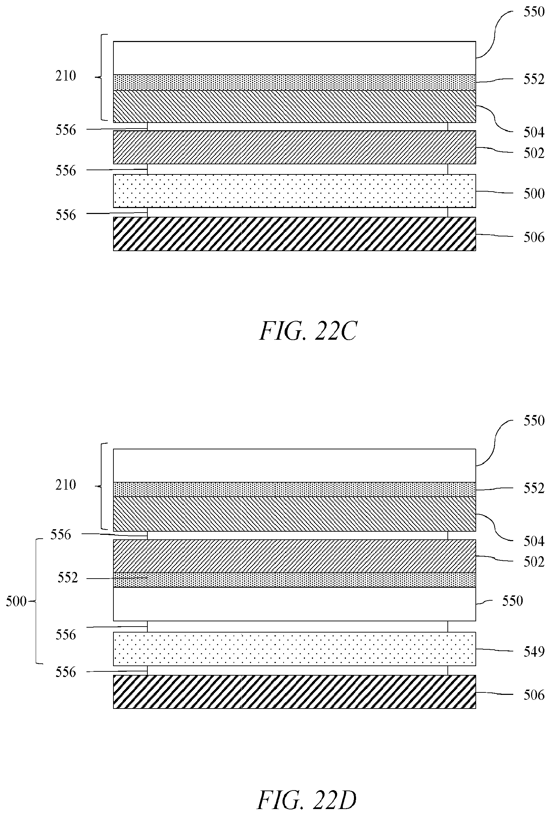

FIGURE 22C illustrates that one of the protective layers of the input polariser may be provided by the second A-plate 504. For example a birefringent TAC substrate may be provided with combined protective and A-plate properties. Advantageously thickness and cost may be reduced.

FIGURE 22D illustrates an arrangement wherein the additional polariser 500 is provided by (i) absorbing polariser 552, 550 and a protective layer comprising A-plate 502 and (ii) reflective polariser 549. Advantageously leakage from the reflective polariser 549 may be reduced.

Arrangements wherein the crossed A-plates are arranged on the output of the spatial light modulator 48 will now be described.

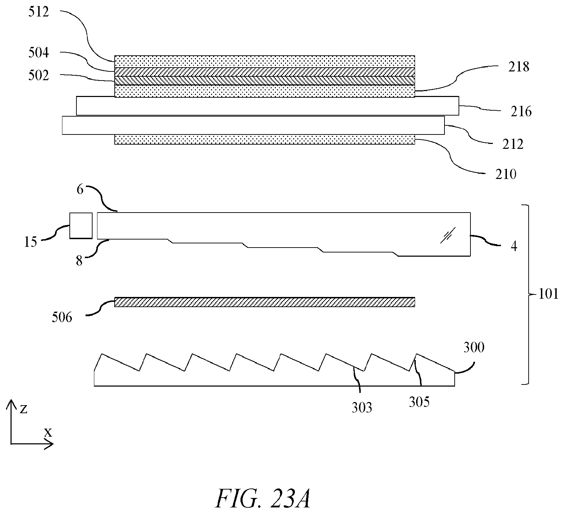

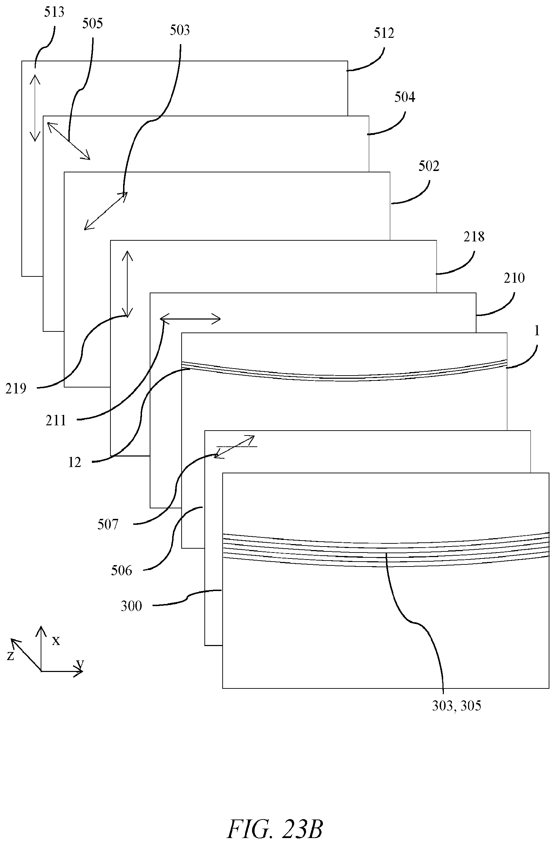

**FIGURE 23A** is a schematic diagram illustrating in side view a directional display comprising a directional waveguide 1 and crossed A-plates 502, 504 arranged on the front of a spatial light modulator 48; and **FIGURE 23B** is a schematic diagram illustrating in perspective front view orientation of retarder and polariser axes for the optical stack of FIGURE 23A.

Additional polariser 500 is arranged on the output side of the output polariser 218; and a pair of crossed A-plates is arranged between the additional polariser 500 and the output polariser 218. The additional polariser 500 is arranged on the output side of the output polariser and said pair of crossed A-plates 502, 504 is arranged between the additional polariser and the input polariser.

The operation and advantages of the display are similar to that described with reference to FIGURES 17A-18C. Such an arrangement may be provided in displays without reflective polarisers.

It would be desirable to reduce the number of separate optical layers in a switchable directional display comprising mitigation for snoopers in viewing quadrants.

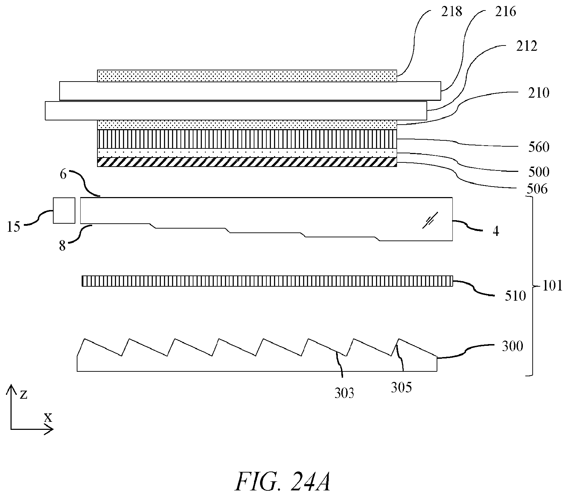

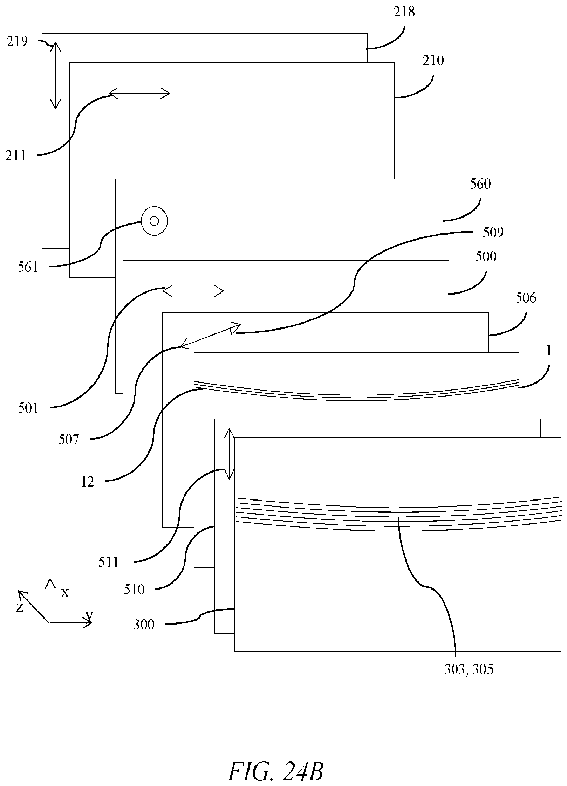

**FIGURE 24A** is a schematic diagram illustrating in side view a directional display comprising a directional waveguide and C-plate 560 arranged between a spatial light modulator 48 and a directional backlight 101; and **FIGURE 24B** is a schematic diagram illustrating in perspective front view orientation of retarder and polariser axes for the optical stack of FIGURE 24A.

C-plate 560 with optical axis direction 561 is arranged between the additional polariser 500 and the input polariser 210 with polarisation transmission direction 211 parallel to the polarisation transmission direction 501 of the additional polariser 500. Thus the additional polariser 500 is arranged on the input side of the input polariser 210 and said C-plate is arranged between the additional polariser 500 and the input polariser 210.

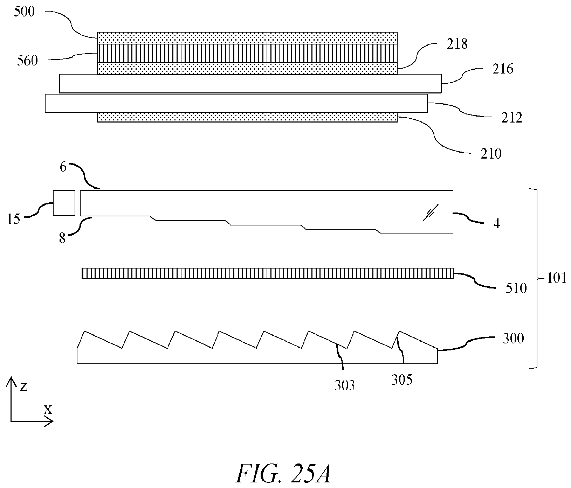

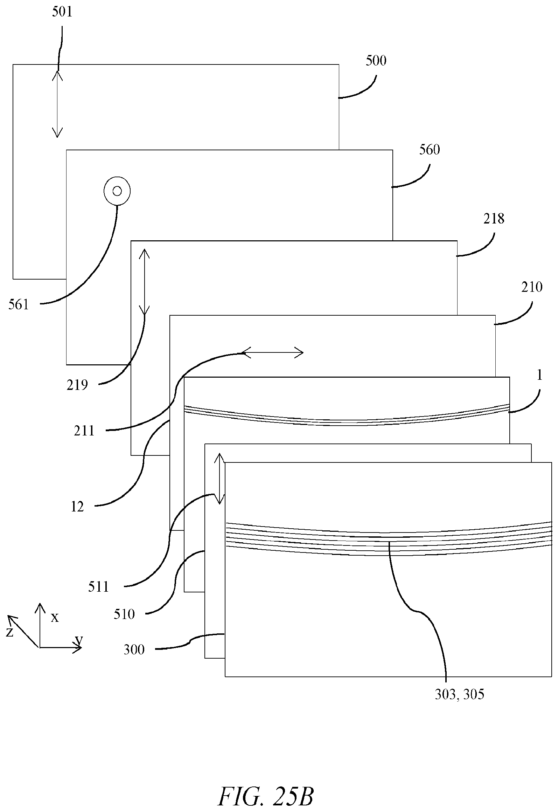

**FIGURE 25A** is a schematic diagram illustrating in side view a directional display comprising a directional waveguide 1 and a C-plate 560 arranged on the front of a spatial light modulator 48; and **FIGURE 25B** is a schematic diagram illustrating in perspective front view orientation of retarder and polariser axes for the optical stack of FIGURE 25A. Additional polariser 500 is arranged on the output side of the output polariser 218; and a C-plate 560 is arranged between the additional polariser 500 and the output polariser 218.

C-plate 560 with optical axis direction 561 is arranged between the additional polariser 500 and the output polariser 218 with polarisation transmission direction 219 parallel to the polarisation transmission direction 501 of the additional polariser 500. Thus the additional polariser 500 is arranged on the output side of the output polariser 218 and said C-plate is arranged between the additional polariser 500 and the output polariser 218.

The operation of the C-plate between the parallel polarisers 500, 210 will now be described.

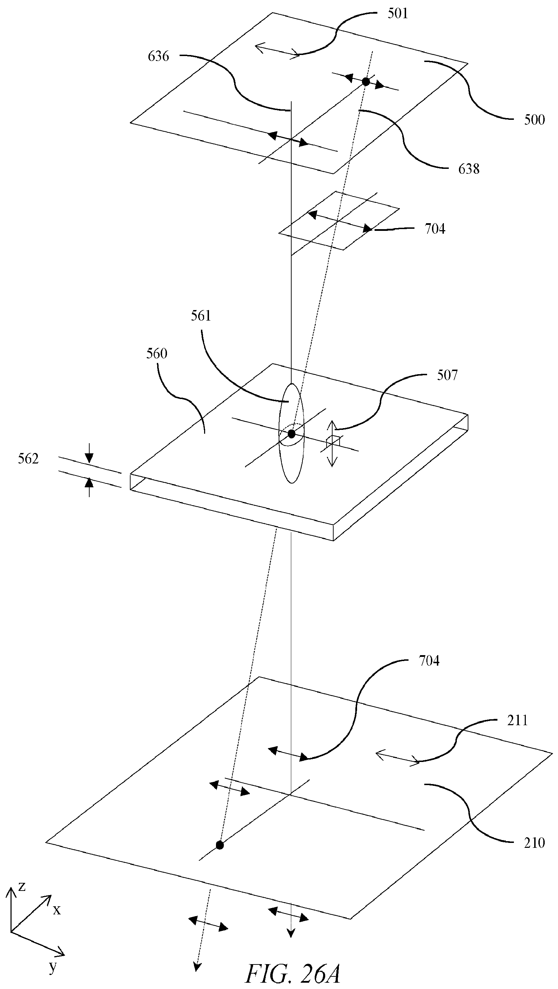

**FIGURE 26A** is a schematic diagram illustrating in perspective view illumination of a C-plate layer by off-axis polarised light with a positive elevation. Incident linear polarisation component 704 is incident onto the birefringent material 632 of the C-plate 560 with optical axis direction 507 that is perpendicular to the plane of the retarder 560. Polarisation component 704 sees no net phase difference on transmission through the liquid crystal molecule and so the output polarisation component is the same as component 704. Thus a maximum transmission is seen through the polariser 210. Thus the at least one retarder comprises a retarder 560 having a slow axis 561 perpendicular to the plane of the retarder 560, that is the x-y plane. The retarder 560 having a slow axis perpendicular to the plane of the retarder comprises a C-plate.

C-plates may comprise transparent birefringent materials such as: polycarbonates or reactive mesogens that are cast onto a substrate that provides homeotropic alignment for example; Zeonex^{™} Cyclo Olefin Polymer (COP); discotic polymers; and Nitto Denko^{™} double stretched polycarbonates.

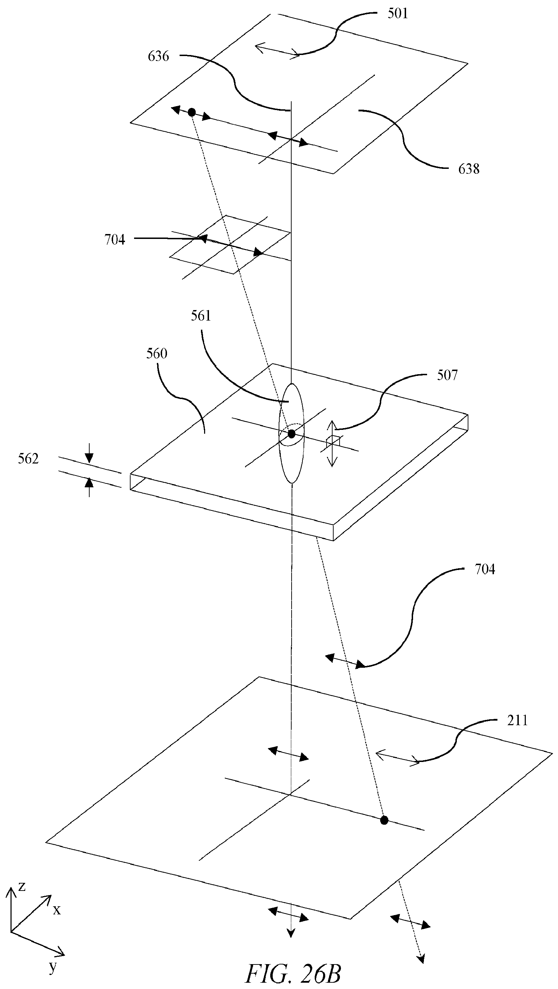

**FIGURE 26B** is a schematic diagram illustrating in perspective view illumination of a C-plate layer by off-axis polarised light with a negative lateral angle. As with the arrangement of FIGURE 26A polarisation state 704 sees no net phase difference and is transmitted with maximum luminance.

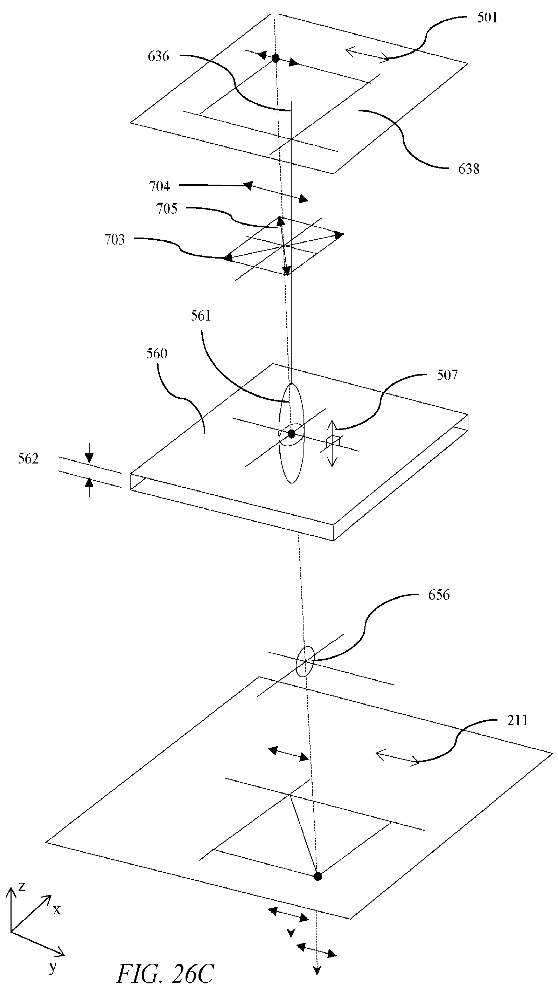

**FIGURE 26C** is a schematic diagram illustrating in perspective view illumination of a C-plate layer by off-axis polarised light with a positive elevation and negative lateral angle. In comparison to the arrangement of FIGURES 26A-B, the polarisation state 704 resolves onto eigenstates 703, 705 with respect to the birefringent material 632 providing a net phase difference on transmission through the retarder 560. The resultant elliptical polarisation component 656 is transmitted through polariser 210 with reduced luminance in comparison to the rays illustrated in FIGURES 26A-B.

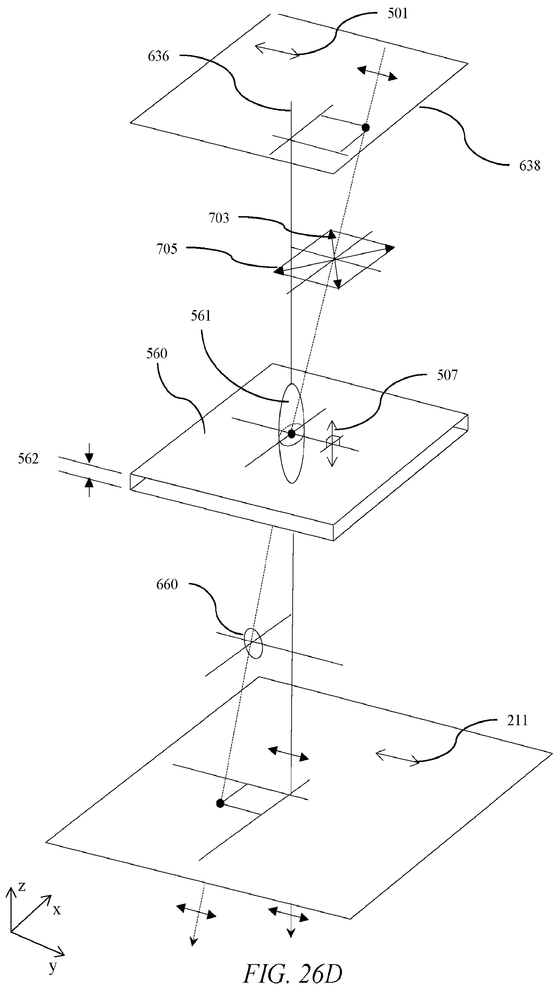

**FIGURE 26D** is a schematic diagram illustrating in perspective view illumination of a C-plate layer by off-axis polarised light with a positive elevation and positive lateral angle. In a similar manner to FIGURE 26C, the polarisation component 704 is resolved into eigenstates 703, 705 that undergo a net phase difference, and elliptical polarisation component 660 is provided, which after transmission through the polariser reduces the luminance of the respective off-axis ray.

In comparison to single plates, advantageously the crossed A-plates may each comprise single stretched materials that are cheaper than C-plates. Further achromatic compensation can be provided more readily.

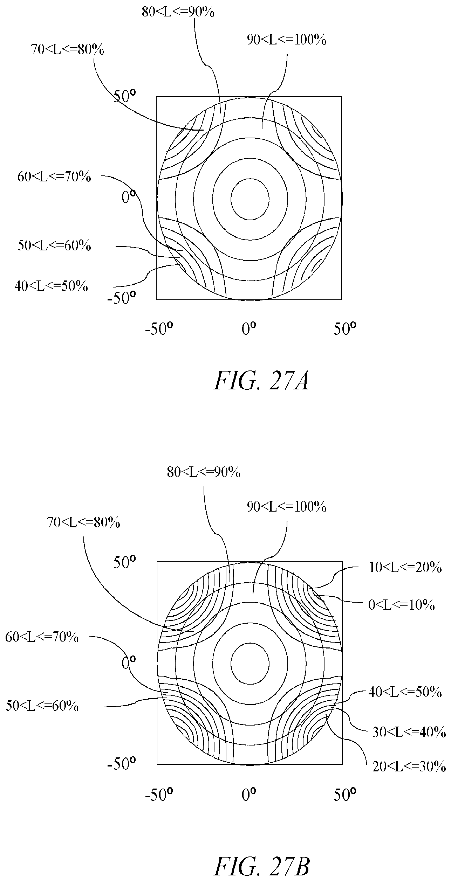

**FIGURE 27A** is a schematic luminance field-of-view graph illustrating variation in transmitted luminance of the optical stack of FIGURE 24B wherein the retarder layers are half waveplates. The luminance field-of-view profile is thus similar to that of FIGURE 21B comprising crossed A-plates.

In the present disclosure, luminance field-of-view graphs represent the polar variation of transmitted luminance with viewing angle.

**FIGURE 27B** is a schematic luminance field-of-view graph illustrating variation in transmitted luminance of the optical stack of FIGURE 24B wherein the retarder layers are full waveplates. Increased luminance reduction may be provided in viewing quadrants for observer angular locations 226, 227 in FIGURE 17A for example.

Advantageously enhanced image privacy against snoopers in viewing quadrants may be provided without reduction in head-on luminance in comparison to arrangements with no C-plate between a parallel input or output polariser and an additional polariser. Further the thickness and complexity of optical stack may be reduced, reducing cost.

It would be desirable to provide yet further reduction of chromaticity variation with respect to viewing angle. An illustrative example simulation of a high retardance C-plate will now be described, comprising a 650nm retardance for a 500nm nominal wavelength.

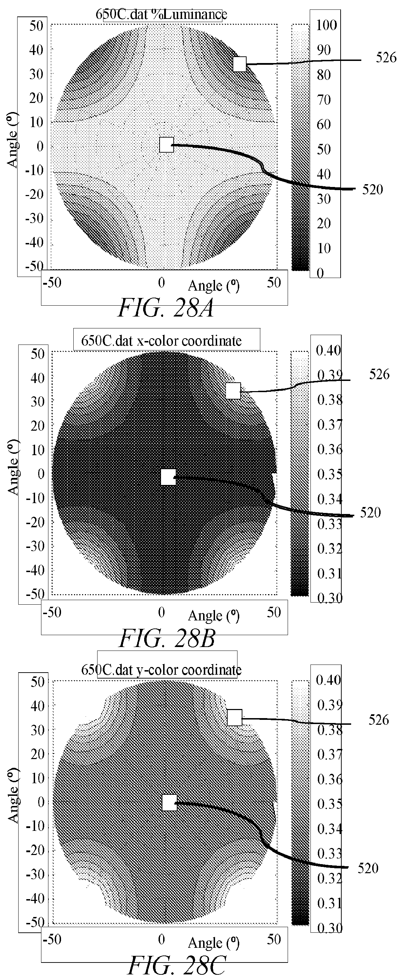

**FIGURE 28A** is a schematic luminance field-of-view graph illustrating variation in transmitted luminance of the optical stack of FIGURE 24B comprising high retardance layers.

**FIGURES 28B-C** are schematic luminance field-of-view graphs illustrating variation in CIE 1931 x and y chromatic coordinates respectively of the optical stack of FIGURE 24B comprising high retardance layers. Undesirably a chromatic shift between viewing locations 520 and 526 of approximately 0.07 in x-coordinate and 0.06 in y-coordinate may be provided for a luminance drop of 70% from the peak luminance. Such a chromatic color shift in viewing quadrants may be clearly visible and undesirable.

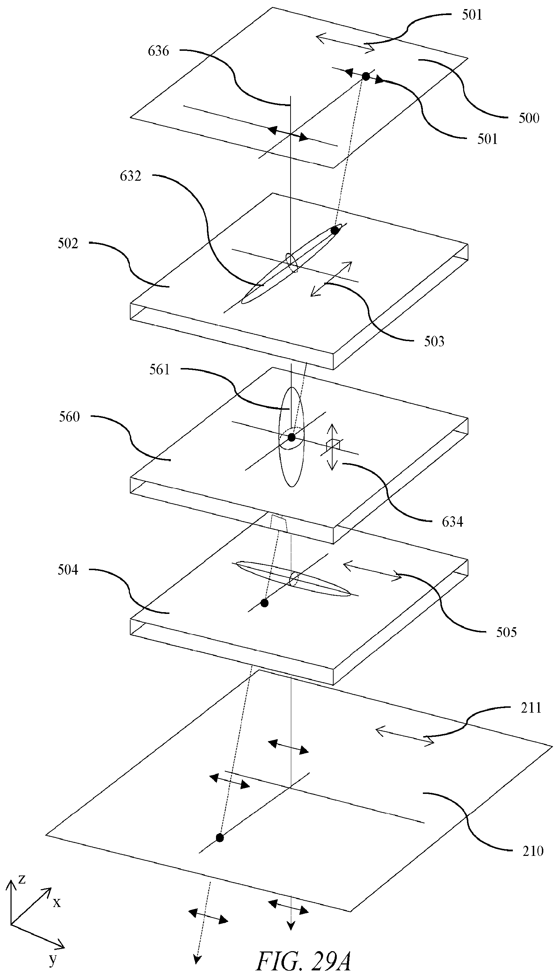

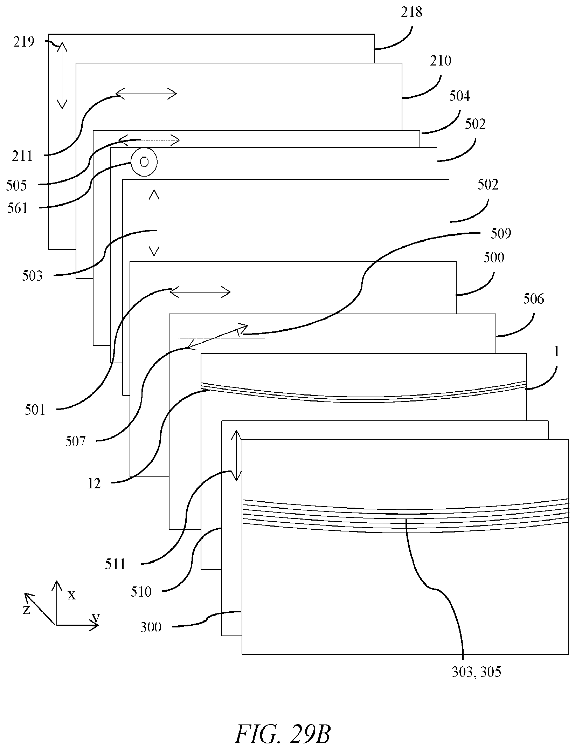

**FIGURE 29A** is a schematic diagram illustrating in perspective view illumination of a C-plate layer and crossed A-plate layers by off-axis polarised light with a positive elevation and **FIGURE 29B** is a schematic diagram illustrating in perspective front view orientation of retarder and polariser axes for the optical stack of FIGURE 29A. In comparison to the examples of FIGURE 16B, the A-plate 502 may be aligned orthogonal to the polariser 500 and the A-plate 504 may be aligned parallel to the polariser 504. Thus the at least one retarder further comprises a pair of retarders 502, 504 which have slow axes in the plane (x-y plane) of the retarders 502, 504 that are crossed. The pair of retarders 502, 504 have slow axes 503, 505 that each extend at 0° and 90°, respectively, with respect to an electric vector transmission direction 211 that is parallel to the electric vector transmission of the input polariser 210 in the case that the additional polariser 500 is arranged on the input side of the input polariser or is parallel to the direction 219 of the electric vector transmission of the output polariser 218 in the case that the additional polariser 500 is arranged on the output side of the input polariser 210.

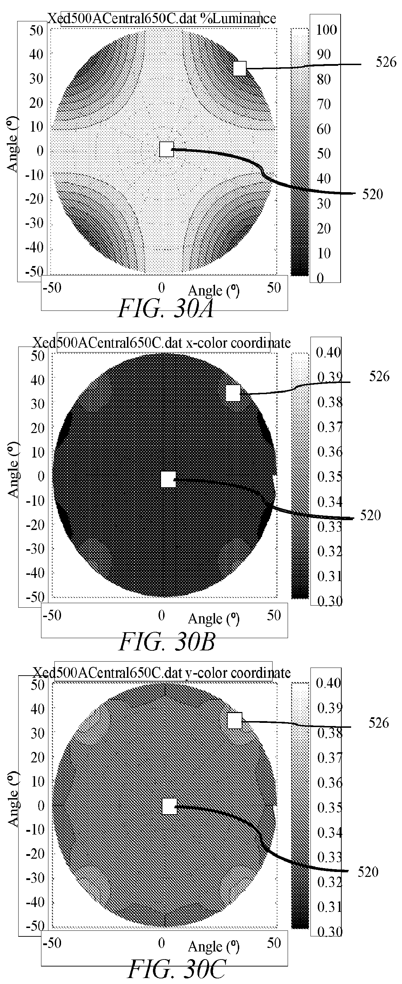

**FIGURE 30A** is a schematic luminance field-of-view graph illustrating variation in transmitted luminance of the optical stack of FIGURE 29B comprising high retardance layers and **FIGURES 30B-C** are schematic luminance field-of-view graphs illustrating variation in 1931 CIE x chromatic coordinates and y chromaticity coordinates of the optical stack of FIGURE 29B comprising high retardance layers.

A chromatic shift between viewing locations 520 and 526 of approximately 0.01 in x-coordinate and 0.02 in y-coordinate may be provided for a luminance drop of 70% from the peak luminance. Advantageously the chromatic shift for viewing location 526 may be substantially reduced in comparison to the arrangement of FIGURES 28B-C.

The present examples may further be arranged with switchable directional displays other than those comprising imaging waveguides 1 with a reflective end 4.

**FIGURE 31** is a schematic diagram illustrating in side view a directional display comprising a first directional waveguide 801a, a second wide angle waveguide 801b and a C-plate 560 arranged between additional polariser 500 and input polariser 210 arranged on the rear of a spatial light modulator 48. Alternatively the additional polariser and retarder layers are arranged on the front of the spatial light modulator as described elsewhere herein.

Light sources 815a are arranged along at least one edge of waveguide 801a and light sources 815b are arranged along at least one edge of waveguide 801b.

The switchable directional display may further comprise rear scattering reflector 812, intermediate diffuser layer 810 and a prismatic input layer 804 comprising first and second input facets 803, 805.

In operation in a narrow angle mode, light sources 815a are arranged to provide light rays 820 into first waveguide 801a. Upper surface 806a and lower surface 808a of the waveguide 801a may be provided with scattering microstructures that are arranged to extract light from waveguide 801a in a substantially grazing direction, that is close to parallel to the surface 806a. Light rays 820 are incident on input facet 803 of the prismatic input layer 804 and are directed by total internal reflection at input facet 805 to be incident on the spatial light modulator in directions that have a narrow cone angle to provide viewing window 821 of a first narrow width.

In operation in a wide angle mode, light sources 815b are arranged to provide light rays 822 into second waveguide 801b. Upper surface 806b and lower surface 808b of the waveguide 801b may be provided with scattering microstructures that are arranged to extract light from waveguide 801b with a cone angle with a nominal angle that is close to parallel to the surface 806b. Light rays 822 are incident on input facet 805 of the prismatic input layer 804 and are directed by total internal reflection at input facet 803 to be incident on the spatial light modulator in directions that have a wide cone angle. Further diffusion for reflected light rays at the scattering reflector 812 and diffuser 810 may be arranged to increase the output cone angle to provide a second viewing window 823 of greater width than the first viewing window 821.

Further, both light sources 815a, 815b may be illuminated in wide angle mode to give some control of output directionality.

In this manner a different type of directional display in comparison to that of FIGURE 12A for example may be provided. More generally there is provided a directional backlight 101 that is switchable between modes in which the output light is output into viewing windows 821, 823 of differing width.

Such an arrangement uses scattering to provide narrow and wide directional light cones for rays 820, 822 respectively. Such scattering may provide some high angle light in narrow angle mode of operation and degrade privacy performance.

The present examples provide additional reduction of luminance in viewing cone angles that may be observed by snoopers. Advantageously, privacy performance may be enhanced as described elsewhere herein.

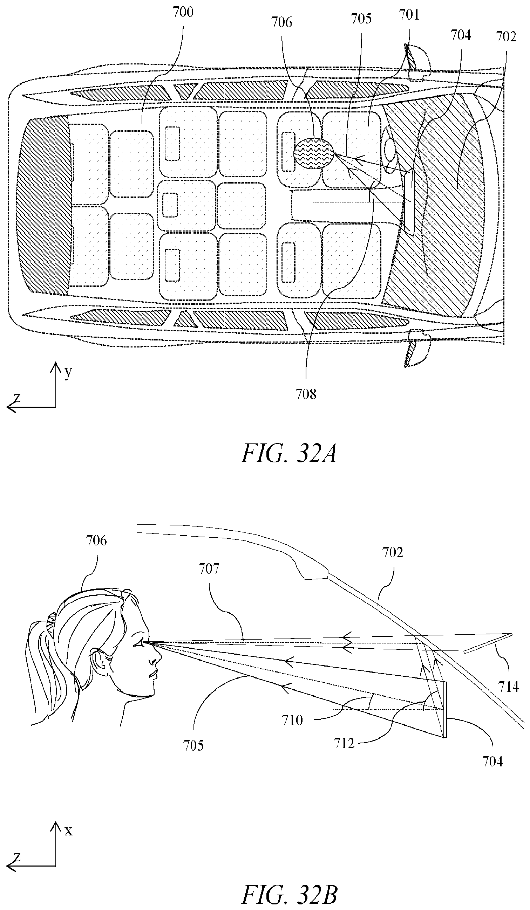

**FIGURE 32A** is a schematic diagram illustrating in top view an automotive cabin 700 and illumination of a driver 706 from a centrally mounted display device 704 and **FIGURE 32B** is a schematic diagram illustrating in side view an automotive cabin 700 and illumination of a driver 706 from a centrally mounted display 704, wherein the display device is arranged in a vehicle and is arranged beneath a windscreen 702 in the vehicle and is arranged in front of a seat 701 in the vehicle.

In the present disclosure viewing windows are different from transparent windows. Viewing windows refer to angular illumination cones of a display device at a desirable viewing distance. Transparent windows refer to physical transparent surfaces such as windscreens, windshields, side windows or other transparent surfaces and are typically made from glass, glass composites or other transparent materials.

The display device 704 may be alternatively arranged with respect to the driver at non-central regions, in either examples to provide off-axis illumination of light rays 705 from the center of the display 704 to driver 706 in the negative lateral angle direction, at lateral angle 708. In operation, light rays 705 are directed to the driver 706 and further light rays 707 are directed to the driver 706 by means of reflection at the windscreen 702, forming a virtual image 714. Image 714 may be distracting to the driver and reduction of its luminance would thus be desirable.

The lateral angle direction 708 of light output from the display 704 may be the same for light rays 705, 707, however the respective elevation directions 710, 712 are different.

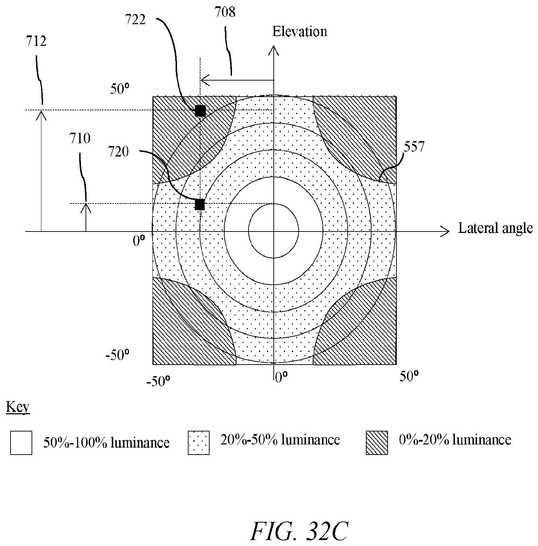

**FIGURE 32C** is a schematic luminance field-of-view graph illustrating luminance of display and windscreen reflection in an automotive cabin 700.

In an illustrative example, the lateral angle 708 for both light rays 705, 707 may be -30 degrees, whereas the respective elevation angles may be 10 degrees and 45 degrees. Thus polar location 720, 722 for the directly viewed display 704 and for the virtual image 714 of the display 704 are in different polar locations. The luminance roll-off provided by locus 557 of the polarisation control arrangements of the present examples achieve substantial reduction of luminance of the virtual image 714 that is reflected from the windscreen in comparison to the directly viewed light. Further the Fresnel reflectivity of the light rays 707 from the windscreen 702 provide a substantially lower luminance of the virtual image 714 of the display 704.

Advantageously windscreen reflections may be substantially reduced for the viewing direction of the driver by means of the polariser arrangements of the present examples.

It would be desirable to provide reduced off-axis luminance and reduced visibility of off-axis non-uniformities in the lateral direction to achieve reduced visibility of user image content for a snooper.

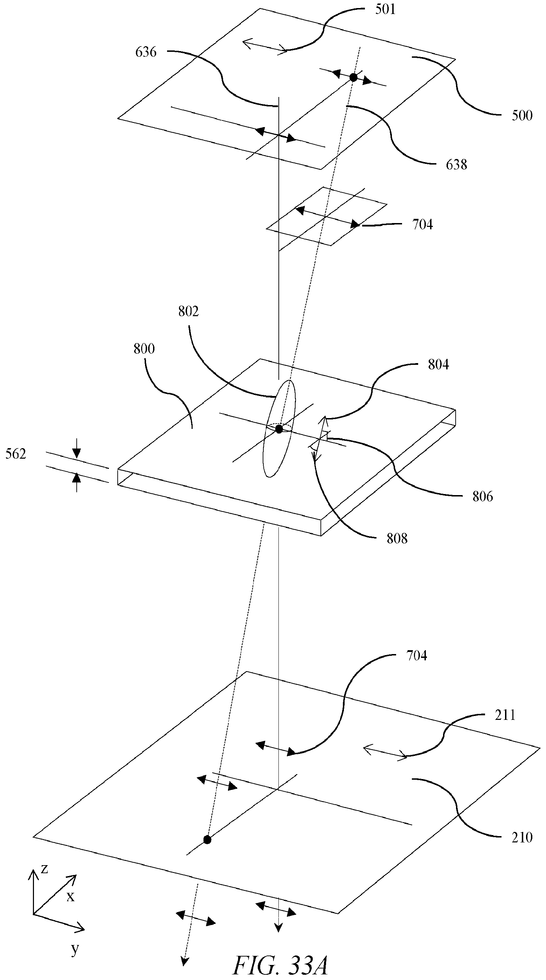

**FIGURE 33A** is a schematic diagram illustrating in perspective view illumination of an O-plate layer 800 by off-axis polarised light ray 638 with a positive elevation. By way of comparison with FIGURE 26A, O-plate retarder layer 800 comprises a birefringent molecule 802 that has a slow axis 804 that is tilted about the y-axis with inclination 808. The molecule 802 may have angle 806 to the x-z plane that is substantially 90 degrees. Thus an O-plate may be considered as a tilted C-plate. The optical properties of the O-plate retarder 800 between parallel polarisers 500, 210 will be described in further detail below.

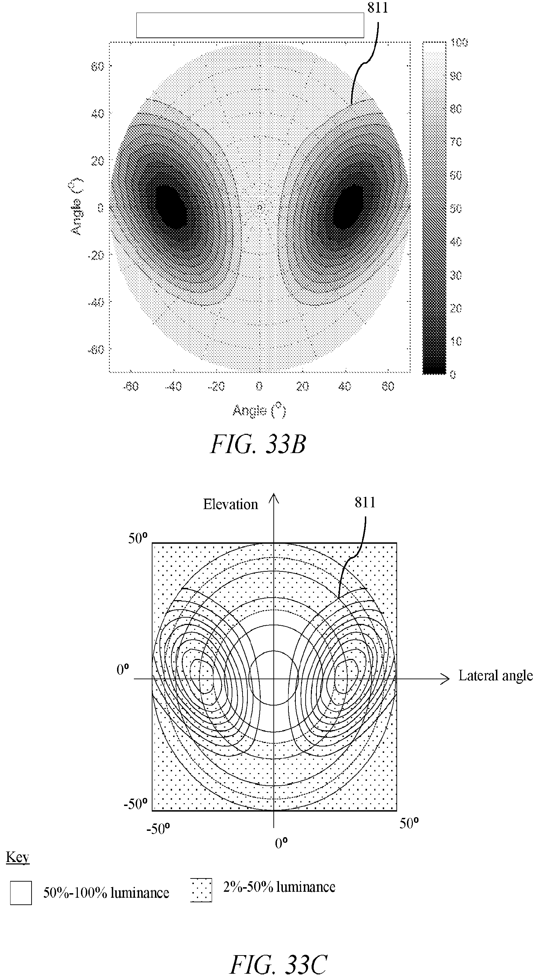

**FIGURE 33B** is a schematic luminance field-of-view graph illustrating an example of the variation in transmitted luminance of an O-plate arranged between parallel polarisers. Luminance field-of-view contours 811 representing 10% increment iso-luminance are thus provided so that the luminance may vary in the lateral direction, and may be provided with high transmittance in the zero lateral angle direction.

**FIGURE 33C** is a schematic luminance field-of-view graph illustrating variation in transmitted luminance of a wide angle display further comprising the O-plate arranged between parallel polarisers of FIGURE 33A, device luminance being the multiplication of directional backlight 101 luminance field-of-view distribution and retarder luminance field-of-view distribution.

Thus the contours 811 are overlaid on the wide angle profile of FIGURE 14A. The luminance profile of the display is thus provided by the multiplication of the luminance profile of FIGURE 33B and the luminance profile of FIGURE 14A. The resultant luminance is not illustrated in FIGURE 33C.

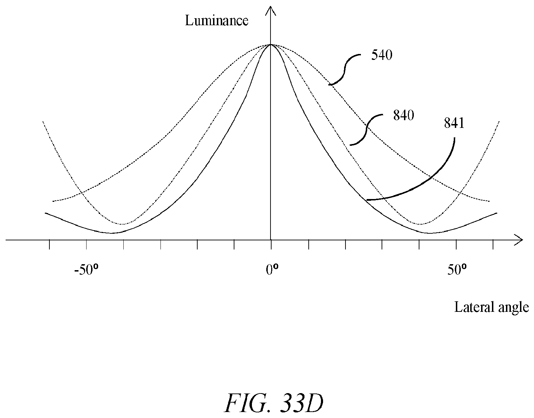

**FIGURE 33D** is a schematic graph illustrating variation of luminance with viewing angle of a wide angle display further comprising the O-plate arranged between parallel polarisers of FIGURE 33A. A typical wide angle display luminance profile 540 is modified by the lateral angular profile 841 of the O-plate retarder 800 and polariser 210, 500 arrangement of FIGURE 33A.

The viewing properties of a display comprising a typical wide angle display comprising for example an LCD and conventional scattering wide angle non-directional backlight, together with the O-plate arrangement of FIGURE 33A will now be described.

At typical snooper viewing angles, such as 45 degrees off-axis in the lateral direction the wide angle backlight may have a luminance of for example 20% of peak head-on luminance. An O-plate may have a luminance of 10% or less, achieving a combined luminance of less than 2%. However at wider viewing angles, such as 60 degrees, the backlight may have a luminance of 10% but the transmission of the O-plate may be 50%, providing a luminance of 5% to a snooper. Such a value provides high visibility of the private image to the snooper.

It would be desirable to provide a private image that has less than 2% and more preferably less than 1% over a wide range of lateral snooper viewing directions.

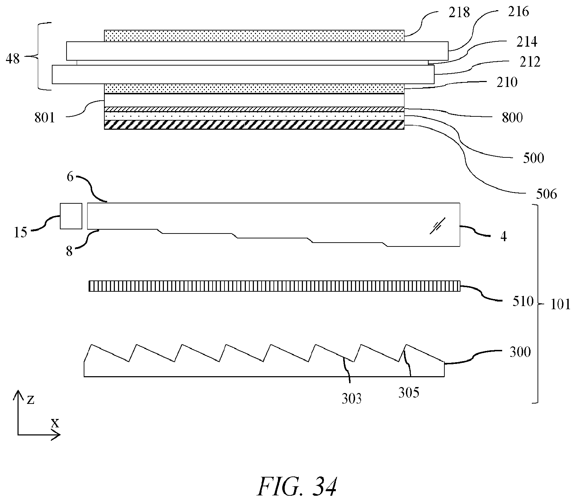

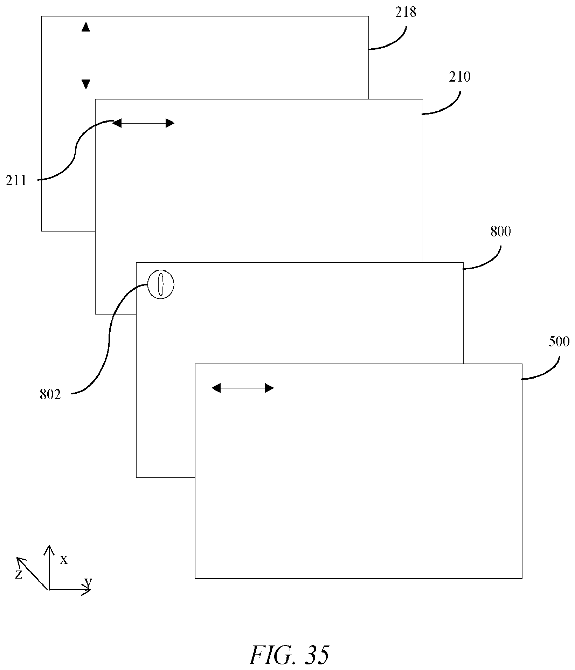

**FIGURE 34** is a schematic diagram illustrating in side view a directional display comprising a directional waveguide and an O-plate arranged between a spatial light modulator and a directional backlight 101; and **FIGURE 35** is a schematic diagram illustrating in perspective front view orientation of some of the retarder and polariser axes for the optical stack of FIGURE 34.

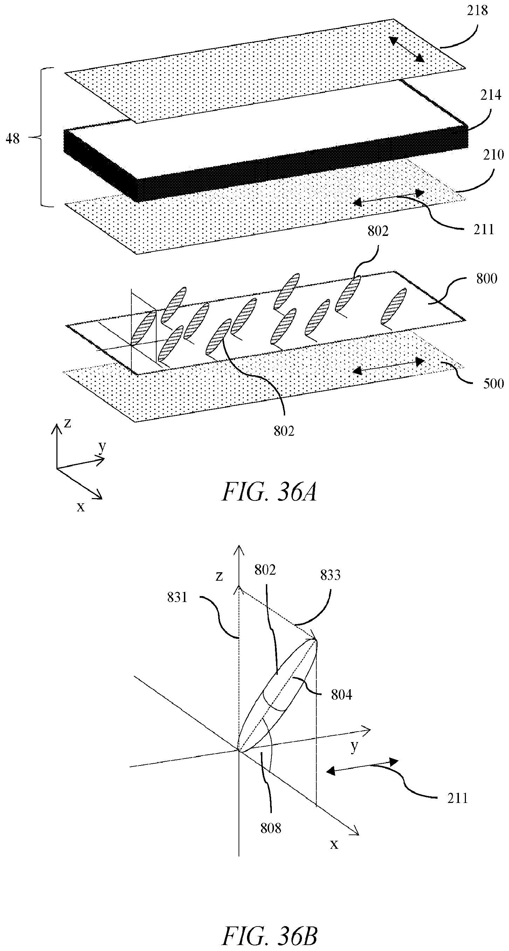

The arrangement of the O-plate and display components is further described with reference to **FIGURE 36A** which is a schematic diagram illustrating in perspective side view orientation of some of the retarder and polariser axes for the optical stack of FIGURE 34; and **FIGURE 36B** is a schematic diagram illustrating in perspective side view orientation of birefringent molecules in the arrangement of FIGURE 36A, further illustrating inclined molecules 802 of the O-plate arranged in the retarder layer 800.

The retarder 800 comprises an O-plate. Thus the at least one retarder of the present examples comprises a retarder 800 having a slow axis 804 orientation with a component 831 perpendicular to the plane of the retarder 800, and at least one component in the plane of the retarder 800. Further, in the present example the at least one retarder comprises a retarder 800 having a slow axis 804 orientation with a component 531 perpendicular to the plane of the retarder 800, a component 833 that is orthogonal in the plane of the retarder 800 to the electric vector transmission direction 211 of the input polariser 210 and substantially no component that is parallel in the plane of the retarder 800 to the electric vector transmission direction of the input polariser 210.

O-plate retarder layer 800 may be formed by example by a cured reactive mesogen material that has been aligned on an aligned substrate prior to cross linking, for by example by exposure to UV light. Examples of reactive mesogen materials are Licriview^{™} materials by Merck. As illustrated in the C-plate and A-plate retarder examples herein, the retarder 800 may be arranged between a reflective polariser 500 that is aligned with an absorbing polariser 210. Advantageously thickness may be reduced and transmission increased. The O-plate may further be arranged on a transparent support substrate 801 to achieve convenient alignment substrate and for handling. Alternatively the O-plate may be formed directly on a polariser 210 or reflective polariser 500, advantageously achieving reduced thickness.

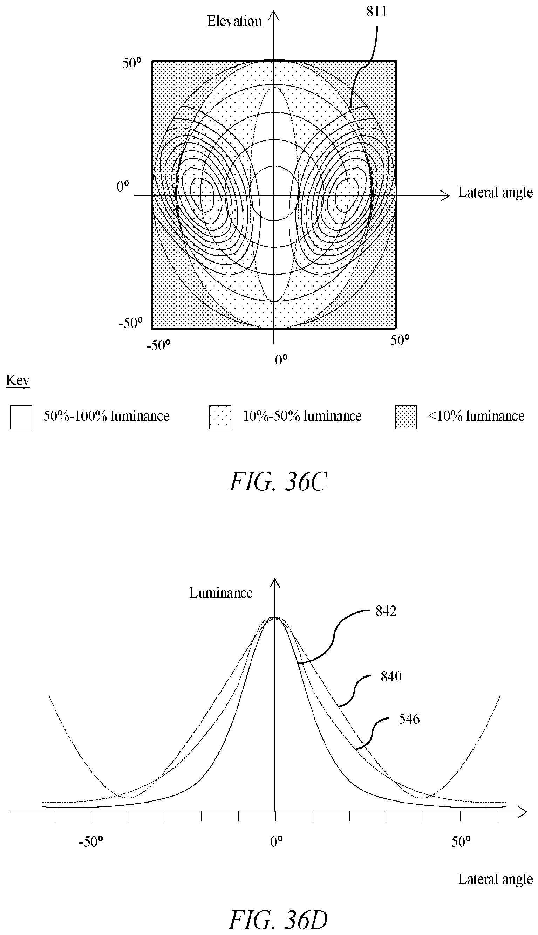

**FIGURE 36C** is a schematic luminance field-of-view graph illustrating variation in transmitted luminance of the optical stack of FIGURE 34, device luminance being the multiplication of underlying directional backlight 101 luminance field-of-view distribution and retarder luminance field-of-view distribution; and **FIGURE 36D** is a schematic graph illustrating variation of luminance with viewing angle of a privacy mode of operation of a directional display comprising an O-plate. By way of comparison with the non-directional display arrangement of FIGURE 33D, angular profile 546 of the directional backlight 101 has substantially reduced luminance at high viewing angles, for example less than 2%. Further providing the O-plate retarder of the present examples may provide privacy levels that remain substantially less than 2% for a wide range of off-axis viewing locations.

A further illustrative example will now be described.

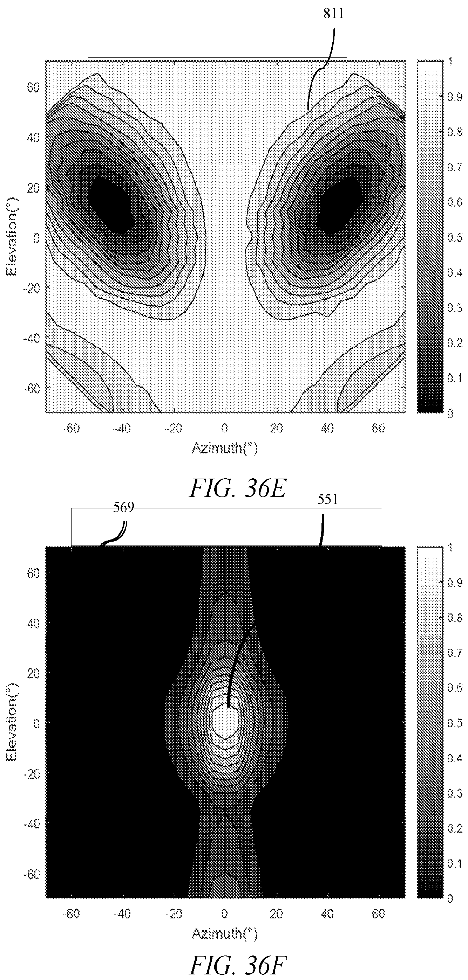

**FIGURE 36E** is a schematic luminance field-of-view graph illustrating variation in transmitted luminance of an O-plate 800; **FIGURE 36F** is a schematic luminance field-of-view graph illustrating variation in transmitted luminance of a directional backlight 101.

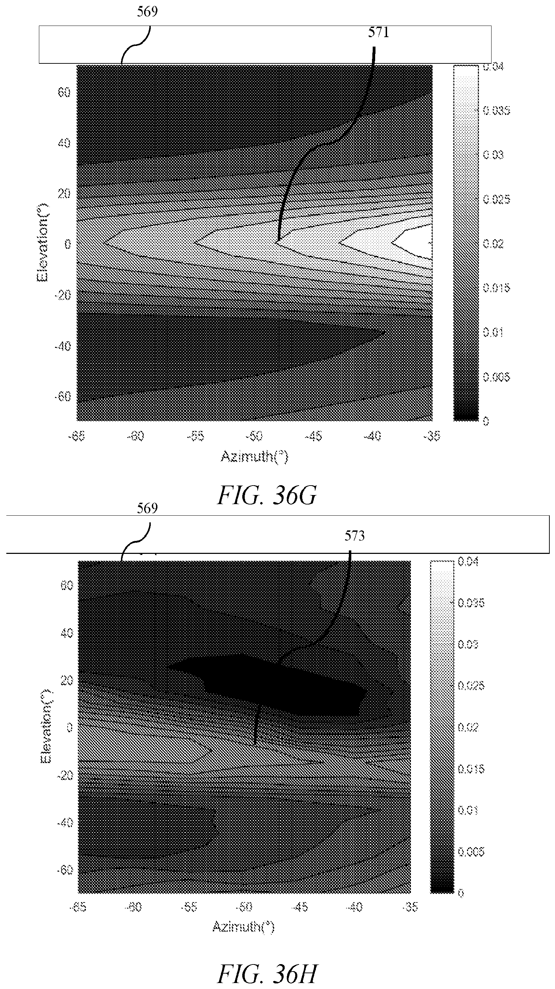

In operation, the region of interest for off-axis privacy viewing is illustrated in **FIGURE 36G** which is a schematic luminance field-of-view graph illustrating variation in transmitted luminance of a directional backlight 101 of FIGURE 36F in angular regions 569 of privacy viewing.

**FIGURE 36H** is a schematic luminance field-of-view graph illustrating variation in transmitted luminance of the optical stack 101, 800 of FIGURE 34 in the angular regions 569 for privacy viewing. Thus as illustrated in FIGURE 36C, the luminance in the region of privacy viewing can be reduced. Advantageously, the above axis luminance for privacy viewing can be substantially reduced, that is the likely direction for snoopers.

Advantageously privacy levels are reduced. Further, the luminance of non-uniformities in the off-axis privacy image is reduced, achieving reduced visibility of said non-uniformities.

It may be desirable to provide reduction of luminance off-axis in a single quadrant of a display, for example to provide reduced light to a passenger or driver in an automotive application.

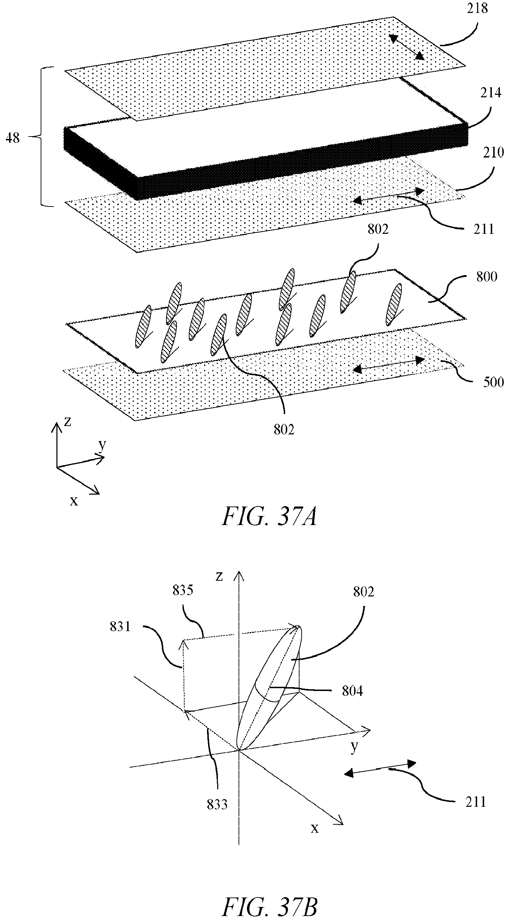

**FIGURE 37A** is a schematic diagram illustrating in perspective side view orientation of some of the retarder 800 and polariser axes for the optical stack of FIGURE 34 wherein the birefringent molecules 802 are arranged to provide control of luminance in a single upper viewing quadrant.

**FIGURE 37B** is a schematic diagram illustrating in perspective side view orientation of birefringent molecules in the arrangement of FIGURE 37A. The at least one retarder comprises a retarder 800 having a slow axis 804 orientation with a component 531 perpendicular to the plane of the retarder 800, a component 833 that is orthogonal in the plane of the retarder 800 to the electric vector transmission direction 211 of the input polariser 210 and a component 835 that is parallel in the plane of the retarder 800 to the electric vector transmission direction 211 of the input polariser 210.

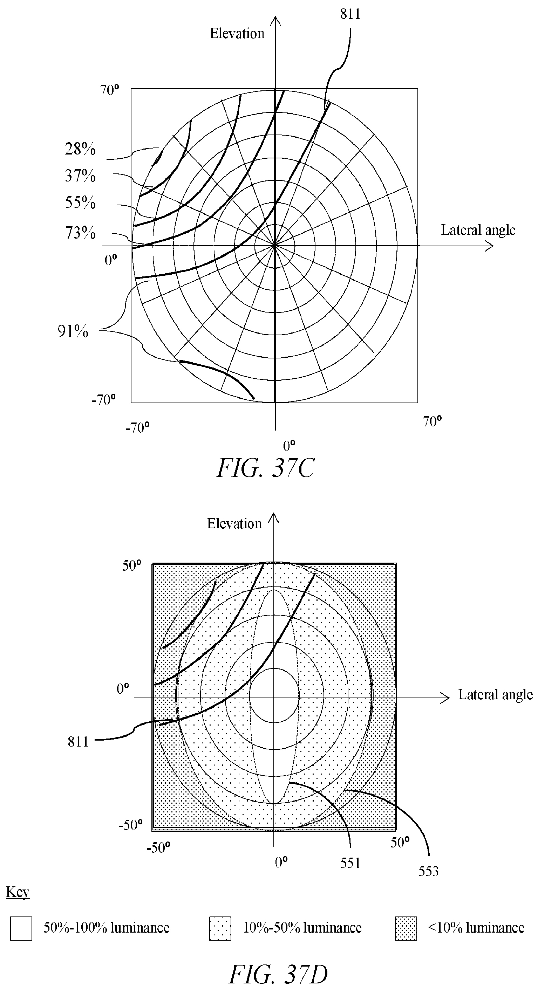

**FIGURE 37C** is a schematic luminance field-of-view graph illustrating variation in transmitted luminance of the optical stack of FIGURE 37A; and **FIGURE 37D** is a schematic luminance field-of-view graph illustrating variation in transmitted luminance of the optical stack of FIGURE 37A, device luminance being the multiplication of directional backlight 101 luminance field-of-view distribution and retarder luminance field-of-view distribution.

Luminance may be reduced in upper quadrants in comparison to the directional backlight 101 luminance field-of-view distribution. Advantageously the display privacy level or stray level may be reduced in upper quadrants, achieving improved performance for users looking down onto the display.

It may be desirable to provide a privacy display with a narrow viewing angle in vertical directions as well as lateral directions for example to improve privacy level for a wider range of viewing positions.

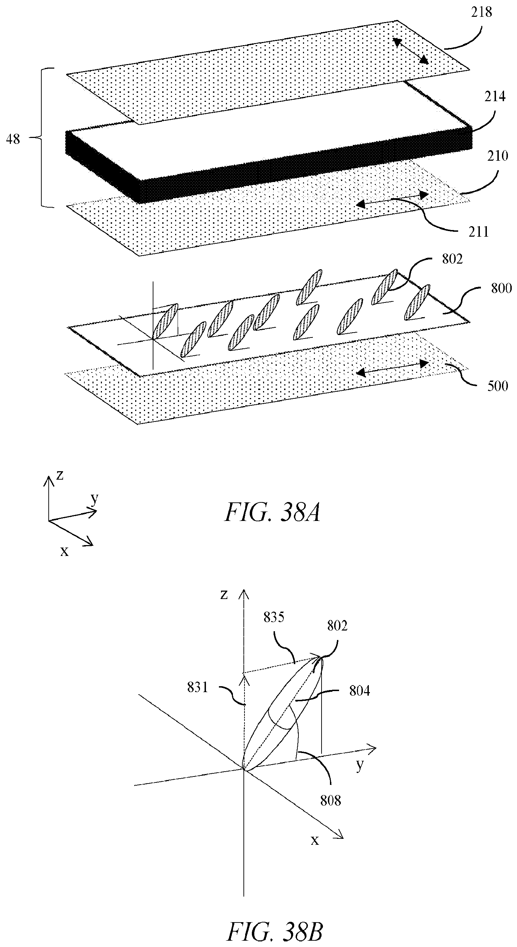

**FIGURE 38A** is a schematic diagram illustrating in perspective side view orientation of some of the retarder and polariser axes for an optical stack wherein the O-plate retarder 800 slow axis 804 orientation is aligned parallel to the lateral direction; and **FIGURE 38B** is a schematic diagram illustrating in perspective side view orientation of birefringent molecules in the arrangement of FIGURE 38A. The at least one retarder comprises a retarder 800 having a slow axis 804 orientation with a component 831 perpendicular to the plane of the retarder, a component 835 that is parallel in the plane of the retarder to the electric vector transmission direction 211 of the input polariser 210 and substantially no component that is orthogonal in the plane of the retarder 800 to the electric vector transmission direction 211 of the input polariser 210.

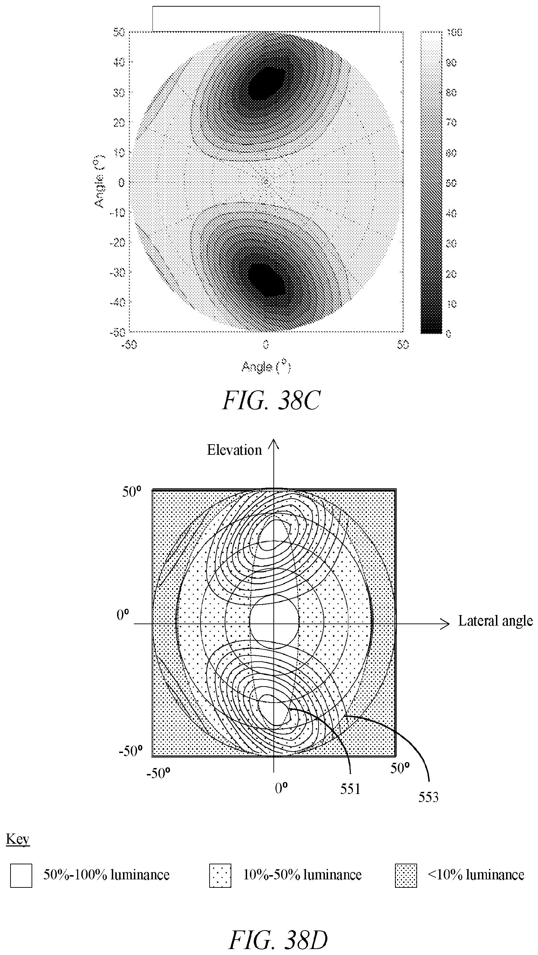

**FIGURE 38C** is a schematic luminance field-of-view graph illustrating variation in transmitted luminance of the O-plate retarder 800 arranged between parallel polarisers 500, 210 of FIGURE 38A for an illustrative example wherein an O-plate may comprise a birefringence of 0.12, a layer thickness of 10 micrometres and a tilt angle 808 of 70 degrees.

**FIGURE 38D** is a schematic luminance field-of-view graph illustrating variation in transmitted luminance of the optical stack of FIGURE 38A, device luminance being the multiplication of directional backlight 101 luminance field-of-view distribution and retarder luminance field-of-view distribution.

Thus luminance may be controlled in the vertical direction as well as the lateral direction, advantageously improving all-round privacy performance of the display.

It may be desirable to provide reduced luminance to an off-axis snooper in a privacy mode of operation of a directional backlight 101, while providing wide field of view in a wide mode of operation of the directional backlight 101. Further it may be desirable to provide reduced stray light for night time operation of a display; such operation can be achieved by use of privacy mode displays, even though no snooper may be present. Switchable privacy display operation will now be described.

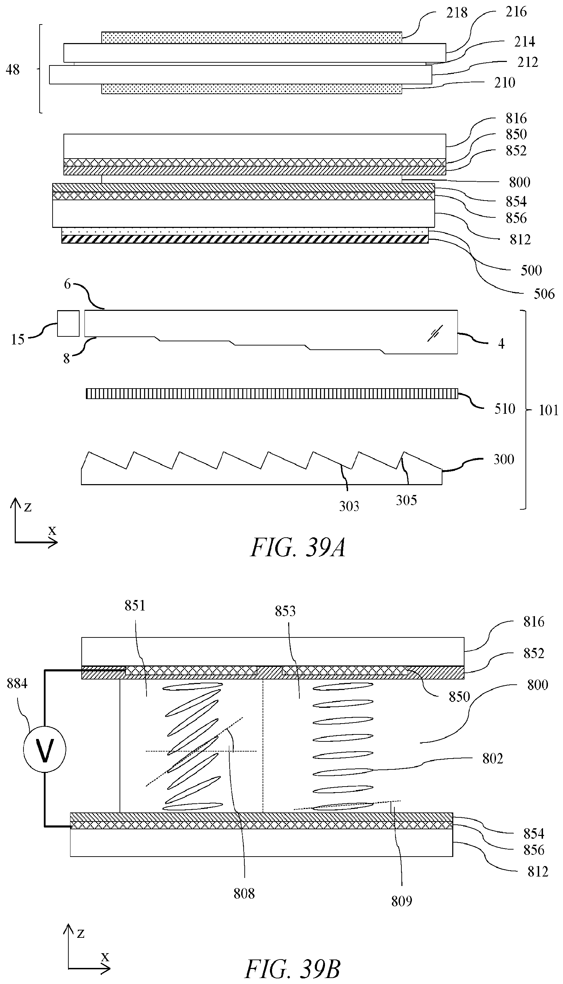

**FIGURE 39A** is a schematic diagram illustrating in side view a directional display comprising a directional waveguide and a homogeneously aligned switchable liquid crystal O-plate retarder 800 arranged between a spatial light modulator 48 and a directional backlight 101. Homogeneously aligned switchable liquid crystal O-plate retarder 800 may be provided by a switchable liquid crystal layer between transparent substrates 812, 816 as illustrated in **FIGURE 39B** which is a schematic diagram illustrating in side view switching of the homogeneously aligned switchable liquid crystal O-plate retarder 800 in the directional display of FIGURE 39A.

The switchable retarder may for example be provided by a parallel homogeneously aligned liquid crystal cell. In operation in an undriven state as illustrated in region 853, molecules 802 are inclined with pretilt 809 by alignment layers 852, 854 that may for example be rubbed polyimide or photoalignment layers. The pretilt may for example be 2 degrees, and may be arranged to minimise degeneracy in switching of the liquid crystal retarder 800 layer. Such a retarder is thus substantially an in-plane A-plate retarder.

As illustrated in region 851, when driver 884 provides a voltage across the liquid crystal cell by means of electrodes 850, 856 then the molecules that are not close to the alignment layers 852 reorient to provide tilt 808 in the liquid crystal retarder 800 layer. Such a retarder is thus substantially an out of plane O-plate retarder.

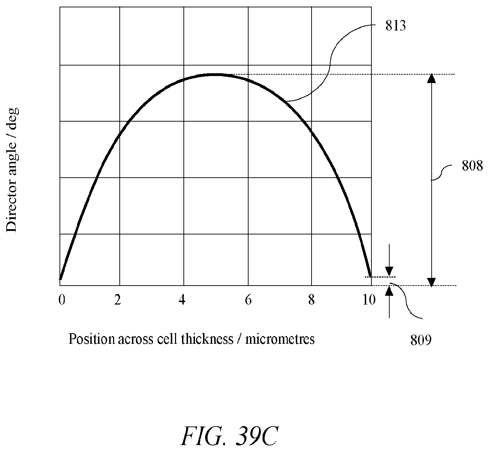

**FIGURE 39C** is a schematic diagram illustrating a graph of liquid crystal director tilt against liquid crystal cell thickness for a cell with an applied voltage. In the illustrative example of FIGURE 39C, the slow axis of the retarder may be provided by the liquid crystal director and may have a tilt that varies across the thickness of the cell as illustrated by tilt profile 813. At the alignment surfaces, tilt 809 may be 2 degrees for example, whereas at the center of the cell, tilt 808 that may for example be 68 degrees is provided.

The tilt profile 8113 of the homogeneously aligned switchable liquid crystal O-plate retarder 800 may thus be provided by control of applied voltage from driver 884. Advantageously control of the angular viewing properties of a directional display may be provided as described elsewhere herein.

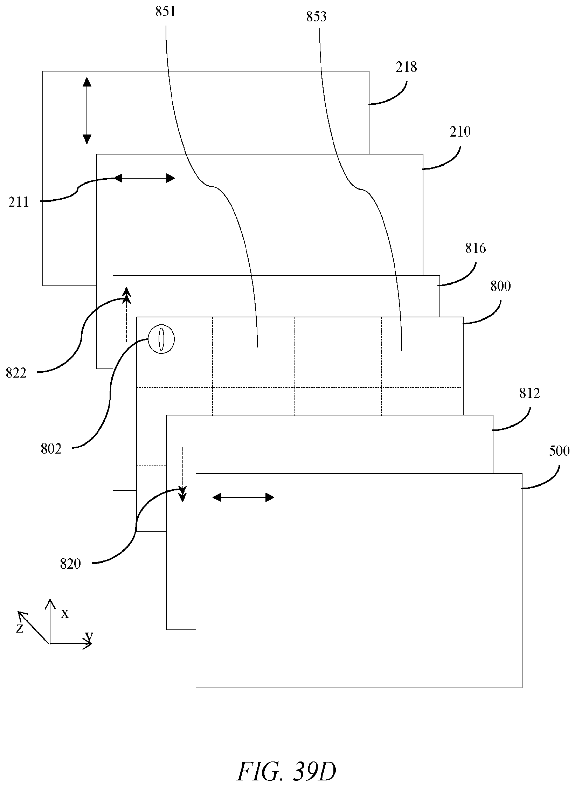

**FIGURE 39D** is a schematic diagram illustrating in perspective front view orientation of some of the retarder 800, alignment layers 812, 816 and polariser 500, 210, 218 for the optical stack of FIGURE 39A. Alignment layer 812, 816 rubbing directions may be provided antiparallel and arranged to orient the directions of the slow axis components 833, 835 that are in the plane of the retarder 800.

The electrodes 850, 856 may be patterned to provide regions with different levels of control of privacy luminance for off-axis viewing positions. The switchable liquid crystal retarder 800 comprises at least first and second regions 851, 853 that are independently addressable with first and second applied voltages.

Advantageously different levels of privacy across the display area may be provided.

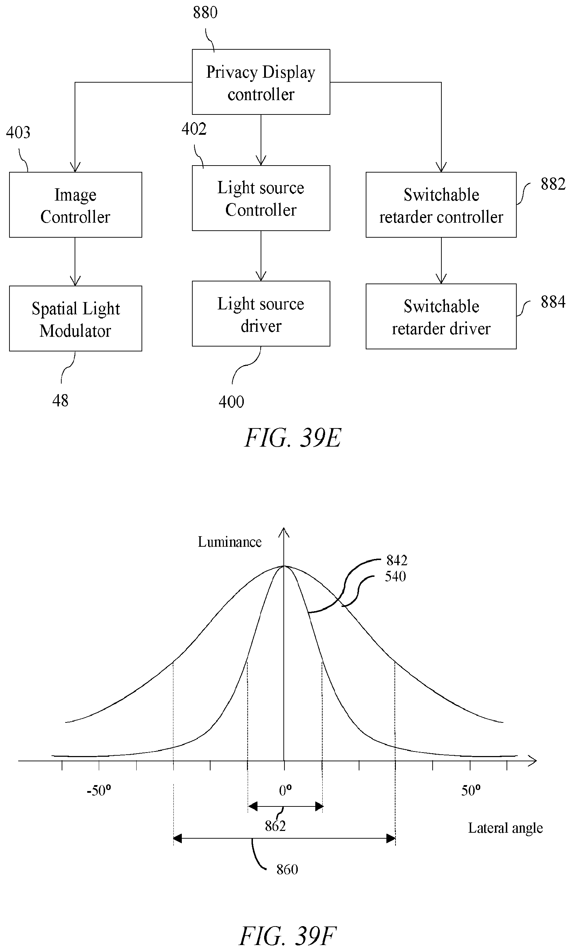

**FIGURE 39E** is a schematic diagram illustrating a flowchart for control of a directional display apparatus comprising a switchable directional backlight 101, a switchable retarder 800 and a privacy display control system 880. Privacy display controller may control backlight 101 and spatial light modulator 48 as illustrated in FIGURE 11. Further controller 882 may be arranged to provide voltage output from the switchable retarder driver 884. The control system 880, 882, 884 is thus arranged to control the applied voltage across the switchable liquid crystal retarder 800.

**FIGURE 39F** is a schematic graph illustrating variation of luminance of a directional display apparatus comprising a switchable directional backlight, a switchable retarder and a privacy display control system of FIGURE 39E. Thus the control system may be arranged to provide switching between a first mode of operation and second mode of operation.

In the first mode of operation the light sources are controlled to provide an illumination profile 842 from the waveguide 1 with a first angular width 862 (that may be the full width half maximum for a desired elevation). A first applied voltage is provided across the switchable liquid crystal retarder to achieve reduction of off-axis luminance at the desired elevation.

In a second mode of operation the light sources are controlled to provide an illumination profile 540 from the waveguide 1 with a second angular width 860 that is larger than the first angular width 862; and a second applied voltage is provided across the switchable liquid crystal retarder 800 that is different to the first applied voltage. The second applied voltage is less than the first applied voltage and may be zero such that an A-plate is provided by the switchable retarder 800.

Advantageously the privacy mode of operation may be arranged to provide cooperation of the directional backlight with the switchable retarder, reducing luminance to a snooper and reducing stray light.

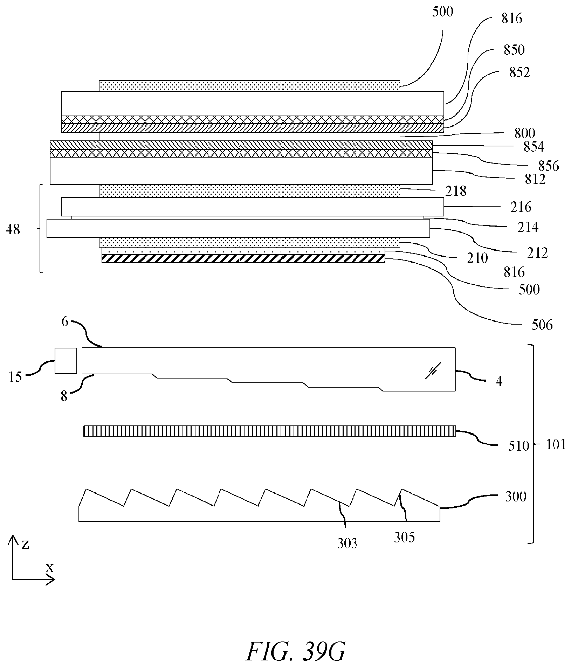

**FIGURE 39G** is a schematic diagram illustrating in side view a directional display comprising a directional waveguide and a homogeneously aligned switchable liquid crystal O-plate retarder 800 arranged between a spatial light modulator 48 and an output polariser 218. Such an arrangement may have similar optical properties to the example of FIGURE 39A. Further the homogeneously aligned switchable liquid crystal O-plate may be provided with a touch screen function.

The optical properties of the arrangements of FIGURES 39A and 39E will now be described further.

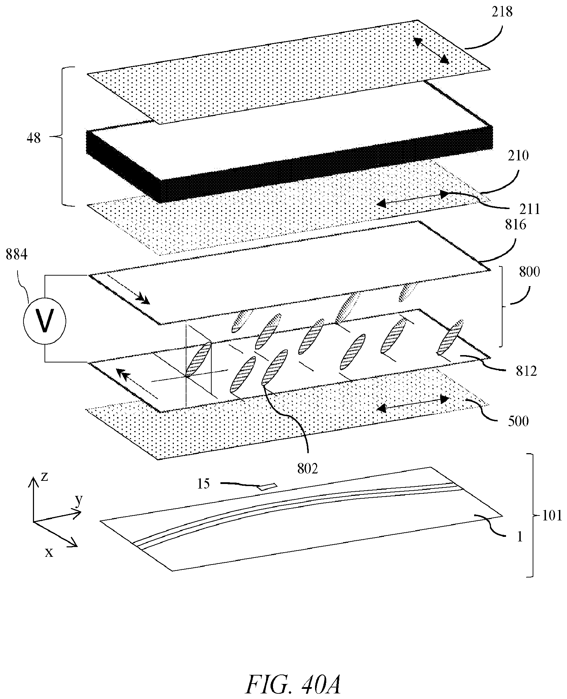

**FIGURE 40A** is a schematic diagram illustrating in perspective side view orientation of some of the retarder, alignment layers and polariser axes for the optical stack of FIGURE 39A for a first applied voltage. Thus birefringent molecules 802 may have their slow axes aligned in the x-axis, in a similar manner to that illustrated in FIGURE 36B. In comparison to the example of FIGURE 36A, the molecules 802 are aligned by the electric field provided by electrodes 850, 856 of the liquid crystal cell rather than being arranged as a fixed matrix as for a cured reactive mesogen film.

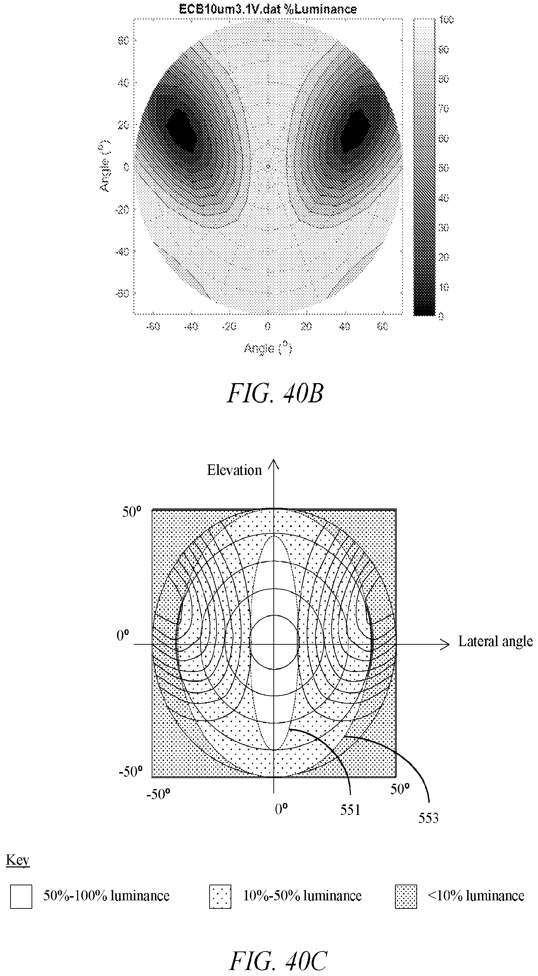

**FIGURE 40B** is a schematic luminance field-of-view graph illustrating variation in transmitted luminance of the O-plate arranged between parallel polarisers of FIGURE 40A and **FIGURE 40C** is a schematic luminance field-of-view graph illustrating variation in transmitted luminance of the optical stack of FIGURE 40A in a privacy mode of operation, device luminance being the multiplication of directional backlight 101 luminance field-of-view distribution and retarder luminance field-of-view distribution.

In the illustrative example of FIGURE 40B, a liquid crystal with birefringence 0.09 may be provided in a 10 micrometre thick cell with 2° pretilt and an applied voltage of 3.1V. Such a cell provides maximum luminance reduction at an elevation of 20 degrees and lateral angles of +/- 45°.

Thus enhanced privacy performance can be achieved in a similar manner to that illustrated in FIGURE 33C.

The present example provides minimised luminance at a viewing angle of 45 degrees in lateral angle and 22.5 degrees in elevation.

The operation of the display in wide angle mode will now be described.

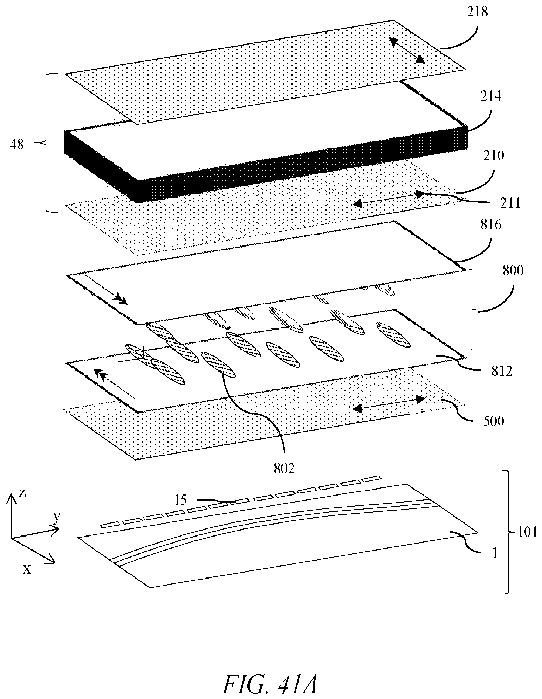

**FIGURE 41A** is a schematic diagram illustrating in perspective side view orientation of some of the retarder, alignment layers and polariser axes for the optical stack of FIGURE 39A for no applied voltage. As illustrated in FIGURE 39E, on operation in wide angle mode, the applied voltage may be controlled to control the switchable retarder 800. Typically the voltage may be removed so that the molecules 802 are aligned with the pre-tilt of the alignment layer 852, 854. As the pre-tilt is typically small, such as 2 degrees, the molecules are substantially arranged as an A-plate for the purposes of the present disclosure. The retarder thus comprises a switchable liquid crystal retarder 800 that is switchable between an O-plate retarder and an A-plate retarder with a slow axis orientation parallel to the x-axis, by means of control of the applied voltage across the switchable liquid crystal retarder 800. Further additional light sources of the array 15 may be illuminated to provide wide angle luminance distribution from the backlight.

An illustrative example of the arrangement of FIGURES 41A and 40A are given in TABLE 1.

**TABLE 1**

| FIGURE | Mode | Active LC retarder | | | | |
|---|---|---|---|---|---|---|
| | | Alignment layers | Pretilt /deg | Δn.d / nm | Δε | Voltage /V |
| FIGURE 41A | Wide | Homogeneous | 2 | 900 | 4.3 | 0 |
| FIGURE 40A | Privacy | Homogeneous | 2 | | | 3.1 |

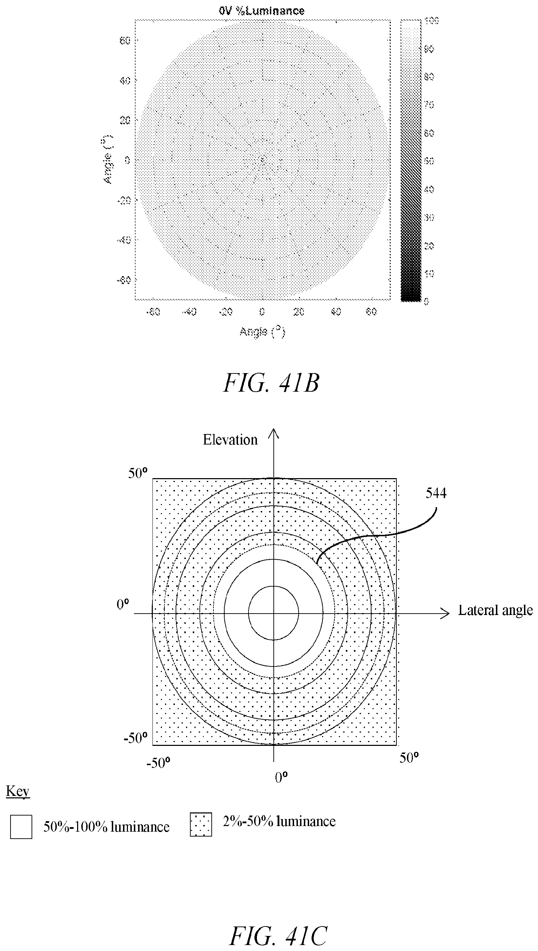

**FIGURE 41B** is a schematic luminance field-of-view graph illustrating variation in transmitted luminance of the A-plate 800 arranged between parallel polarisers of FIGURE 41A for no applied voltage; and **FIGURE 41C** is a schematic luminance field-of-view graph illustrating variation in transmitted luminance of the optical stack of FIGURE 41A in a wide angle mode of operation, device luminance being the multiplication of directional backlight 101 luminance field-of-view distribution and retarder luminance field-of-view distribution. Thus the arrangement of FIGURE 41A provides substantially no loss of light for off-axis viewing positions.

Advantageously high efficiency is achieved for wide mode viewing over a large range of viewing angles in comparison to the privacy mode of operation.

During assembly of the switchable directional backlight 101, light control structures such as light absorption regions at the input side 2 of the waveguide may be provided to reduce reflection of light that has reflected from the reflective end 4. The present example achieve reduced off-axis privacy level and thus for example the amount of light absorbed at the input end 2 may be reduced while maintaining desirable privacy levels. The efficiency of light input from the input end may thus be increased while achieving desirable privacy levels. Advantageously display luminance for off-axis viewing positions may be increased in comparison to arrangements with no homogeneously aligned switchable liquid crystal O-plate. Further in wide angle mode of operation the full width half maximum of the luminance distribution may be increased, achieving increased display visibility in the wide mode of operation.

It may be desirable to provide control of the polar location of privacy level reduction regions provided by the homogeneously aligned switchable liquid crystal O-plate 800.

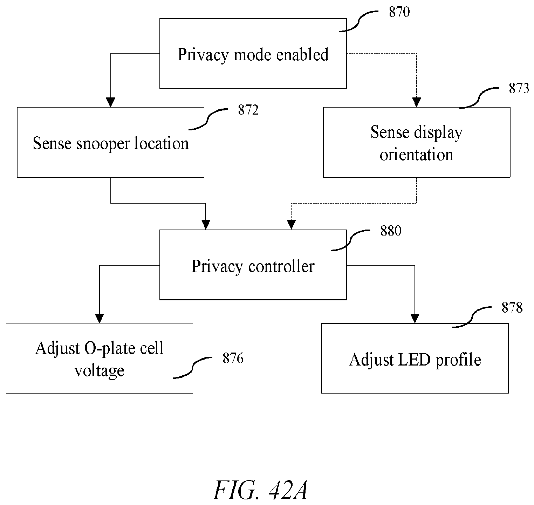

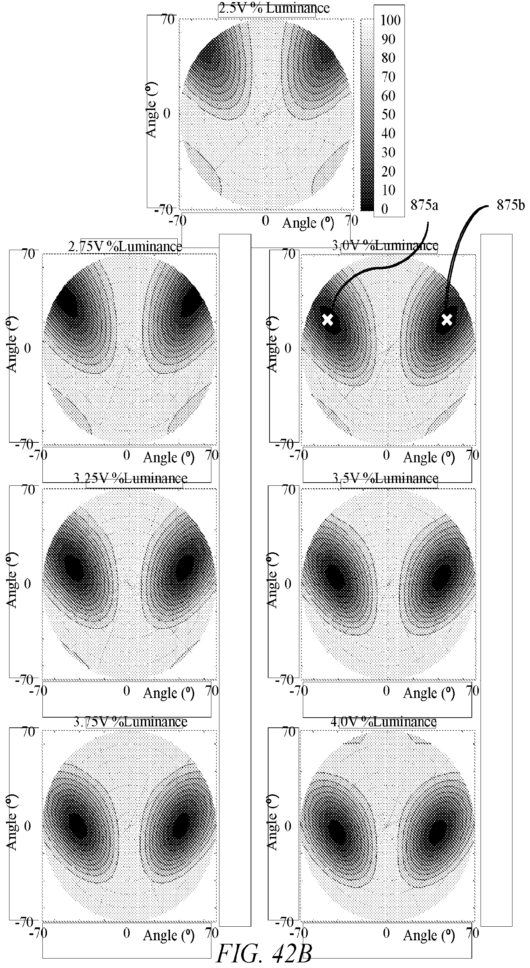

**FIGURE 42A** is a flowchart describing adjustment of homogeneously aligned switchable liquid crystal O-plate voltage in correspondence with the display viewing conditions; and **FIGURE 42B** are schematic luminance field-of-view graphs illustrating variation in transmitted luminance of the O-plate arranged between parallel polarisers of FIGURE 41A for different voltages from 2.5V to 4V. Thus the applied voltage may provide control of the luminance field-of-view minima locations in the privacy mode of operation. Further the luminance minima may be controlled between an elevation that is zero or less to elevations that are in the upper quadrants of the polar profile.

In a first step 870 a user may enable a privacy mode of operation. Such a privacy mode setting may be provided by manual setting (for example a keyboard operation) or by automatic sensing using sensor to locate the presence of a snooper as described for example in US-2017/0236494A1.

In a second step 872 the snooper location may be detected for example by means of a camera or by a keyboard setting or other method. In an illustrative example, an OFFICE setting may be provided wherein it may be desirable to optimise privacy performance for snoopers that are moving around a shared office environment and thus optimise performance for look-down viewing quadrants. By way of comparison in a FLIGHT setting, it may be desirable to provide privacy level optimisation for sitting snoopers, with improved privacy level for lower elevations than desirable for OFFICE setting.

In a third step 876 the O-plate cell voltage may be adjusted and in a fourth step 878 the LED profile may be adjusted with the control system as illustrated in FIGURE 39E.

Thus the control system may further comprise a means to determine the location of a snooper with respect to the display wherein the control system is arranged to adjust the first applied voltage in response to the snooper location.

Advantageously the privacy operation of the display may be controlled to optimise for snooper viewing geometry.

It may further be desirable to optimise the privacy appearance of a display that has a single control line to the voltage driver 844 in which voltage tuning for snooper location is not provided.

Typical primary observer locations have a lateral angle that is close to zero, for example +/-10 degrees in a privacy mode of operation. Typical snooper observer locations have a lateral angle at higher angles, for example greater than +/-30 degrees. Typical primary observer locations have an elevation of for example +/-25 degrees in a privacy mode of operation that depends on seating position, desirable display tilt and to minimise reflections from the ambient environment. By way of comparison with privacy displays that have been tuned for zero elevation snooper locations it has been appreciated in the present examples that typical snooper observer locations for devices such as laptops, cell phones and tablets in public places have an elevation of greater than zero degrees and typically between 20 and 60 degrees and more typically between 20 and 45 degrees.

The switchable liquid crystal retarder 800 between the additional polariser 500 and the input polariser 210 in the case that an additional polariser 500 is arranged on the input side of the input polariser 210 or between the additional polariser 512 and the output polariser 218 in the case that an additional polariser 512 is arranged on the output side of the input polariser 210 have a maximum attenuation luminance field of view that has an elevation that is greater than zero with respect to the direction of the normal direction to the spatial light modulator 48. In examples where the luminance profile is symmetric, then the maximum attenuation polar coordinates 875a, 875b may be provided by equal and opposite lateral angles for example.

Thus the maximum attenuation polar coordinate has an elevation between 10 degrees and 50 degrees, preferably between 15 degrees and 35 degrees and most preferably between 20 degrees and 30 degrees. The maximum attenuation polar coordinate has a lateral angle from 30 degrees to 60 degrees, preferably 40 degrees to 50 degrees and most preferably at 45 degrees.

Advantageously the control system for the voltage driver 844 may have reduced complexity and reduced cost. Further the most likely location for a snooper may be provided with the lowest luminance, reducing visibility and increasing privacy performance.

It may be desirable to provide increased reduction of privacy image visibility to a snooper. Further, it may be desirable to improve the width 860 of the wide angle mode profile 540.

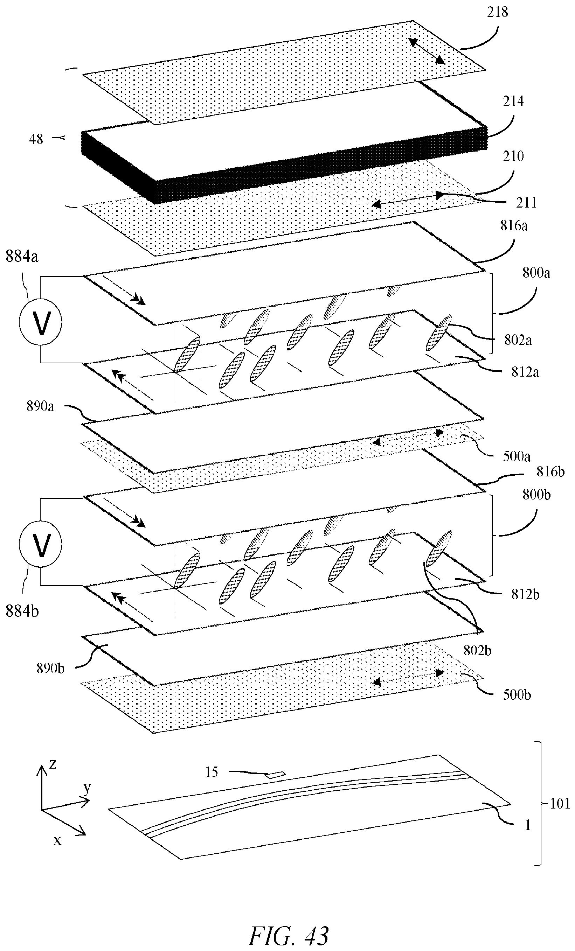

**FIGURE 43** is a schematic diagram illustrating in perspective side view orientation of some of multiple parallel homogeneously aligned switchable liquid crystal O-plates arranged between a directional backlight and a spatial light modulator 48.

First and second homogeneously aligned switchable liquid crystal O-plate retarders and first and second additional polarisers 500a, 500b are provided. Alternatively one or both of the homogeneously aligned switchable liquid crystal O-plate retarders may be provided on the output side of the output polariser 218 of the spatial light modulator 48. The combined output in the privacy mode of operation will be provided by the multiplicative luminance of the two switchable retarders 800. The display luminance field-of-view output profile in privacy mode may thus provide increased luminance reduction for a given lateral angle, or may provide an extended range of elevations that have reduced luminance in comparison to the arrangements of FIGURE 42B for example.

Further correcting passive retarder 890a is provided between additional polariser 500a and input polariser 210, and correcting passive retarder 890b is provided between a further additional polariser 500b and additional polariser 890a. The operation of the corrective retarders 890a, 890b increases the polar region over which luminance is reduced and is described further below.

Advantageously privacy performance can be improved in luminance or increased polar distribution for a given privacy level. Further head-on luminance is substantially maintained other than the losses due to the additional polariser 500b.

Light control methods in the backlight may be reduced, thus providing higher efficiency and wider profile 540 width 860 and with higher efficiency.

It may be desirable to provide enhanced privacy performance for high elevations for zero lateral angle operation.

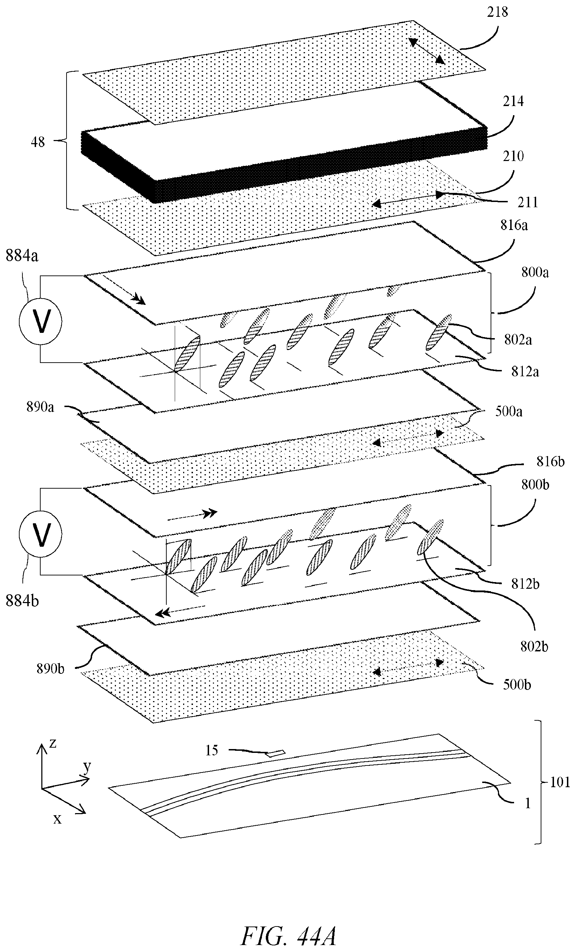

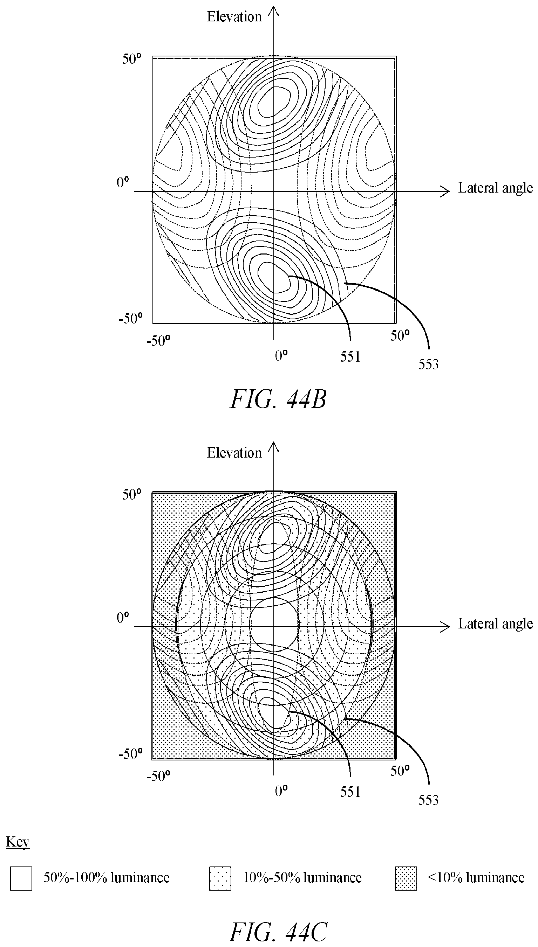

**FIGURE 44A** is a schematic diagram illustrating in perspective side view orientation of multiple orthogonal homogeneously aligned switchable liquid crystal O-plates arranged between a directional backlight and a spatial light modulator 48; **FIGURE 44B** is a schematic luminance field-of-view graph illustrating variation in transmitted luminance of the multiple homogeneously aligned switchable liquid crystal O-plates of FIGURE 44A for an applied voltage; and **FIGURE 44C** is a schematic luminance field-of-view graph illustrating variation in transmitted luminance of the optical stack of FIGURE 44A in a wide angle mode of operation, device luminance being the multiplication of directional backlight 101 luminance field-of-view distribution and retarder luminance field-of-view distribution.

The operation of the display is similar to that shown in FIGURE 43 for arrangements in which the effect of the correcting passive retarders 890a, 890b as will be described below is not included, for illustrative purposes. The alignment direction of one of the layers is orthogonal to provide rotated privacy reduction by the switchable retarder 800b.

Advantageously privacy operation may be provided for all-round viewing of the display by a snooper.

It may be desirable to enhance privacy levels for zero elevation viewing and also for viewing from viewing quadrants.

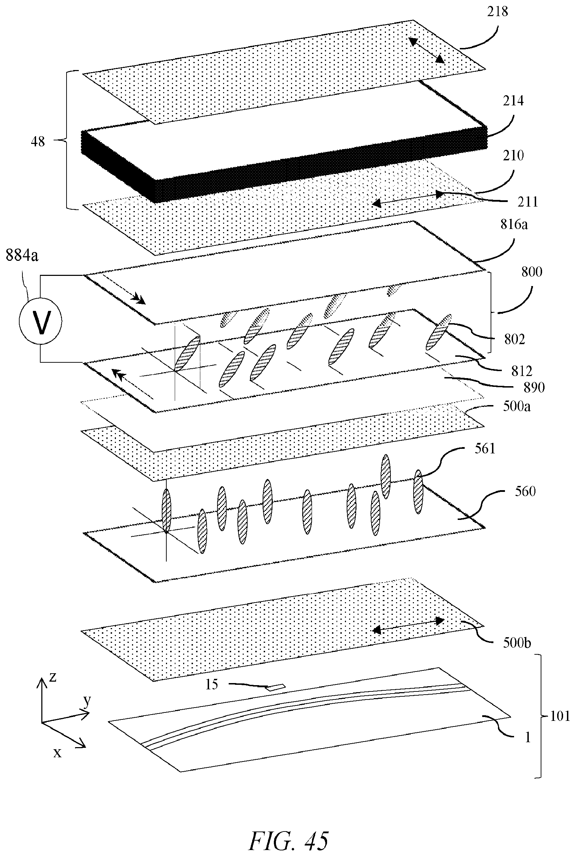

**FIGURE 45** is a schematic diagram illustrating in perspective side view orientation of a homogeneously aligned switchable liquid crystal O-plate 800 and a C-plate 560 arranged between a directional backlight 101 and a spatial light modulator 48.

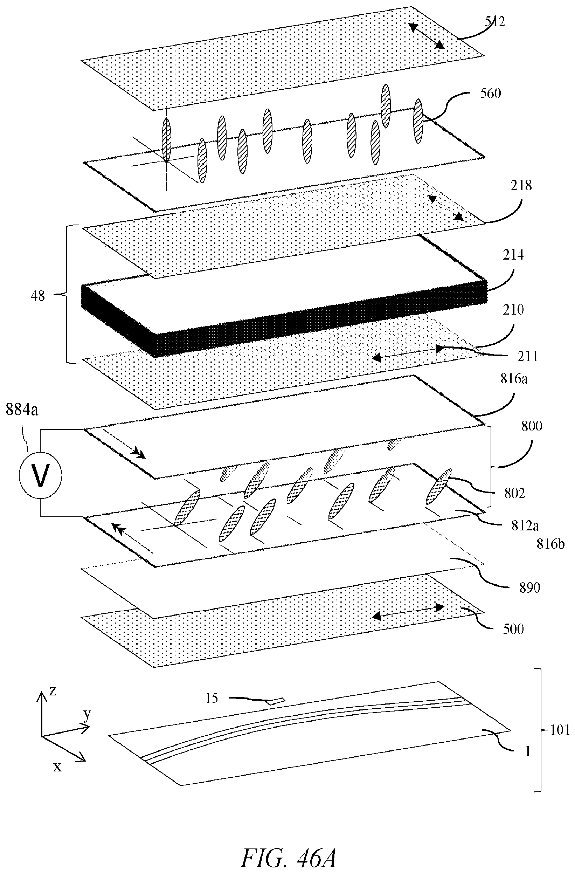

**FIGURE 46A** is a schematic diagram illustrating in perspective side view orientation of a homogeneously aligned switchable liquid crystal O-plate 800 arranged between a directional backlight 101 and a spatial light modulator 48 and a C-plate 560 arranged between the spatial light modulator and a further additional polariser 512 Further compensating passive retarder 890 as will be described below may be provided between the additional polariser 500 and input polariser 210.

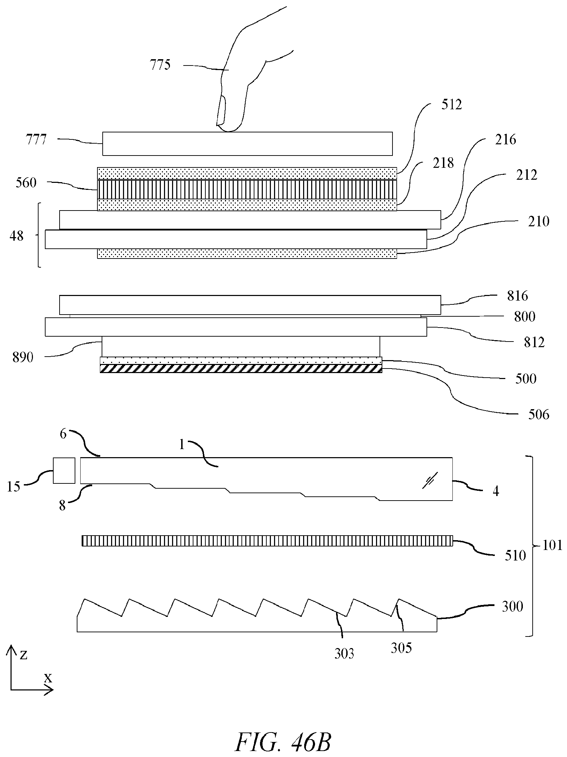

**FIGURE 46B** is a schematic diagram illustrating in side view a directional display comprising a directional waveguide 1 and a homogeneously aligned switchable liquid crystal O-plate arranged between a spatial light modulator and an output polariser and a C-plate 560 arranged between the spatial light modulator output polariser 218 and a further additional polariser 512.

The C-plate 560 operation and switchable liquid crystal O-plate 800 operation provide multiplicative functions as described elsewhere, however the functions are divided between the rear and front of the display. The C-plate 560 and polariser 512 may be arranged as layers of a front mounted touch screen apparatus 777 for finger 775 interaction, advantageously reducing cost and complexity.

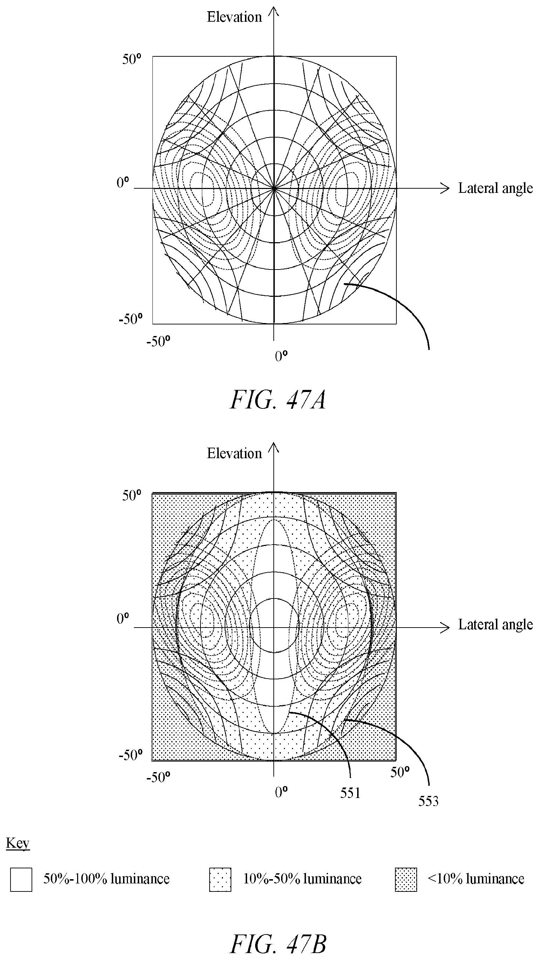

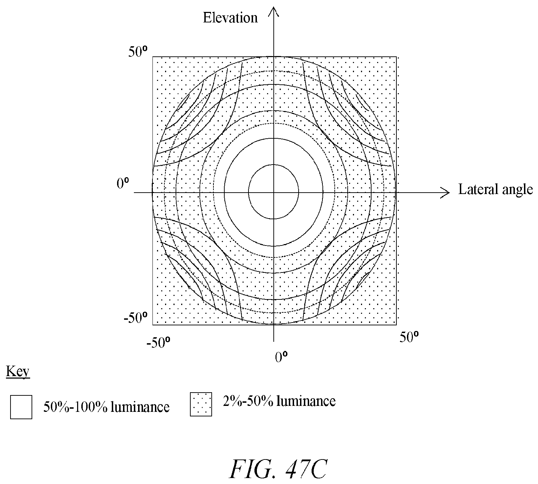

**FIGURE 47A** is a schematic luminance field-of-view graph illustrating variation in transmitted luminance of the homogeneously aligned switchable liquid crystal O-plate and C-plate of FIGURES 45-46B for an applied voltage; **FIGURE 47B** is a schematic luminance field-of-view graph illustrating variation in transmitted luminance of the optical stack of FIGURES 45-46B in a privacy mode of operation, device luminance being the multiplication of directional backlight 101 luminance field-of-view distribution and retarder luminance field-of-view distribution; and **FIGURE 47C** is a schematic luminance field-of-view graph illustrating variation in transmitted luminance of the optical stack of FIGURES 45-46B in a wide angle mode of operation, device luminance being the multiplication of directional backlight 101 luminance field-of-view distribution and retarder luminance field-of-view distribution.

Thus a display device may comprise a backlight 101 arranged to output light; a transmissive spatial light modulator 48 arranged to receive output light from the backlight 101; an input polariser 210 arranged at the input side of the spatial light modulator 48 between the backlight 101 and the spatial light modulator 48; and an output polariser 218 arranged at the output side of the spatial light modulator 48. Additional polarisers 500, 512 are arranged at the input side of the input polariser 210 between the input polariser 210 and the backlight 101 and on the output side of the output polariser 218 respectively. At least one retarder 800 is arranged between the additional polariser 500 and the input polariser 210 in the case that an additional polariser 500 is arranged on the input side of the input polariser 210. At least one retarder 560 is arranged between the additional polariser 512 and the output polariser 218 in the case that the additional polariser 512 is arranged on the output side of the input polariser 210.

Reduction of luminance in quadrants as illustrated elsewhere herein may be provided, in addition to switchable control of luminance at lower elevations as illustrated in FIGURE 42B, the polar profiles being multiplicative. In comparison to the arrangements of FIGURES 43 and 44A, the passive C-plate 560 may advantageously have reduced thickness, complexity and cost.

The luminance field-of-view profiles of FIGURE 42B for example provide maximum attenuation polar regions around coordinates 875 that are relatively small polar regions. It would be desirable to increase the area of the polar regions for which off-axis luminance is reduced when a switchable liquid crystal retarder is activated. Further it would be desirable to have substantially no reduction of luminance profile or increase in power consumption in wide angle mode of operation.

Examples will now be described wherein the switchable liquid crystal retarder comprises at least one homeotropic alignment layer. At least one correcting passive retarder is arranged between the at least one additional polariser 500 and the input polariser 210 in the case that the additional polariser 500 is arranged on the input side of the input polariser 210 or between the additional polariser 512 and the output polariser 218 in the case that the additional polariser is arranged on the output side of the input polariser 210. The correcting passive retarder comprises a negative C-plate or crossed A-plates.

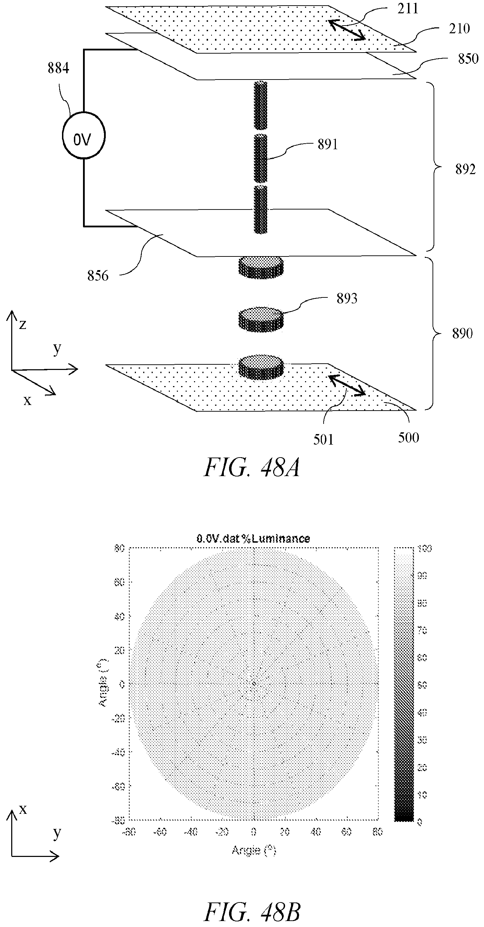

**FIGURE 48A** is a schematic diagram illustrating in perspective side view orientation in a wide angle mode of operation, a homeotropically aligned switchable liquid crystal O-plate 892 (and thus substantially providing a positive C-plate); and a negative C-plate correcting passive retarder 890 arranged between the input polariser 210 of a spatial light modulator and an additional polariser 500. Thus the display may be provided with at least one retarder that comprises at least one correcting passive retarder 890 and at least one switchable liquid crystal retarder 892.

**FIGURE 48B** is a schematic luminance field-of-view graph illustrating variation in transmitted luminance of the optical stack of FIGURE 48A in a wide angle mode of operation. The negative C-plate material 893 is illustrated as discotic liquid crystal molecules (that may be in a cured film); as described elsewhere the negative C-plate may alternatively comprise stretched films for example.

In operation for off-axis incident light, the increase in birefringence for light rays that passes through the switchable positive O-plate is compensated by the reduction in birefringence for the rays as they pass through the negative C-plate. Thus for all viewing angles there is substantially no net birefringence and the combination achieves a wide viewing mode.

Advantageously zero volt drive and thus zero power is achieved for wide angle mode and substantially no change to wide angle luminance profile is achieved.

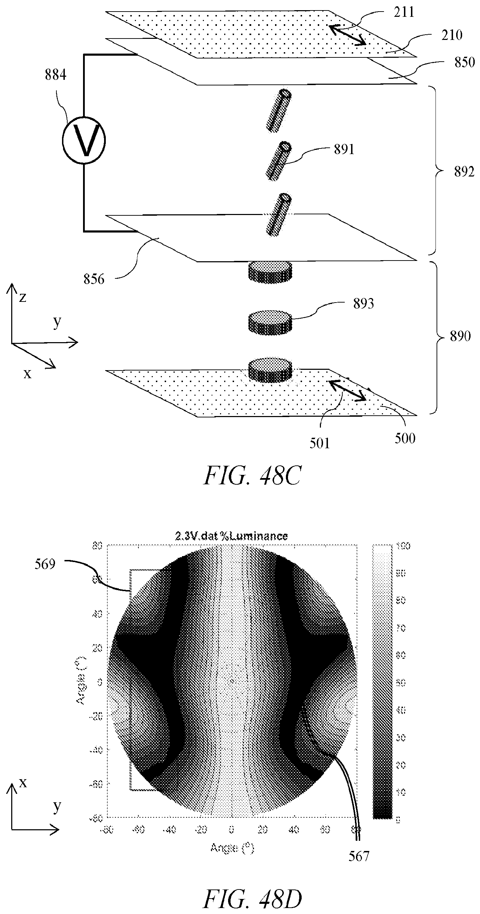

**FIGURE 48C** is a schematic diagram illustrating the example of FIGURE 48A when a voltage is applied by driver 884 to the switchable liquid crystal O-plate 892 in a privacy mode of operation by means of applying a voltage across the liquid crystal material 891and **FIGURE 48D** is a schematic luminance field-of-view graph illustrating variation in transmitted luminance of the optical stack of FIGURE 48C in a privacy mode of operation.

By way of comparison with the arrangements of FIGURE 42B for example, the area of the polar region that has attenuation below 20% for example is substantially increased. Advantageously the polar coordinates from which a snooper can perceive data on a display may be substantially reduced.

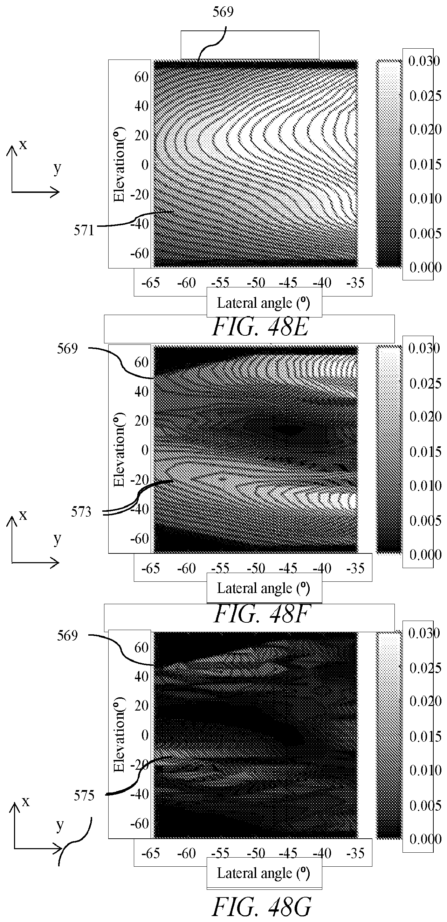

**FIGURE 48E** is a schematic luminance field-of-view graph illustrating variation in transmitted luminance of a directional backlight in the polar region 569 as illustrated in FIGURE 48D. The image has a 3% privacy threshold setting, so some regions may be substantially above that level.

**FIGURE 48F** is a schematic luminance field-of-view graph illustrating variation in transmitted luminance of a directional backlight in a polar region of FIGURE 48F further modulated by the optical stack of FIGURE 40A. Thus while there is substantial reduction in privacy level around the key snooper viewing angles of 45 degrees lateral angle and 20 degrees elevation, there are other regions where the base image luminance is not as reduced, and so a snooper can more easily perceive the image.

**FIGURE 48G** is a schematic luminance field-of-view graph illustrating variation in transmitted luminance of a directional backlight in a polar region of FIGURE 48F further modulated by the optical stack of FIGURE 48C.

In the present disclosure, the liquid crystal retarder may have an optical thickness between 500nm and 1000nm, preferably between 700nm and 900nm and most preferably between 775nm and 825nm. Further the at least one correcting passive retarder may have an optical thickness between 400nm and 800nm, preferably between 550nm and 750nm and more preferably between 625nm and 675nm.

TABLE 2 describes an illustrative example for the arrangement of FIGURES 48A and 48C.

**TABLE 2**

| FIGURE | Mode | Correcting passive retarder(s) | | Active LC retarder | | | | |
|---|---|---|---|---|---|---|---|---|
| | | Type | Δn.d /nm | Alignment layers | Pretilt /deg | Δn.d / nm | Δε | Voltage /V |
| FIGURE 48A | Wide | Negative C | -750 | Homeotropic | 88 | 918 | -4.3 | 0 |
| FIGURE 48C | Privacy | | | Homeotropic | 88 | | | 2.3 |

In another illustrative example, the active LC retarder 892 may have an optical thickness of 800nm and the correcting passive retarder 890 may be a C-plate with an optical thickness of -650nm.

The low luminance vertical bands 567 seen in the exemplary field-of-view plot of FIGURE 48D are translated to higher lateral angles (that is, pushed apart) with decreasing active LC retarder cell optical thickness and decreasing correcting passive retarder optical thickness. In comparison to the arrangement of TABLE 2, maximum attenuation is achieved at a larger horizontal viewing angle. Such an arrangement will achieve a wider horizontal viewing angle so that change in luminance with viewing angle and angular color variation is advantageously reduced.

Further, optimisation may be provided for best privacy performance at 45 degrees lateral angle and 22.5 degrees elevation for example. Such a display provides increased privacy performance for typical snooper angular locations.

In comparison with FIGURE 48F and the illustrative example of FIGURE 40A, the region over which a snooper can perceive an image is advantageously substantially reduced. Further voltage is reduced and power consumption lowered.

It may be desirable to provide high privacy levels in displays with conventional wide angle backlights.

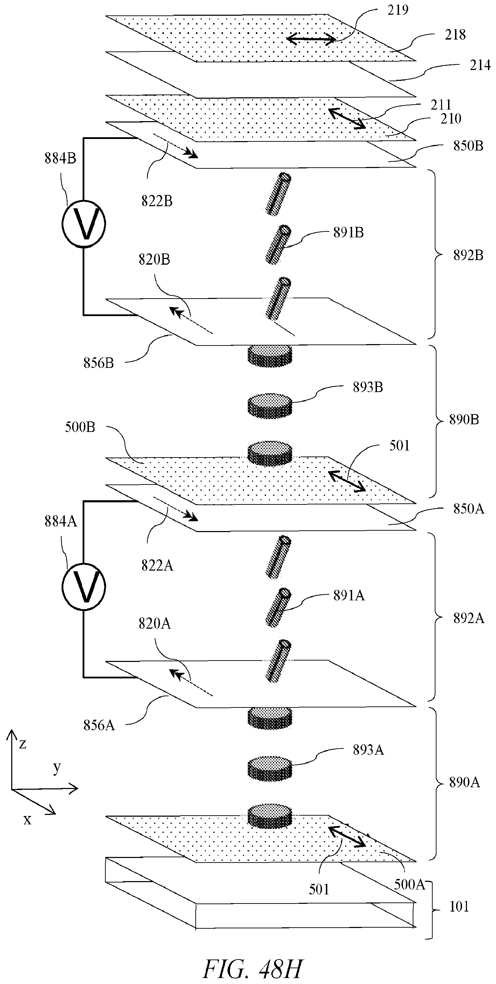

**FIGURE 48H** is a schematic diagram illustrating in perspective side view orientation of multiple parallel homeotropically aligned switchable liquid crystal O-plates 892A, 892B and correcting passive retarders 890A, 890B arranged between a backlight 101 and a spatial light modulator 48. Backlight 101 may for example be a conventional (non-directional) backlight, or may be a directional backlight that is not switchable between at least two different lateral luminance profiles. The multiplicative effect on luminance of profiles as illustrated in FIGURE 48D from each stack 890A, 892A and stack 890B, 892B advantageously 892A, 892B achieve substantial reduction in privacy level over a wide field of view. Further cost and complexity of the backlight may be reduced and extended wide angle performance achieved.

Thus the display device may further comprise at least one further additional polariser 500B and at least one further correcting passive retarder 890B and at least one further switchable liquid crystal retarder layer 892B arranged between the at least one further additional polariser 500B and the input polariser 210 in the case that the further additional polariser 500B is arranged on the input side of the input polariser or between the further additional polariser 500B and the output polariser 218 in the case that the further additional polariser 500B is arranged on the output side of the input polariser 210.

Electrodes 850A, 856A of the first switchable liquid crystal retarder layer 892A may further have respective alignment layers (not shown) provided between the respective electrode and the liquid crystal retarder layer 892A; and electrodes 850B, 856B of the first switchable liquid crystal retarder layer 892B may further have respective alignment layers (not shown) provided between the respective electrode and the liquid crystal retarder layer 892B.

The alignment direction 822A of the upper alignment layer of the first switchable liquid crystal layer 892A may be parallel or anti-parallel to the alignment direction 822B of the upper alignment layer of the further switchable liquid crystal layer 892B and the alignment direction 820A of the lower alignment layer of the first switchable liquid crystal layer 892A may be parallel or anti-parallel to the alignment direction 820B of the lower alignment layer of the further switchable liquid crystal layer 892B.

Further the alignment direction of the at least first correcting passive retarder 890A may be parallel or anti-parallel to the alignment direction of the at least one further correcting passive retarder 890B. Alignment directions may be determined by rubbing alignment layers, photoalignment or other known alignment methods. In films alignment direction may be determined by stretch directions or molecular pretilts.

It may be desirable to provide privacy in displays in both lateral and elevation directions.

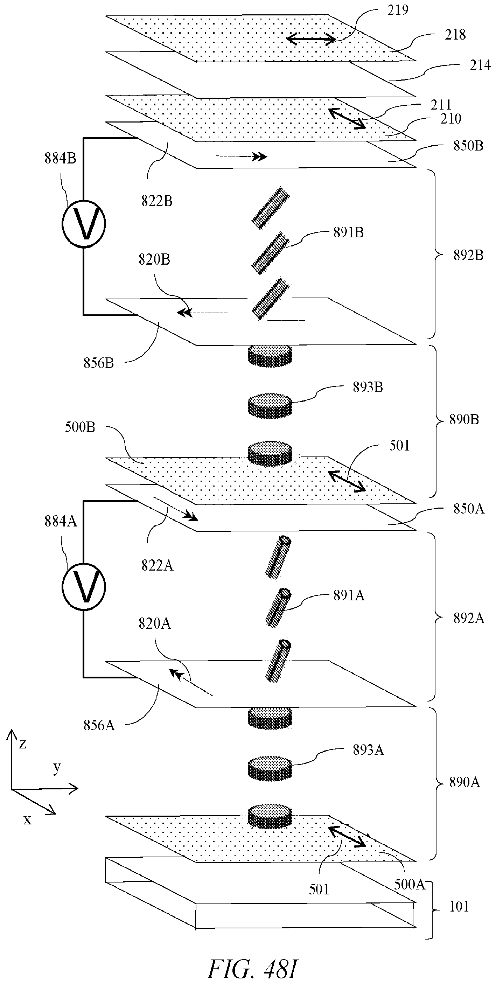

**FIGURE 48I** is a schematic diagram illustrating in perspective side view orientation of multiple orthogonal homeotropically aligned switchable liquid crystal O-plates 892A, 892B and correcting passive retarders 890A, 890B arranged between a directional backlight 101 and a spatial light modulator 48. Alignment directions of respective layers on each stack may be orthogonal to provide rotated luminance profiles.

The alignment direction 822A of the upper alignment layer of the first switchable liquid crystal layer 892A may be orthogonal to the alignment direction 822B of the upper alignment layer of the further switchable liquid crystal layer 892B and the alignment direction 820A of the lower alignment layer of the first switchable liquid crystal layer 892A may be orthogonal to the alignment direction 820B of the lower alignment layer of the further switchable liquid crystal layer 892B.

Further the alignment direction of the at least first correcting passive retarder 890A may be orthogonal to the alignment direction of the at least one further correcting passive retarder 890B.

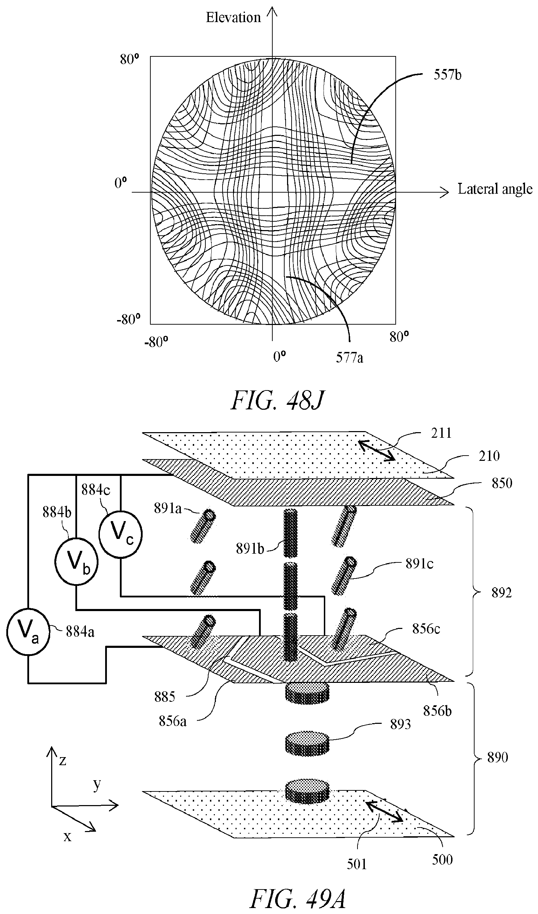

**FIGURE 48J** is a schematic luminance field-of-view graph illustrating variation in transmitted luminance of the optical stack of FIGURE 48I in a privacy mode of operation. Profile contours 577a, 577b are provided orthogonally and together multiply to provide high on-axis luminance with reduced luminance for both elevation and lateral angle off-axis viewing locations for a snooper. Advantageously image visibility for snoopers viewing from over the head of the primary viewer may be reduced.

It may be desirable to further reduce the visibility of a privacy image to a snooper 47.

**FIGURE 49A** is a schematic diagram illustrating in perspective side view orientation of a homeotropically aligned patterned switchable liquid crystal O-plate 892 arranged between a directional backlight 101 (not shown) and a spatial light modulator 48 (not shown) in a privacy mode of operation arranged to comprise switchable camouflage regions. At least one of the electrodes 850, 856 may be patterned, in this example electrode 856 is patterned with regions 856a, 856b, 856c and driven by respective voltage drivers 884a, 884b, 884c with voltages Va, Vb, Vc. Gaps 885 may be provided between the electrode regions 856a, 856b, 856c. The tilt of the molecules 891a, 891b, 891c may thus be adjusted independently to reveal a camouflage pattern with different luminance levels for off-axis viewing.

Thus at least one of the at least one retarders arranged between the at least one additional polariser 500 and the input polariser 210 in the case that the additional polariser 500 is arranged on the input side of the input polariser or between the additional polariser 500 and the output polariser 218 in the case that the additional polariser 500 is arranged on the output side of the input polariser 210 is controlled by means of addressing electrodes 856a, 856b, 856c and uniform electrode 850. The addressing electrodes may be patterned to provide at least two pattern regions comprising electrode 856a and gap 885.

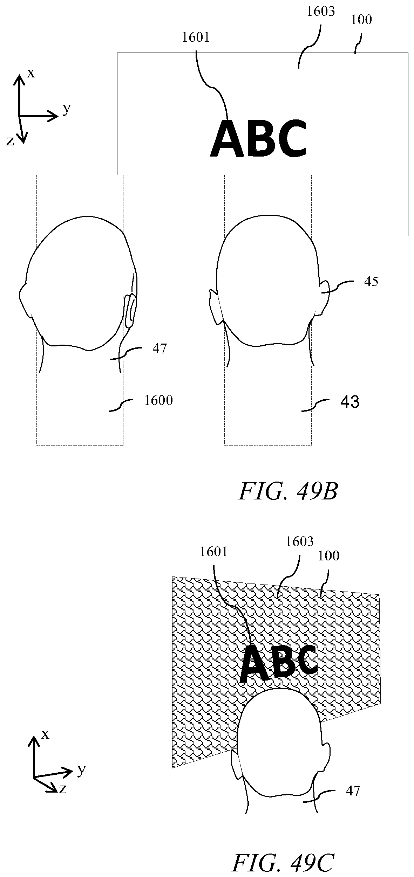

**FIGURE 49B** is a schematic diagram illustrating in perspective front view illumination of a primary viewer and a snooper by a camouflaged luminance controlled privacy display. Display 100 may have dark image data 1601 and white background data 1603 that is visible to the primary viewer 45 in viewing window 43. By way of comparison snooper 47 in viewing location 1600 may the camouflaged image as illustrated in **FIGURE 49C** which is a schematic diagram illustrating in perspective side view illumination of a snooper by a camouflaged luminance controlled privacy display. Thus in white background regions 1603, a camouflage structure may be provided that has mixed luminance of the white region 1603. The pattern regions of the electrodes 856a, 856b, 856c are thus camouflage patterns. At least one of the pattern regions is individually addressable and is arranged to operate in a privacy mode of operation.

The pattern regions may be arranged to provide camouflage for multiple spatial frequencies by means of control of which patterns are provided during privacy mode of operation. In an illustrative example, a presentation may be provided with 20mm high text. A camouflage pattern with similar pattern size may be provided with a first control of an electrode pattern. In a second example a photo may be provided with large area content that is most visible to a snooper 47. The spatial frequency of the camouflage pattern may be reduced to hide the larger area structures, by combining first and second electrode regions to provide the voltage and achieve a resultant lower spatial frequency pattern.

Advantageously a controllable camouflage structure may be provided by means of adjustment of the voltages Va, Vb, Vc across the layer 892. Substantially no visibility of the camouflage structure may be seen for head-on operation. Further the camouflage image may be removed by providing Va, Vb and Vc to be the same.

It may be desirable to reduce the cost of the negative C-plate correcting passive retarder 890 of FIGURES 48A and 48C.

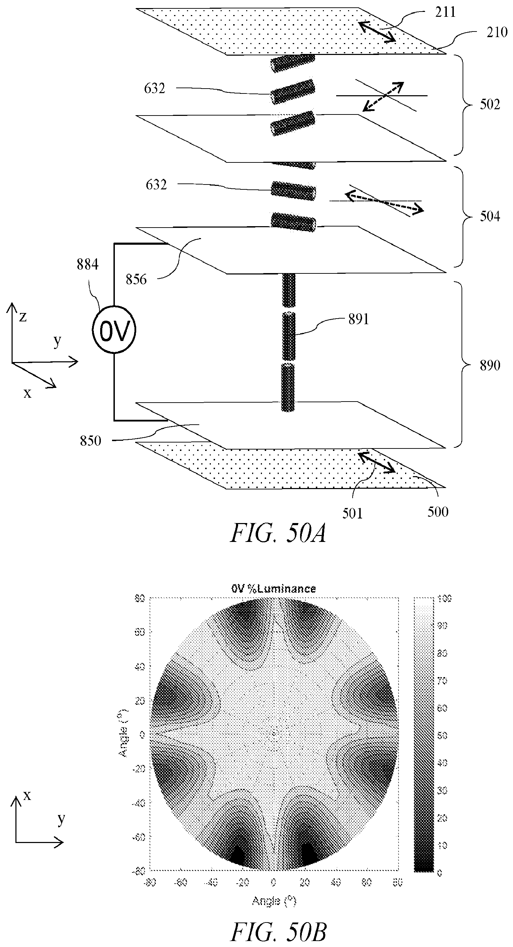

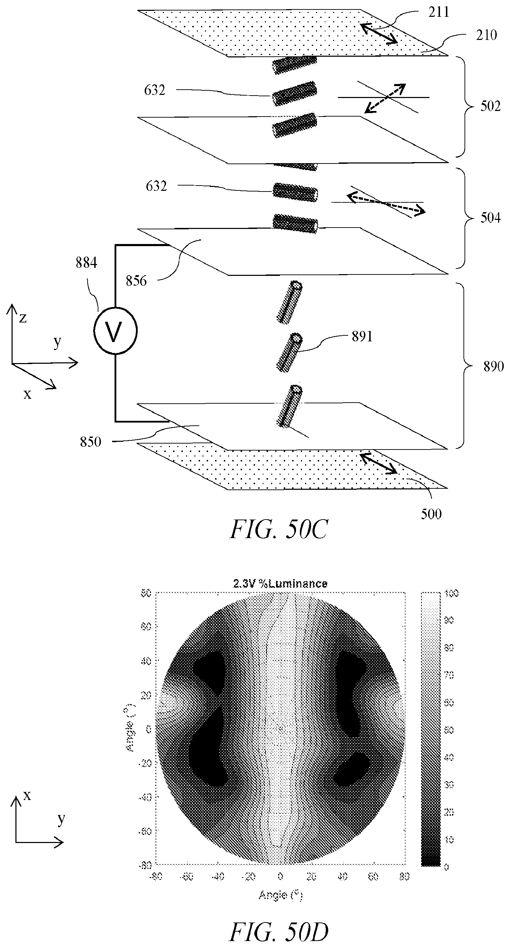

**FIGURE 50A** is a schematic diagram illustrating in perspective side view orientation of a homeotropically aligned switchable liquid crystal O-plate arranged between a directional backlight and a spatial light modulator and crossed A-plates 502, 504 arranged between the spatial light modulator input polariser 210 and an additional polariser 500 in a wide angle mode of operation; and **FIGURE 50B** is a schematic luminance field-of-view graph illustrating variation in transmitted luminance of the optical stack of FIGURE 50A in a wide angle mode of operation. **FIGURE 50C** is a schematic diagram illustrating in perspective side view orientation of a homeotropically aligned switchable liquid crystal O-plate correcting passive retarder 890 arranged between a directional backlight and a spatial light modulator and crossed A-plates arranged between the spatial light modulator and an additional polariser in a privacy mode of operation; and **FIGURE 50D** is a schematic luminance field-of-view graph illustrating variation in transmitted luminance of the optical stack of FIGURE 50C in a privacy mode of operation. An illustrative example is described in TABLE 3.

**TABLE 3**

| FIGURE | Mode | Correcting passive retarder(s) | | Active LC retarder | | | | |
|---|---|---|---|---|---|---|---|---|
| | | Type | Δn.d /nm | Alignment layers | Pretilt /deg | Δn.d / nm | Δε | Voltage /V |
| FIGURE 50A | Wide | Crossed A | +700 @ 45° | Homeotropic | 88 | 918 | -4.3 | 0 |
| FIGURE 50C | Privacy | | +700 @ -45° | Homeotropic | 88 | | | 2.3 |

In comparison to the arrangement of FIGURES 49A and 49C, the crossed A-plates may have improved privacy performance for look-down operation while maintaining a low drive voltage for low drive system cost and reduced power consumption in privacy mode. Further, the cost of the A-plates may be reduced in comparison to the negative C-plate of FIGURES 48A and 48C.

It may be desirable to further increase the area of low luminance for snoopers in privacy mode of operation.

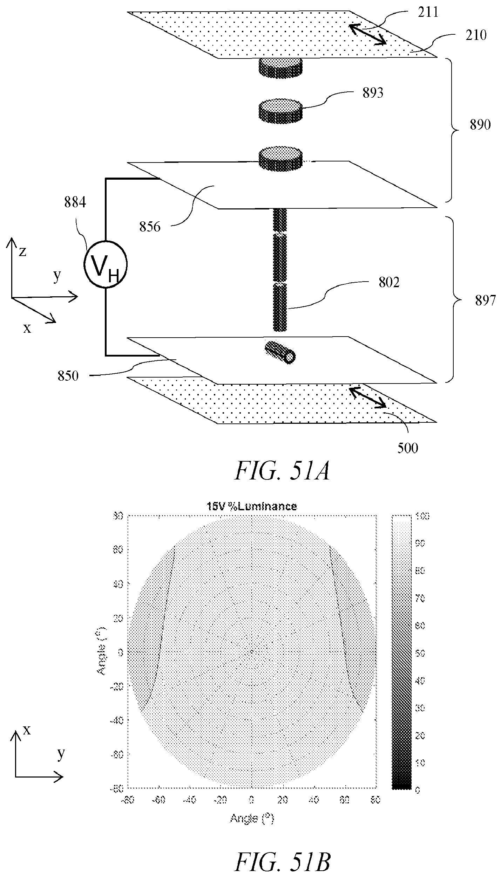

**FIGURE 51A** is a schematic diagram illustrating in perspective side view orientation of a hybrid aligned switchable liquid crystal O-plate 897 arranged between a directional backlight and a spatial light modulator and negative C-plates arranged between the spatial light modulator input polariser 210 and an additional polariser 500 in a wide angle mode of operation. A high voltage state V_{H} is provided to drive the liquid crystal layer 897 to an O-plate retarder. **FIGURE 51B** is a schematic luminance field-of-view graph illustrating variation in transmitted luminance of the optical stack of FIGURE 51A in a wide angle mode of operation.

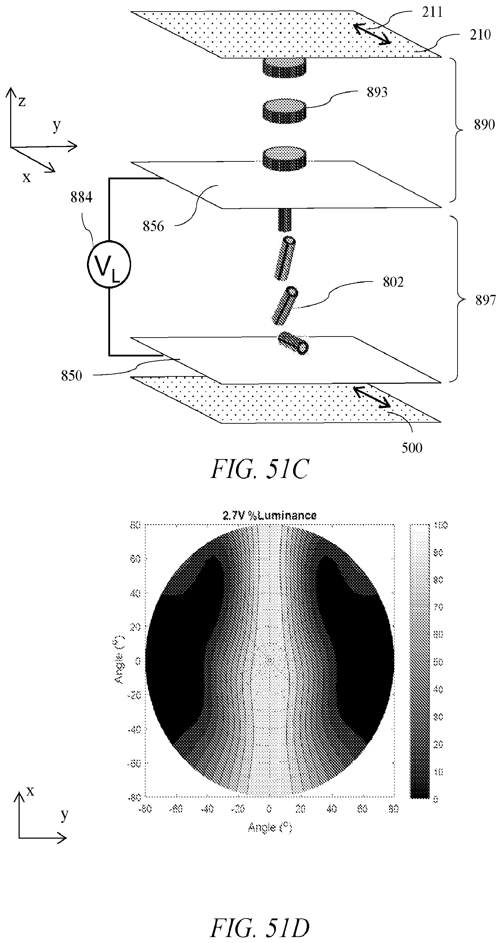

**FIGURE 51C** is a schematic diagram illustrating in perspective side view orientation of a hybrid aligned switchable liquid crystal O-plate 897 arranged between a directional backlight and a spatial light modulator and a negative C-plate arranged between the spatial light modulator and an additional polariser in a privacy mode of operation. A low voltage state V_{L} such that the retardance of the liquid crystal layer 897 cooperates with the retardance of the fixed negative C-plate correcting passive retarder 890 to achieve the luminance field-of-view profile of **FIGURE 51D****.** An illustrative example is described in TABLE 4. Negative C-plate correcting passive retarder 890 may be alternatively provided by crossed A-plates in a similar manner to FIGURES 50A and 50C.

**TABLE 4**

| FIGURE | Mode | Correcting passive retarder(s) | | Active LC retarder | | | | |
|---|---|---|---|---|---|---|---|---|
| | | Type | Δn.d /nm | Alignment layers | Pretilt /deg | Δn.d / nm | Δε | Voltage /V |
| FIGURE 51A | Wide | Negative C | -750 | Homeotropic | 90 | 1285 | +4.3 | 15.0 |
| FIGURE 51C | Privacy | | | Homogeneous | 2 | | | 2.7 |

Advantageously an increased region of viewing reduced privacy is achieved.

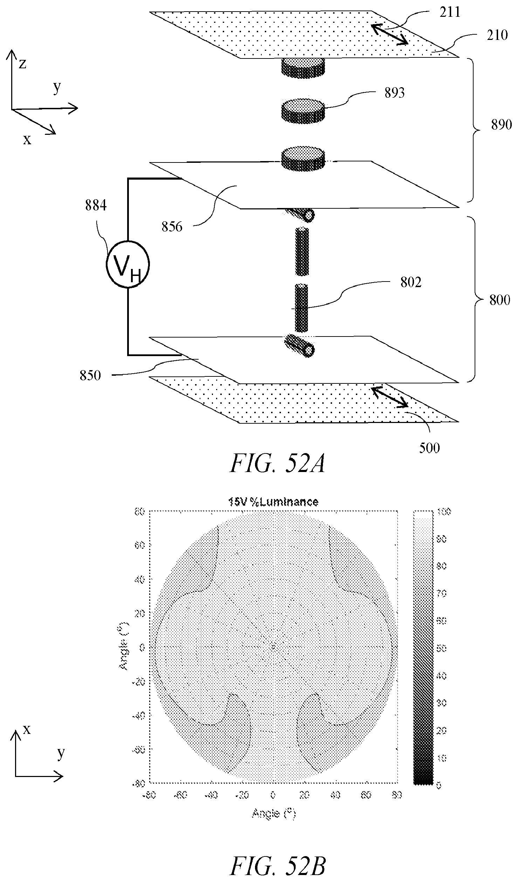

By way of comparison, arrangements which do not comprise at least one homeotropic alignment layer will now be described by means of FIGURES 52A-53D and illustrative examples of TABLE 5.

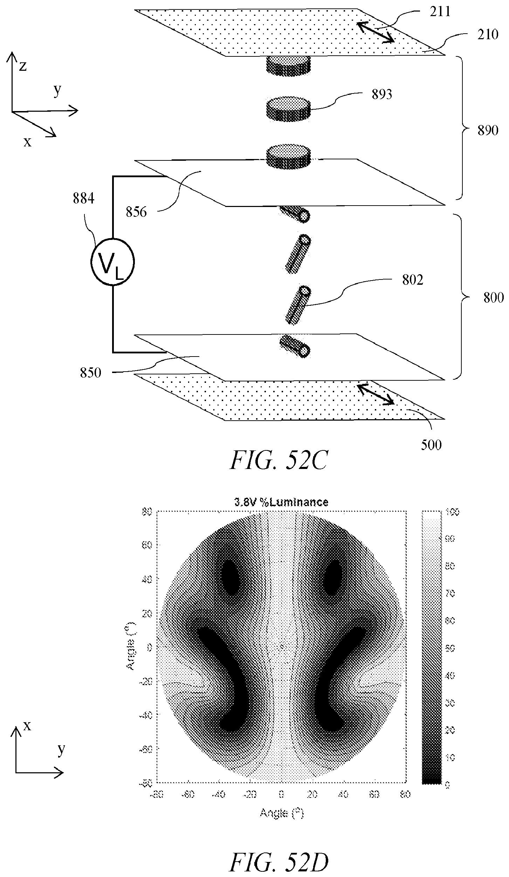

**FIGURE 52A** is a schematic diagram illustrating in perspective side view orientation of a homogeneously aligned switchable liquid crystal O-plate 800 arranged between additional polariser 500 and a spatial light modulator input polariser and a negative C-plate correcting passive retarder 890 arranged between the spatial light modulator and an additional polariser in a wide angle mode of operation. **FIGURE 52B** is a schematic luminance field-of-view graph illustrating variation in transmitted luminance of the optical stack of FIGURE 52A in a wide angle mode of operation for a high voltage V_{H} input from driver 884. **FIGURE 52C** is a schematic diagram illustrating in perspective side view orientation of a homogeneously aligned switchable liquid crystal O-plate 800 arranged between a directional backlight 101 and a spatial light modulator input polariser and a negative C-plate arranged between the spatial light modulator and an additional polariser 500 in a privacy mode of operation, provided by a low voltage V_{L}. **FIGURE 52D** is a schematic luminance field-of-view graph illustrating variation in transmitted luminance of the optical stack of FIGURE 52C in a privacy mode of operation.

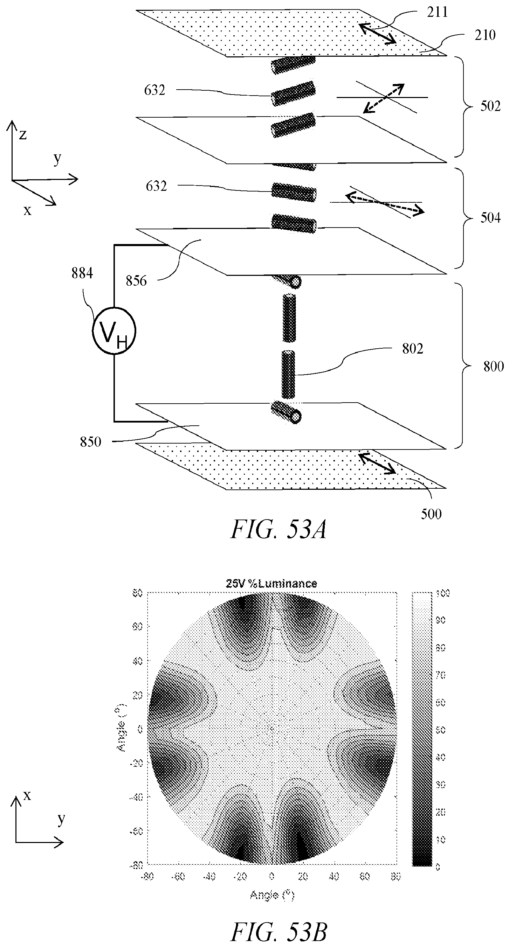

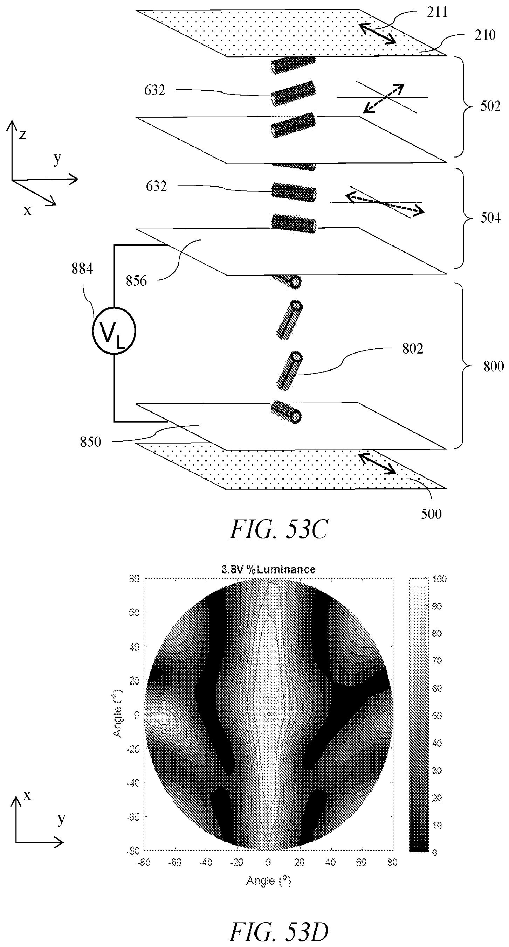

**FIGURE 53A** is a schematic diagram illustrating in perspective side view orientation of a homogeneously aligned switchable liquid crystal O-plate arranged between additional polariser 500 and a spatial light modulator input polariser 210 and crossed A-plates 502, 504 in a wide angle mode of operation for a high voltage V_{H} input from driver 884; and **FIGURE 53B** is a schematic luminance field-of-view graph illustrating variation in transmitted luminance of the optical stack of FIGURE 53A in a wide angle mode of operation. **FIGURE 53C** is a schematic diagram illustrating in perspective side view orientation of a homogeneously aligned switchable liquid crystal O-plate arranged between a directional backlight and a spatial light modulator and a negative C-plate arranged between the spatial light modulator and an additional polariser in a privacy mode of operation, provided by a low voltage V_{L}; and **FIGURE 53D** is a schematic luminance field-of-view graph illustrating variation in transmitted luminance of the optical stack of FIGURE 53C in a privacy mode of operation.

**TABLE 5**

| FIGURE | Mode | Correcting passive retarder(s) | | Active LC retarder | | | | |
|---|---|---|---|---|---|---|---|---|
| | | Type | Δn.d /nm | Alignment layers | Pretilt /deg | Δn.d / nm | Δε | Voltage /V |
| FIGURE 52A | Wide | Negative C | -750 | Homogeneous | 2 | 918 | +4.3 | 15.0 |
| FIGURE 52C | Privacy | | | Homogeneous | 2 | | | 3.8 |
| FIGURE 53A | Wide | Crossed A | +700 @ 45° | Homogeneous | 2 | 918 | +4.3 | 25.0 |
| FIGURE 53C | Privacy | | +700 @ -45° | Homogeneous | 2 | | | 3.8 |

It may be desirable to provide a voltage in a wide mode of operation and no voltage in privacy mode of operation, for example for a display that is used mostly in privacy mode and for which power saving of privacy mode operation is highly valued by the user.

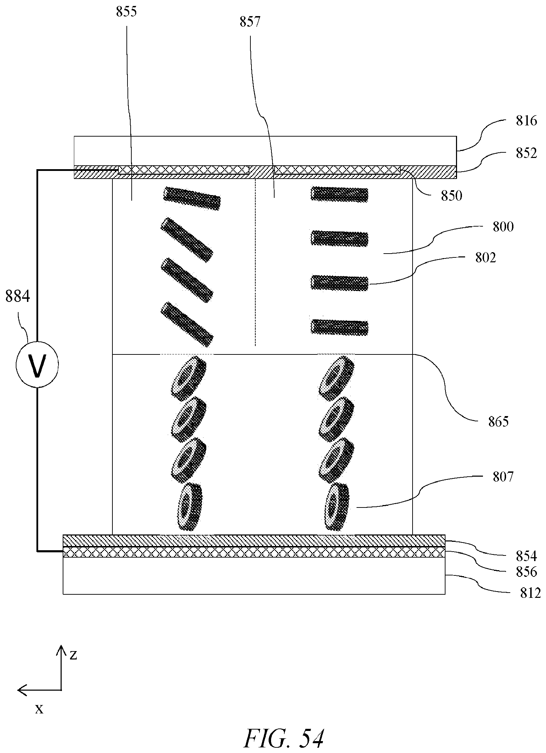

**FIGURE 54** is a schematic diagram illustrating in side view orientation of a homogeneously aligned switchable liquid crystal O-plate 800 and a fixed O-plate 807 that may be arranged with a directional backlight 101 and a spatial light modulator 48 wherein the interface between the O-plates is substantially planar. In comparison to the examples described above, the retarder material of the fixed O-plate 807 may have a negative dielectric anisotropy, that is the refractive index of the fast axis is arranged to be tilted. Such materials may be referred to as discotic materials as opposed to the rod like materials of positive dielectric anisotropy materials such as illustrated by material 802. The molecules of one of the O-plates 807, 800 may be provided as a fixed retarder, such as a cured reactive mesogen liquid crystal layer. In the present example, the retarder 807 has a fixed retardance while the retarder 800 is switchable.

In operation in a driven state for region 855, the tilted molecules of O-plate 807 are arranged to provide equal and opposite retardance to the tilted molecules of O-plate 800. Thus in the driven state, the net retardance is zero. By way of comparison in the undriven state for region 857, the molecules 802 in retarder 800 relax and no longer compensate the O-plate of the retarder 807, so that an angular profile suitable for Privacy mode operation as described elsewhere herein is provided.

Advantageously the undriven state has lower power consumption, thus the overall power consumption of the Privacy mode may be further reduced in comparison to the arrangement of FIGURE 39B for example.

It may be desirable to provide increased diffusion in the wide angle mode of operation in comparison to the privacy mode of operation.

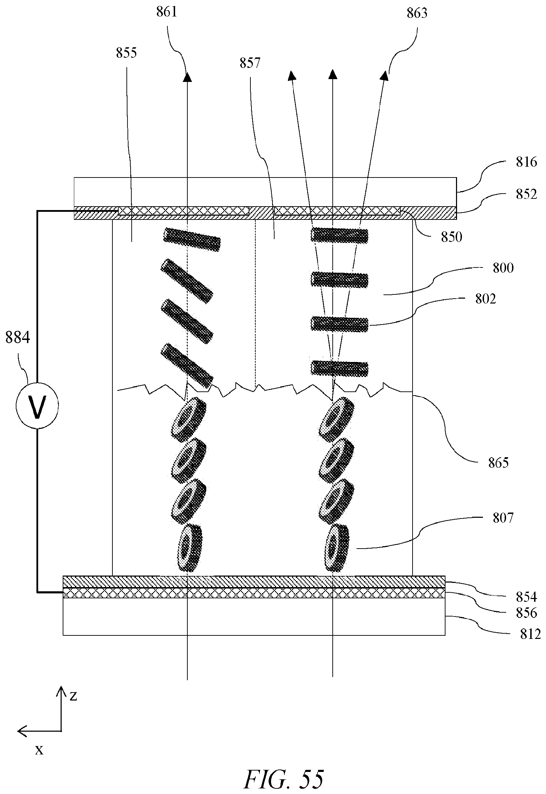

**FIGURE 55** is a schematic diagram illustrating in perspective side view orientation of a homogeneously aligned switchable liquid crystal O-plate 800 and a fixed O-plate 807 that may be arranged with a directional backlight and a spatial light modulator with no voltage applied wherein the interface 845 between the O-plates is roughened.

In operation in the driven state, the liquid crystal molecules of retarders 800, 807 are matched so that for a given polarisation state, the interface has substantially the same refractive index on each side and no refractive index is step. Such an arrangement produces no optical deflection at the roughened surface 845, and thus input light rays 861 are substantially undeflected.

By way of comparison in the undriven state, an index step is provided at the roughened surface 845 so that light rays 863 are provided with a diffused angular profile.

Advantageously a narrow angle diffusion is provided in privacy mode and a wide angle diffusion is provided in wide angle mode. Further the angular luminance control as provided for FIGURE 54 is also provided, achieving reduced image visibility for off-axis viewing positions as described elsewhere herein.

It would be desirable to minimise damage to the display apparatus during assembly and handling.

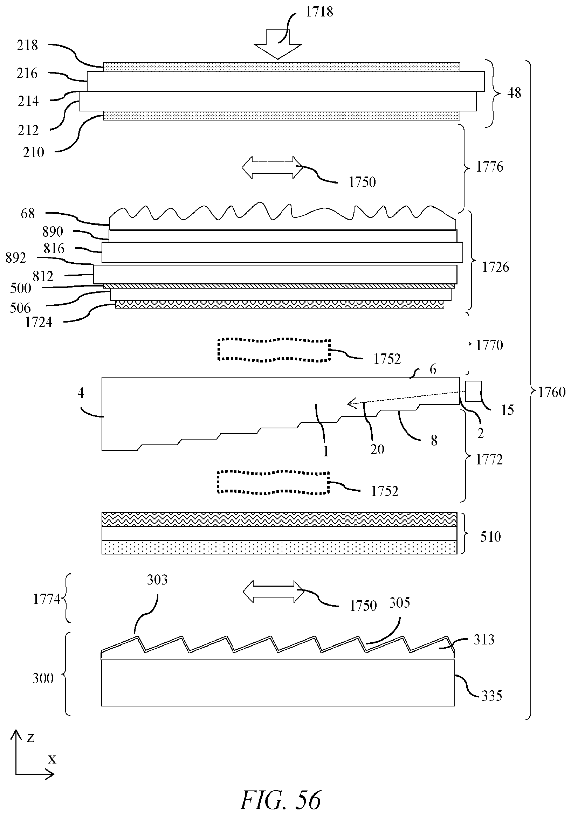

**FIGURE 56** is a schematic diagram illustrating a side view of a directional display apparatus optical stack 1760 comprising a directional waveguide 1, wherein a switchable liquid crystal retarder 892, 816, 812 is arranged between the waveguide 1 and the spatial light modulator 48 and surfaces at interfaces 1776, 1770, 1772 and 1774 are arranged to provide reduced damage by an external compressive force 718, as described in U.S. Provisional Patent Appl. No. 62/565,973, filed September 29, 2017, entitled "Optical stack for imaging directional backlights" (Attorney Ref. No. 407000).

Optical component 1726 thus comprises interfaces 1776, 1770, 1772, 1774 with surface properties arranged to provide (i) high coefficient of friction under an applied compressive load 1718 that may be by means of wetting, or optical contact, of surfaces 6, 1753 (ii) release from the surface 6 of the waveguide 1 when the compressive load is removed (iii) similar hardness and friability characteristics to the material of the waveguide 1 to minimise damage for any rubbing that does occur. Layer 1724 may further comprise a diffusing function, that may be an asymmetric diffuser with less diffusion in the lateral direction (y-axis) compared to the diffusion in the direction orthogonal to the lateral direction (x-axis).

Advantageously a privacy display that can be viewed with low image visibility from a wide range of viewing angles may be provided. The display has low sensitivity to damage from external applied compressive force 1718 and has extended lifetime and improved uniformity.

It may be desirable to provide further reduction of image visibility to off-axis snoopers by reducing image contrast as well as image luminance as described elsewhere herein. Reduction of off-axis contrast in directional displays incorporating directional backlights is described in US-2015/0378085A1.

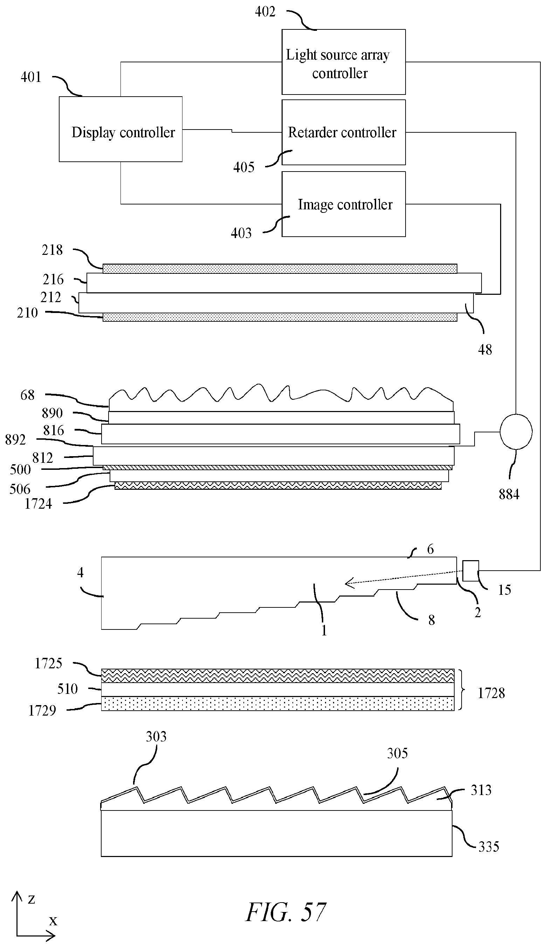

**FIGURE 57** is a schematic diagram illustrating a side view of a directional display control system comprising control of spatial light modulator, retarder layer and light source array. Control system may comprise directional display controller 401 that is arrange to provide control signals to image controller 403 and light source array controller 402. Further retarder controller 405 may be arranged to provide control signals to retarder driver 884. The spatial light modulator 48 may be arranged to have a high frame rate, for example 120Hz or greater compared to 60Hz that may be typically used for other examples described elsewhere herein. Display controller 410 may be arranged to provide at least first and second phases of signals to image controller 403, light source array controller 402 and optionally to retarder controller 405. The operation of the display to provide reduced contrast to off-axis snoopers will now be described.

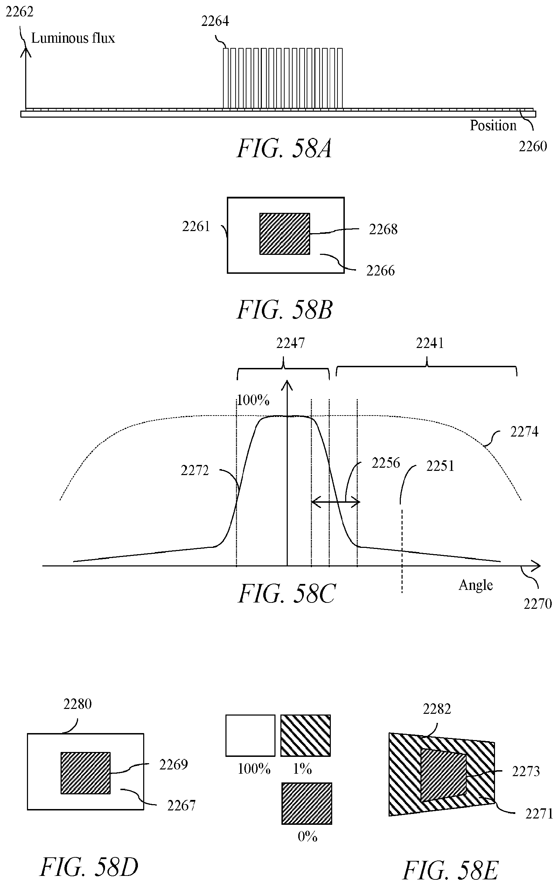

**FIGURES 58A-58E** are schematic diagrams illustrating the operation of a directional display in privacy mode wherein a primary image is provided on the spatial light modulator in at least a first phase of operation.

FIGURE 58A shows the relative luminous flux 2262 of the light sources 15a-n in array 15 of light sources against position 2260. Such an illumination structure will provide a primary illumination structure 2272 in the window plane of the display. The window plane is the plane of the image of the light sources of the array 15, for example at the location of window 26n and optical axis 197 in FIGURE 12B.

Accordingly this is an example in which there are plural primary light sources. Thus individual light source flux 2264 may be uniform in a region near the center of the array, and zero in other regions. Alternatively the flux 2264 may vary across the illuminated elements to provide a graded luminance with viewing angle within a primary viewing cone.

FIGURE 58B shows an example displayed primary image 2261 on the spatial light modulator 48 that comprises a low transmittance region 2268, for example 0% transmittance and high transmittance region 2266, for example 100%.

FIGURE 58C shows a graph that illustrates the variation of relative luminance and contrast with viewing angle 2270 of the display 100 in the window plane. Profile 2272 may be provided by the directional display comprising for example the active retarders layers 892 and additional polarisers as illustrated in FIGURE 48D for example.

Thus luminance distribution 2272 comprises a central viewing window 2247 and stray light region 2241 wherein the luminance is non-zero, for example 1% at the angular position 2251 in the following illustrative example. In operation, the amount of stray light may vary within the stray light region 2241, as shown.

FIGURE 58C further illustrates a distribution 2274 of contrast of the perceived image seen on the spatial light modulator 48 with viewing angle, that may be substantially uniform other than for high viewing angles. The polar viewing angle properties of the profile 2274 are determined by the optical properties of the liquid crystal layer 214 and polarisers 210, 218 together with an retarders between polarisers 210, 218, and are thus substantially independent of the optical properties of the backlight apparatus.

FIGURE 58D illustrates the perceived primary image 2280 for a primary observer in the central viewing window 2247, such that regions 2267, 2269 have relative luminances of 100% and 0% that are substantially equivalent to relative transmittances of regions 2266, 2268 respectively.

FIGURE 58E shows, using a representation of perspective, the perceived secondary image 2282 for angular position 2251 comprising regions 2271, 2273. Region 2273 may have substantially 0% luminance, whereas region 2271 may have 1% luminance in this illustrative example, being the transmittance of region 2266 modulated by the stray light luminance at angular position 2251.

Thus the arrangement of FIGURES 58A-58E may provide a privacy mode operation in which the luminance for a secondary observer is 1% of the luminance for the primary observer. Such an image luminance may provide obscuration of the primary image to the secondary observer by means of luminance as described elsewhere herein.

The contrast of the primary image to the secondary observer may be substantially the same and thus features may still be visible.

It may be desirable to further reduce the visibility images, for example in dark environments where small amounts of light may still provide image readability to snoopers. In the present examples, the arrangement of FIGURE 58A-58E may be provided in a first phase of operation of a temporally multiplexed display. A second phase of operation is provided to achieve further image obscuration, for example using a frame update rate of greater than 60Hz, for example 120Hz.

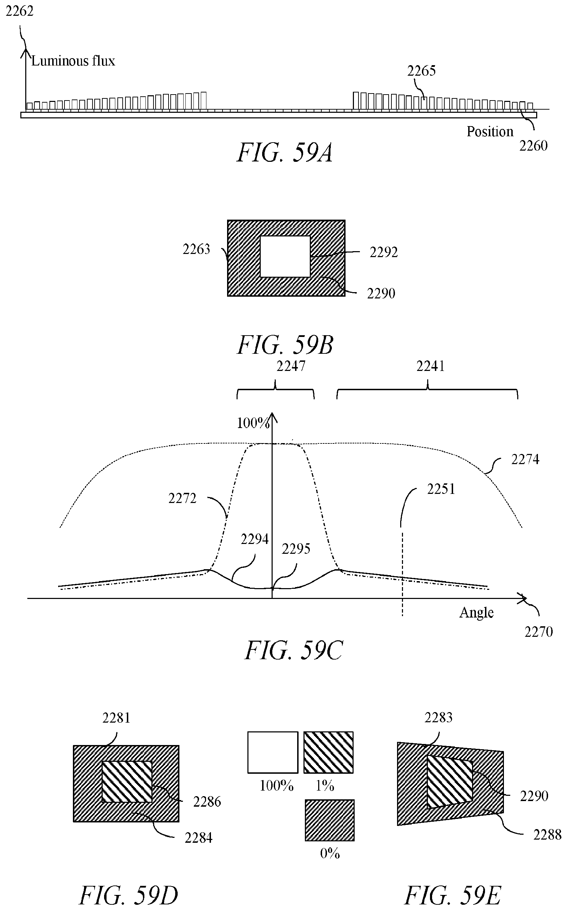

**FIGURES 59A-59E** are schematic diagrams illustrating the operation in a second phase of a directional display in privacy mode wherein a primary image is provided on the spatial light modulator in a first phase and a secondary image is provided on the spatial light modulator in a second phase.

This is an example in which there are plural secondary light sources. FIGURE 59A shows that the light sources of array 15 are operated so that the secondary light sources output light with differing luminous flux profile 2265. As a result, there is achieved secondary illumination structure such that light source flux 2265 is arranged to provide substantially the same luminance as the stray light from the primary illumination in the stray light region 2241.

FIGURE 59B shows secondary image 2263 with 0% transmittance in the region 2290 and 100% transmittance in the region 2292. Thus the displayed secondary image 2263 may for example be inverted compared to the displayed primary image 2261.

As illustrated in FIGURE 59C, the luminance structure 2294 may be substantially matched to structure 2272 in the stray light region 2241, and thus in the illustrative example may achieve a luminance of 1% at angular position 2251. The angular contrast distribution 2274 in the secondary phase is the same as for the primary phase.

FIGURE 59D illustrates the perceived secondary image 2281 to the primary observer 300 comprising region 2284 with luminance 0% and region 2286 with luminance 1% that comprises stray light 2295 from the secondary light sources. FIGURE 59E illustrates a representation of perspective of the perceived secondary image 2283 comprising region 2288 with 0% luminance and region 2290 with 1% luminance, determined by the SLM 48 transmittance for the region 2292 and luminance at position 2251.

It will be observed that the perceived image 2283 in the second phase is substantially the inverse of the perceived image 2282 in the first phase for off-axis viewing positions. The images combine to achieve a perceived secondary image with very low contrast. Advantageously a high degree of obscuration of the primary image to a secondary observer in the secondary stray light region 2241 may be provided due to contrast reduction.

In operation, matching of perceived primary and secondary images 2282, 2283 may be achieved at a small range of viewing locations, for example location 2251. At other regions of viewing, the matching of the luminance in the two phases for off-axis stray light region 2241 may be less well matched and residual image contrast may be perceived. In the present disclosure, the luminance for off-axis viewing is reduced.

In comparison to a directional display without the switchable liquid crystal retarder of the present disclosure, the difference in luminance at these non-matched angles for first and second phases is smaller. Residual image luminance differences in first and second phases are reduced, and advantageously image contrast is further reduced, advantageously reducing image visibility to a snooper.

In other words the control system 401, 403, 402 may be capable of controlling the spatial light modulator 48 and capable of selectively operating of light sources 15a-n to direct light into corresponding optical windows 26a-n, wherein stray light in the directional backlight is directed in output directions 2251 outside the optical windows 26 corresponding to selectively operated light sources 2264.

The control system may be further arranged to control the spatial light modulator 48 and the array of light sources 15a-n in synchronization with each other so that: (a) the spatial light modulator 48 displays a primary image 2261 while at least one primary light source is selectively operated to direct light into at least one primary optical window for viewing by a primary observer (that is not a snooper), and (b) in a temporally multiplexed manner with the display of the primary image 2261, the spatial light modulator 48 displays a secondary image 2263 while at least one light source other than the at least one primary light source is selectively operated to direct light into secondary optical windows outside the at least one primary optical window, the secondary image 2282 as perceived by a secondary observer (that may be a snooper) outside the primary optical window obscuring the primary image 2282 that modulates the stray light directed outside the central viewing window 2247.

It may be desirable to reduce power consumption of the display further.

The control system may be arranged to control the applied voltage across the switchable liquid crystal retarder in a temporally multiplexed manner. Thus retarder controller 405 may be further arranged to control the voltage across the switchable retarder in synchronisation with the switching of the spatial light modulator and the light sources. The stray light profile may be adjusted in cooperation with the luminous flux on the array 15 of light sources. In the first phase of operation as described with reference to FIGURE 58A, the switchable retarder may be provided with a narrow output luminance profile in the lateral direction, whereas in the second phase of operation, a wider output luminance profile may be provided.

In operation, reduced light flux may be provided in the second mode of operation if the switchable retarder has a higher off-axis output in the second phase of operation. Advantageously power consumption may be reduced in the second phase of operation, and the light sources may be driven less hard, extending lifetime and increasing efficiency.

Directional backlights comprising other types of waveguide will now be described.

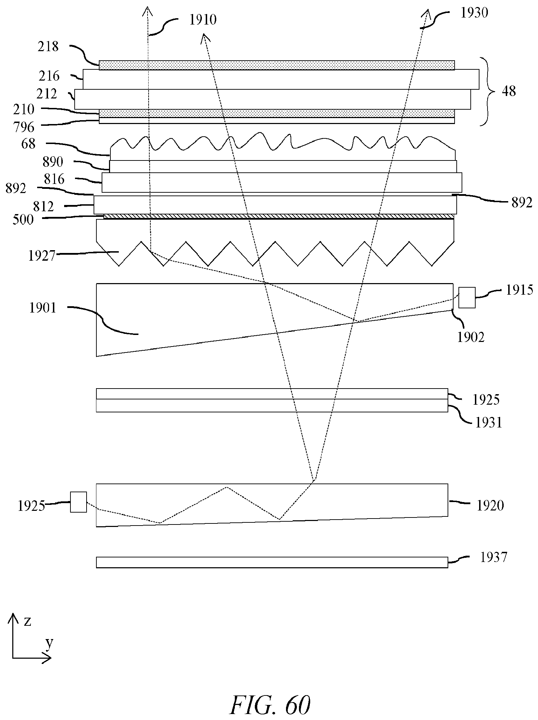

**FIGURE 60** is a schematic diagram illustrating a side view of a directional display apparatus optical stack comprising a collimating waveguide 1901, a wide angle waveguide 1920, a switchable liquid crystal O-plate 892 and a correcting passive retarder 890 arranged between additional polariser 500 and input polariser 210.

In operation fixed collimating waveguide 1901 is illuminated on side 1902 by light source 1915. The fixed collimating waveguide is provided with a taper that has a cross sectional shape that increases in width for light propagating in the waveguide in a direction away from the light sources at the input end. The tapered waveguide may alternatively or additionally be provided by tapered light redirecting micro structures as will be described in FIGURE 33. Light rays 1910 that leak from the upper surface 1906 and are incident on prism array 1926. Prism array 1927 deflects grazing incidence light rays 1910 towards the normal direction, providing a narrow light cone angle in the lateral direction (y-z plane) that may be partially diffused by diffuser 1929. The direction of the ray 1910 is substantially independent of the location of the light source 1915 on the input side 1902 and the fixed collimating waveguide 1901 does not image the source 1915 in comparison to imaging waveguide 1 that provides optical windows.

Thus a directional backlight may comprise a waveguide 1920 further comprises a taper, the waveguide being arranged to deflect input light rays 1910 guided through the waveguide 1920 from the light sources 1915 to exit through the first guide surface 1906. Thus one of the optical components 726 comprises a prism array 1927 arranged to deflect light rays 1910 that exit through the first guide surface 1906 of the waveguide 1901.

To provide a wide angle mode of operation, a second wide angle waveguide 1920 may be provided. Wide angle waveguide 1920 is provided with microstructures (not shown) on the surfaces 1921, 1919 to provide scattered light for light rays 1930 from light sources 1925.

Switchable liquid crystal retarder 892 and correcting passive retarder 890 may advantageously achieve substantially reduced off-axis image visibility to a snooper in privacy mode of operation.

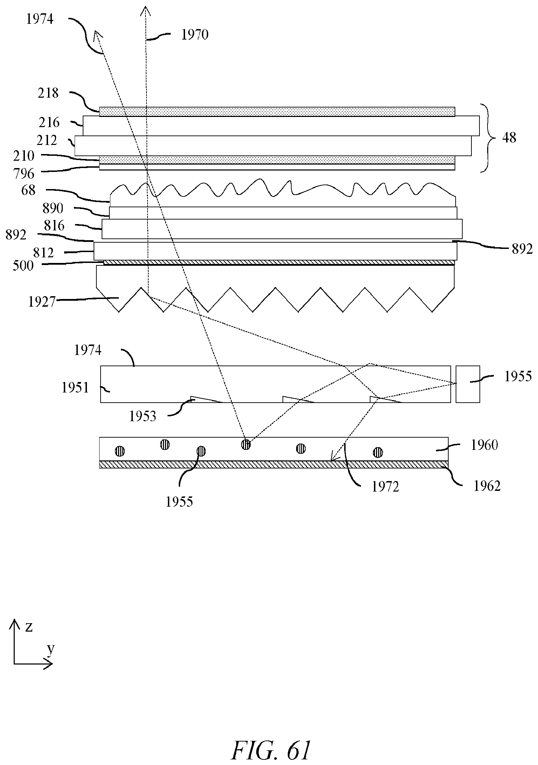

**FIGURE 61** is a schematic diagram illustrating a side view of a directional display apparatus optical stack comprising a collimating waveguide and switchable diffuser, a switchable liquid crystal O-plate and a correcting passive retarder.

Fixed collimating waveguide 1951 may be provided with microstructures 1953 that couple some light rays 1970 from light source 1955 into the vertical direction by means of reflection at prism array 726. The microstructures operate in a similar manner to the single tapered waveguide of FIGURE 60, thus the at least one tapered waveguide comprises an array of tapered microstructures 1953.

The backlight may further incorporate a switchable diffuser layer 1960 comprising polymer dispersed liquid crystal (PDLC) 1955. In a narrow angle mode of operation, the liquid crystal is arranged to transmit light rays 1972 that are transmitted through microstructures 1953. Light rays 1972 are absorbed by absorbing layer 1962 and thus not output through the spatial light modulator 48.

In a wide angle mode of operation, the liquid crystal molecules in the PDLC 1955 are switched to provide a scattering function with the surrounding medium and thus light rays 1974 are scattered to a wide range of viewing positions.

Switchable liquid crystal retarder 892 and correcting passive retarder 890 may advantageously achieve substantially reduced off-axis image visibility to a snooper in privacy mode of operation.

As may be used herein, the terms "substantially" and "approximately" provide an industry-accepted tolerance for its corresponding term and/or relativity between items. Such an industry-accepted tolerance ranges from zero percent to ten percent and corresponds to, but is not limited to, component values, angles, et cetera. Such relativity between items ranges between approximately zero percent to ten percent.

## Claims

1. A display device comprising:
a transmissive spatial light modulator (48);
a backlight arranged to output light comprising:
two pluralities of light sources (815a, 815b); and
two waveguides (801a, 801b) disposed on the rear of the transmissive spatial light modulator (48),
each waveguide (801a, 801b) comprising an input end extending in a lateral direction along a side of the waveguide (801a, 801b), wherein the input ends of the two waveguides (801a, 801b) are on opposite sides of the display device, one of the two pluralities of light sources is disposed along the input end of a first of the two waveguides (801a, 801b) and is arranged to input input light into the first waveguide (801a), and the other of the two pluralities of light sources is disposed along the input end of the second of the two waveguides (801a, 801b) and is arranged to input input light into the second waveguide (801b), and
each waveguide (801a, 801b) further comprising opposed first and second guide surfaces (806a, 808a; 806a, 806b) extending across the waveguide (801a, 801b) from the input end for guiding light input at the input end along the waveguide, each waveguide being arranged to extract input light guided through the waveguide (801a, 801b) to exit through the first guide surface in a grazing direction; and
a prismatic input layer (804) between the transmissive spatial light modulator and the two waveguides (801a, 801b), the prismatic input layer (804) being arranged to receive the light extracted from the two waveguides (801a, 801b) and to direct the received light to be incident on the spatial light modulator (48),
wherein:
the backlight is arranged so that the light from the respective waveguides (801a, 801b) is directed to provide viewing windows (821, 823) having differing widths;
the transmissive spatial light modulator (48) comprises an input polariser (210) and an output polariser (218);
the input polariser (210) is arranged on an input side of the spatial light modulator (48), the input side being located between the backlight and the spatial light modulator (48);
the output polariser (218) is arranged on an output side of the spatial light modulator (48);
an additional polariser (500) arranged on an input side of the input polariser (210) between the input polariser (210) and the backlight or on the output side of the output polariser (218);
at least one retarder (560) arranged between the additional polariser and the input polariser (210) in the case that the additional polariser is arranged on the input side of the input polariser (210) or between the additional polariser and the output polariser (218) in the case that the additional polariser is arranged on the output side of the output polariser (218);
the prismatic input layer (804) comprises first input facets (803) and second input facets (805), wherein the light extracted from the first waveguide (801a) is received by the first input facets (803) and the light extracted from one the second waveguide (801b) is received by the second input facets (805);
the light from the first waveguide (801a) that is received by the first input facets (803) is directed by total internal reflection at second input facets (805) to be incident on the spatial light modulator in directions that have a narrow cone angle so that it provides a first viewing window (821) with a width; and
the light from the second waveguide (801b) that is received by the second input facets (805) is directed by total internal reflection at first input facets (803) to be incident on the spatial light modulator in directions that have a wide cone angle so that it provides a second viewing window (823) of greater width than the first viewing window (821).

2. A display device according to claim 1, wherein the backlight further comprises a rear scattering reflector (812) arranged behind the two waveguides (801a, 801b).

3. A display device according to claim 1 or 2, wherein the backlight further comprises an intermediate diffuser layer (810) arranged between the two waveguides (815a, 815b).

4. A display device according to any one of the preceding claims, wherein the at least one retarder comprises at least one switchable liquid crystal retarder and at least one correcting passive retarder.

5. A display device according to claim 4, wherein, defining optical thickness as the product of birefringence and thickness, the liquid crystal retarder has an optical thickness between 500nm and 1000nm, and/or the at least one correcting passive retarder has an optical thickness between 400nm and 800nm.

6. A display device according to claim 5, wherein the at least one correcting passive retarder comprises:
a pair of retarders which have slow axes in a plane of the retarders that are crossed;
a retarder having a slow axis perpendicular to a plane of the retarder; or
a retarder having a slow axis orientation with a component perpendicular to a plane of the retarder, and at least one component in the plane of the retarder.

7. A display device according to any one of the claims 4 to 6, wherein the switchable liquid crystal retarder comprises at least one homeotropic alignment layer.

8. A display device according to any of claims 4 to 7, further comprising at least one further additional polariser and at least one further correcting passive retarder and at least one further switchable liquid crystal retarder arranged between the at least one further additional polariser and the input polariser in the case that the further additional polariser is arranged on the input side of the input polariser or between the further additional polariser and the output polariser in the case that the further additional polariser is arranged on the output side of the input polariser.

## Patentansprüche

1. Anzeigevorrichtung, umfassend:
einen lichtdurchlässigen räumlichen Lichtmodulator (48);
eine Hintergrundbeleuchtung, die so vorgesehen ist, dass sie Licht ausgibt, umfassend:
zwei Vielzahlen von Lichtquellen (815a, 815b); und
zwei Lichtwellenleiter (801a, 801b), die an der Rückseite des lichtdurchlässigen räumlichen Lichtmodulators (48) angeordnet sind,
wobei jeder Lichtwellenleiter (801a, 801b) ein Eingangsende aufweist, das sich in seitlicher Richtung entlang einer Seite des Lichtwellenleiters (801a, 801b) erstreckt, wobei die Eingangsenden der beiden Lichtwellenleiter (801a, 801b) sich auf gegenüberliegenden Seiten der Anzeigevorrichtung befinden, wobei eine der beiden Vielzahlen von Lichtquellen entlang des Eingangsendes eines ersten der beiden Lichtwellenleiter (801a, 801b) angeordnet ist und so vorgesehen ist, dass sie Eingangslicht in den ersten Lichtwellenleiter (801a) einspeist, und die andere der Vielzahl von Lichtquellen entlang des Eingangsendes des zweiten der beiden Lichtwellenleiter (801a, 801b) angeordnet und so vorgesehen ist, dass sie Eingangslicht in den zweiten Lichtwellenleiter (801b) einspeist, und
wobei jeder Lichtwellenleiter (801a, 801b) ferner einander gegenüberliegende erste und zweite Führungsflächen (806a, 808a; 806a, 806b) umfasst, die sich vom Eingangsende aus über den Lichtwellenleiter (801a, 801b) erstrecken, um am Eingangsende eingespeistes Licht entlang des Lichtwellenleiters zu leiten, wobei jeder Lichtwellenleiter so vorgesehen ist, dass er durch den Lichtwellenleiter (801a, 801b) geleitetes Eingangslicht extrahiert, so dass es in einer streifenden Richtung durch die erste Führungsfläche austritt; und
eine prismatische Eingangsschicht (804) zwischen dem lichtdurchlässigen räumlichen Lichtmodulator und den beiden Lichtwellenleitern (801a, 801b), wobei die prismatische Eingangsschicht (804) so vorgesehen ist, dass sie das aus den beiden Lichtwellenleitern (801a, 801b) extrahierte Licht empfängt und das empfangene Licht so lenkt, dass es auf den räumlichen Lichtmodulator (48) auftrifft,
wobei:
die Hintergrundbeleuchtung so vorgesehen ist, dass das Licht aus den jeweiligen Lichtwellenleitern (801a, 801b) so gelenkt wird, dass Betrachtungsfenster (821, 823) mit unterschiedlichen Breiten bereitgestellt werden;
der lichtdurchlässige räumliche Lichtmodulator (48) einen Eingangspolarisator (210) und einen Ausgangspolarisator (218) umfasst;
der Eingangspolarisator (210) auf einer Eingangsseite des räumlichen Lichtmodulators (48) vorgesehen ist, wobei sich die Eingangsseite zwischen der Hintergrundbeleuchtung und dem räumlichen Lichtmodulator (48) befindet;
der Ausgangspolarisator (218) auf einer Ausgangsseite des räumlichen Lichtmodulators (48) vorgesehen ist;
ein zusätzlicher Polarisator (500) an einer Eingangsseite des Eingangspolarisators (210) zwischen dem Eingangspolarisator (210) und der Hintergrundbeleuchtung oder an der Ausgangsseite des Ausgangspolarisators (218) vorgesehen ist;
mindestens ein Retarder (560) zwischen dem zusätzlichen Polarisator und dem Eingangspolarisator (210) vorgesehen ist, falls der zusätzliche Polarisator an der Eingangsseite des Eingangspolarisators (210) vorgesehen ist, oder zwischen dem zusätzlichen Polarisator und dem Ausgangspolarisator (218) vorgesehen, falls der zusätzliche Polarisator an der Ausgangsseite des Ausgangspolarisators (218) vorgesehen ist;
die prismatische Eingangsschicht (804) erste Eingangsfacetten (803) und zweite Eingangsfacetten (805) umfasst, wobei das aus dem ersten Lichtwellenleiter (801a) extrahierte Licht von den ersten Eingangsfacetten (803) empfangen wird und das aus dem zweiten Lichtwellenleiter (801b) extrahierte Licht von den zweiten Eingangsfacetten (805) empfangen wird;
das Licht aus dem ersten Lichtwellenleiter (801a), das von den ersten Eingangsfacetten (803) empfangen wird, durch totale interne Reflexion an den zweiten Eingangsfacetten (805) so geleitet wird, dass es auf den räumlichen Lichtmodulator in Richtungen, die einen engen Kegelwinkel aufweisen, auftrifft, so dass es ein erstes Betrachtungsfenster (821) mit einer Breite bereitgestellt wird; und
das Licht aus dem zweiten Lichtwellenleiter (801b), das von den zweiten Eingangsfacetten (805) empfangen wird, durch totale interne Reflexion an den ersten Eingangsfacetten (803) so geleitet wird, dass es in Richtungen, die einen breiten Kegelwinkel aufweisen, auf den räumlichen Lichtmodulator auftrifft, so dass ein zweites Betrachtungsfenster (823) mit größerer Breite als das erste Betrachtungsfenster (821) bereitgestellt wird.

2. Anzeigevorrichtung nach Anspruch 1, wobei die Hintergrundbeleuchtung ferner einen hinteren Streureflektor (812) umfasst, der hinter den beiden Lichtwellenleitern (801a, 801b) vorgesehen ist.

3. Anzeigevorrichtung nach Anspruch 1 oder 2, wobei die Hintergrundbeleuchtung ferner eine zwischen den beiden Lichtwellenleitern (815a, 815b) vorgesehene mittlere Diffusorschicht (810) umfasst.

4. Anzeigevorrichtung nach einem der vorstehenden Ansprüche, wobei der mindestens eine Retarder mindestens einen schaltbaren Flüssigkristall-Retarder und mindestens einen korrigierenden passiven Retarder umfasst.

5. Anzeigevorrichtung nach Anspruch 4, wobei, wenn die optische Dicke als Produkt aus Doppelbrechung und Dicke definiert wird, der Flüssigkristall-Retarder eine optische Dicke zwischen 500 nm und 1000 nm aufweist und/oder der mindestens eine korrigierende passive Retarder eine optische Dicke zwischen 400 nm und 800 nm aufweist.

6. Anzeigevorrichtung nach Anspruch 5, wobei der mindestens eine korrigierende passive Retarder Folgendes umfasst:
ein Paar von Retardern, deren langsame Achsen in einer Ebene der Retarder gekreuzt sind;
einen Retarder mit einer langsamen Achse senkrecht zu einer Ebene des Retarders; oder
einen Retarder mit einer Ausrichtung der langsamen Achse mit einer Komponente senkrecht zu einer Ebene des Retarders und mindestens einer Komponente in der Ebene des Retarders.

7. Anzeigevorrichtung nach einem der Ansprüche 4 bis 6, wobei der schaltbare Flüssigkristall-Retarder mindestens eine homeotrope Ausrichtungsschicht umfasst.

8. Anzeigevorrichtung nach einem der Ansprüche 4 bis 7, ferner umfassend mindestens einen weiteren zusätzlichen Polarisator und mindestens einen weiteren korrigierenden passiven Retarder sowie mindestens einen weiteren schaltbaren Flüssigkristall-Retarder, der zwischen dem mindestens einen weiteren zusätzlichen Polarisator und dem Eingangspolarisator vorgesehen ist, falls der weitere zusätzliche Polarisator an der Eingangsseite des Eingangspolarisators vorgesehen ist, oder zwischen dem weiteren zusätzlichen Polarisator und dem Ausgangspolarisator vorgesehen ist, falls der weitere zusätzliche Polarisator an der Ausgangsseite des Eingangspolarisators vorgesehen ist.

## Revendications

1. Dispositif d'affichage, comprenant :
un modulateur spatial de lumière transmissif (48) ;
un rétroéclairage agencé pour produire de la lumière en sortie comprenant :
deux pluralités de sources lumineuses (815a, 815b) ; et
deux guides d'ondes (801a, 801b) disposés sur l'arrière du modulateur spatial de lumière transmissif (48),
chaque guide d'ondes (801a, 801b) comprenant une extrémité d'entrée s'étendant dans une direction latérale le long d'un côté du guide d'ondes (801a, 801b), dans lequel les extrémités d'entrée des deux guides d'ondes (801a, 801b) sont sur des côtés opposés du dispositif d'affichage, une des deux pluralités de sources lumineuses est disposée le long de l'extrémité d'entrée d'un premier des deux guides d'ondes (801a, 801b) et est agencée pour entrer de la lumière d'entrée dans le premier guide d'ondes (801a), et l'autre des deux pluralités de sources lumineuses est disposée le long de l'extrémité d'entrée du second des deux guides d'ondes (801a, 801b) et est agencée pour entrer de la lumière d'entrée dans le second guide d'ondes (801b), et
chaque guide d'ondes (801a, 801b) comprenant en outre des première et seconds surfaces de guide opposées (806a, 808a ; 806a, 806b) s'étendant de part et d'autre du guide d'ondes (801a, 801b) à partir de l'extrémité d'entrée pour guider de la lumière entrée au niveau de l'extrémité d'entrée le long du guide d'ondes, chaque guide d'ondes étant agencé pour extraire de la lumière d'entrée guidée à travers le guide d'ondes (801a, 801b) pour sortir à travers la première surface de guide dans une direction rasante ; et
une couche d'entrée prismatique (804) entre le modulateur spatial de lumière transmissif et les deux guides d'ondes (801a, 801b), la couche d'entrée prismatique (804) étant agencée pour recevoir la lumière extraite des deux guides d'ondes (801a, 801b) et pour diriger la lumière reçue pour être incidente sur le modulateur spatial de lumière (48),
dans lequel :
le rétroéclairage est agencé de telle sorte que la lumière provenant des guides d'ondes respectifs (801a, 801b) est dirigée pour fournir des fenêtres de visualisation (821, 823) ayant des largeurs différentes ;
le modulateur spatial de lumière transmissif (48) comprend un polarisateur d'entrée (210) et un polarisateur de sortie (218) ;
le polarisateur d'entrée (210) est agencé sur un côté d'entrée du modulateur spatial de lumière (48), le côté d'entrée étant situé entre le rétroéclairage et le modulateur spatial de lumière (48) ;
le polarisateur de sortie (218) est agencé sur un côté de sortie du modulateur spatial de lumière (48) ;
un polarisateur supplémentaire (500) agencé sur un côté d'entrée du polarisateur d'entrée (210) entre le polarisateur d'entrée (210) et le rétroéclairage ou sur le côté de sortie du polarisateur de sortie (218) ;
au moins un retardateur (560) agencé entre le polarisateur supplémentaire et le polarisateur d'entrée (210) au cas où le polarisateur supplémentaire serait agencé sur le côté d'entrée du polarisateur d'entrée (210), ou entre le polarisateur supplémentaire et le polarisateur de sortie (218) au cas où le polarisateur supplémentaire serait agencé sur le côté de sortie du polarisateur de sortie (218) ;
la couche d'entrée prismatique (804) comprend des premières facettes d'entrée (803) et des secondes facettes d'entrée (805), dans lequel la lumière extraite du premier guide d'ondes (801a) est reçue par les premières facettes d'entrée (803) et la lumière extraite d'un le second guide d'ondes (801b) est reçue par les secondes facettes d'entrée (805) ;
la lumière provenant du premier guide d'ondes (801a) qui est reçue par les premières facettes d'entrée (803) est dirigée par réflexion interne totale au niveaux des secondes facettes d'entrée (805) pour être incidente sur le modulateur spatial de lumière dans des directions qui ont un angle de cône étroit de telle sorte qu'elle fournit une première fenêtre de visualisation (821) avec une largeur ; et
la lumière provenant du second guide d'ondes (801b) qui est reçue par les secondes facettes d'entrée (805) est dirigée par réflexion interne totale au niveau de premières facettes d'entrée (803) pour être incidente sur le modulateur spatial de lumière dans des directions qui ont un angle de cône large de telle sorte qu'elle fournit une seconde fenêtre de visualisation (823) de largeur supérieure à celle de la première fenêtre de visualisation (821).

2. Dispositif d'affichage selon la revendication 1, dans lequel le rétroéclairage comprend en outre un réflecteur de dispersion arrière (812) agencé derrière les deux guides d'ondes (801a, 801b).

3. Dispositif d'affichage selon la revendication 1 ou 2, dans lequel le rétroéclairage comprend en outre une couche diffuseuse intermédiaire (810) agencée entre les deux guides d'ondes (815a, 815b).

4. Dispositif d'affichage selon l'une quelconque des revendications précédentes, dans lequel l'au moins un retardateur comprend au moins un retardateur à cristaux liquides commutable et au moins un retardateur passif correcteur.

5. Dispositif d'affichage selon la revendication 4, dans lequel, en définissant l'épaisseur optique comme étant le produit de biréfringence et d'épaisseur, le retardateur à cristaux liquides a une épaisseur optique entre 500 nm et 1000 nm, et/ou l'au moins un retardateur passif correcteur a une épaisseur optique entre 400 nm et 800 nm.

6. Dispositif d'affichage selon la revendication 5, dans lequel l'au moins un retardateur passif correcteur comprend :
une paire de retardateurs qui ont des axes lents dans un plan des retardateurs qui sont croisés ;
un retardateur ayant un axe lent perpendiculaire à un plan du retardateur ; ou
un retardateur ayant une orientation d'axe lent avec une composante perpendiculaire à un plan du retardateur, et au moins une composante dans le plan du retardateur.

7. Dispositif d'affichage selon l'une quelconque des revendications 4 à 6, dans lequel le retardateur à cristaux liquides commutable comprend au moins une couche d'alignement homéotrope.

8. Dispositif d'affichage selon quelconques des revendications 4 à 7, comprenant en outre au moins un autre polarisateur supplémentaire et au moins un autre retardateur passif correcteur et au moins un autre retardateur à cristaux liquides commutable agencé entre l'au moins un autre polarisateur supplémentaire et le polarisateur d'entrée au cas où l'autre polarisateur supplémentaire serait agencé sur le côté d'entrée du polarisateur d'entrée ou entre l'autre polarisateur supplémentaire et le polarisateur de sortie au cas où l'autre polarisateur supplémentaire serait agencé sur le côté de sortie du polarisateur d'entrée.
